(19) Europäisches Patentamt
European Patent Office
Office européen des brevets

(11) EP 4 585 620 A1

(12) **EUROPEAN PATENT APPLICATION**
published in accordance with Art. 153(4) EPC

(43) Date of publication:
**16.07.2025 Bulletin 2025/29**

(21) Application number: **23863010.7**

(22) Date of filing: **29.08.2023**

(51) International Patent Classification (IPC):
***C08F 2/50*** *(2006.01)* ***C08F 2/44*** *(2006.01)*
***C08F 265/00*** *(2006.01)* ***C08F 289/00*** *(2006.01)*
***C08L 51/00*** *(2006.01)* ***G02B 1/04*** *(2006.01)*

(52) Cooperative Patent Classification (CPC):
**C08F 2/44; C08F 2/50; C08F 265/00; C08F 289/00; C08L 51/00; G02B 1/04**

(86) International application number:
**PCT/JP2023/031066**

(87) International publication number:
**WO 2024/053471 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.09.2022 JP 2022143581**

(71) Applicant: **FUJIFILM Corporation**
**Tokyo 106-8620 (JP)**

(72) Inventor: **ARAYAMA, Kyohei**
**Haibara-gun, Shizuoka 421-0396 (JP)**

(74) Representative: **HGF**
**HGF Limited**
**1 City Walk**
**Leeds LS11 9DX (GB)**

(54) **PHOTOCURABLE COMPOSITION, FILM, LIGHT SENSOR, AND METHOD FOR PRODUCING LIGHT SENSOR**

(57) There is provided a photocurable composition including particles having a refractive index of 1.8 or more and an average primary particle diameter of 200 nm or less, a resin, a polymerizable monomer having a (meth) acryloyl group, a photopolymerization initiator, a sensitizer, and a solvent, in which the resin includes a resin A including a repeating unit represented by Formula (a1) and a repeating unit represented by Formula (a2), and the sensitizer includes at least one compound S selected from a compound represented by Formula (s1) or a compound represented by Formula (s2), A film formed of a photocurable composition, an optical sensor, and a method for manufacturing an optical sensor.

EP 4 585 620 A1

## Description

## BACKGROUND OF THE INVENTION

1. Field of the Invention

The present invention relates to a photocurable composition containing particles having a high refractive index, a film and an optical sensor formed of the photocurable composition, and a method for manufacturing an optical sensor.

2. Description of the Related Art

Titanium oxide is a particle having a high refractive index. Attempts to use such particles having a high refractive index for a light scattering film or the like have been studied.

JP2016-161859A discloses an invention of a light scattering sheet including a plurality of polymers having different refractive indexes from each other and including a light-scattering layer having a co-continuous phase structure in at least a part of a region, in which an incidence ray is isotropically transmitted and scattered, a scattering angle showing the maximal value of intensity of scattered light is 2° to 40°, and a total light transmittance is 70% to 100%. It is said that any continuous phase forming the co-continuous phase structure may include high refraction fine particles.

## SUMMARY OF THE INVENTION

In recent years, there has been an increasing demand for a film which appropriately blocks visible light and has high light scattering properties. In order to improve the light scattering properties of the film, a method of using particles having a large particle size and a high refractive index has been known. However, particles having a high refractive index generally tend to have a high specific gravity. In a case where such particles having a large specific gravity are contained and used in a composition including a solvent, the particles may settle during storage of the composition. Therefore, with a known composition in the related art, it has been difficult to achieve both storage stability and light scattering properties of the obtained film at a high level.

In addition, in a case where a pattern is formed by a photolithography method using a photocurable composition including particles having a high refractive index to form a film formed in a patterned shape, exposure light is likely to be scattered by the particles, and curing reaction during exposure tends to be difficult to reach a deep portion of the film. In a case where the curing reaction in the deep portion of the film is insufficient, adhesiveness to a support is likely to be insufficient for the obtained film.

Therefore, an object of the present invention is to provide a photocurable composition capable of forming a film having good storage stability and excellent adhesiveness and light scattering properties, a film and an optical sensor formed of the photocurable composition, and a method for manufacturing an optical sensor.

As a result of a thorough investigation under the above-described circumstances, the present inventors have found that the object of the present invention can be achieved by using a photocurable composition described below, thereby completing the present invention. The present invention provides the following.

<1> A photocurable composition comprising:

particles having a refractive index of 1.8 or more and an average primary particle diameter of 200 nm or less;
a resin;
a polymerizable monomer having a (meth)acryloyl group;
a photopolymerization initiator;
a sensitizer; and
a solvent,
in which the resin includes a resin A including a repeating unit represented by Formula (a1) and a repeating unit represented by Formula (a2), and
the sensitizer includes at least one compound S selected from a compound represented by Formula (s1) or a compound represented by Formula (s2),

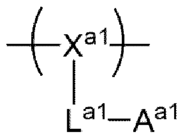
(a1)

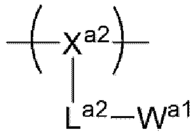
(a2)

in Formula (a1), $X^{a1}$ represents a trivalent linking group, $L^{a1}$ represents a single bond or a divalent linking group, and $A^{a1}$ represents an acid group,
in Formula (a2), $X^{a2}$ represents a trivalent linking group, $L^{a2}$ represents a single bond or a divalent linking group, and $W^{a1}$ represents a graft chain including a repeating unit of a polyester structure or a polyether structure,

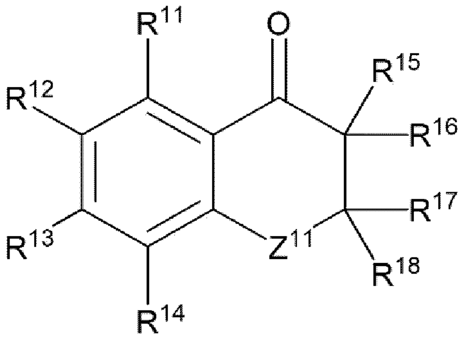
(s1)

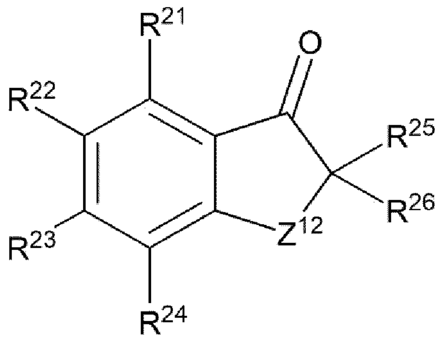
(s2)

in Formula (s1), $Z^{11}$ represents O, S, or $NR^{Z1}$, $R^{Z1}$ represents a hydrogen atom, an alkyl group, or an acyl group, $R^{11}$ to $R^{18}$ each independently represent a hydrogen atom or a substituent, two adjacent to each other among $R^{11}$ to $R^{14}$ may be linked to each other to form an aliphatic ring or an aromatic ring, and $R^{15}$ or $R^{16}$ and $R^{17}$ or $R^{18}$ may be linked to each other to form an aliphatic ring,
in Formula (s2), $Z^{12}$ represents O, S, or $NR^{Z2}$, $R^{Z2}$ represents a hydrogen atom, an alkyl group, or an acyl group, $R^{21}$ to $R^{26}$ each independently represent a hydrogen atom or a substituent, and two adjacent to each other among $R^{21}$ to $R^{24}$ may be linked to each other to form an aliphatic ring or an aromatic ring.

<2> The photocurable composition according to <1>,
in which the particles are inorganic particles.
<3> The photocurable composition according to <1> or <2>,
in which the resin A includes at least one selected from

a resin A1 including a repeating unit represented by Formula (a1-1) and a repeating unit represented by Formula (a2-1), or
a resin A2 including a repeating unit represented by Formula (a1-2) and a repeating unit represented by Formula (a2-2),

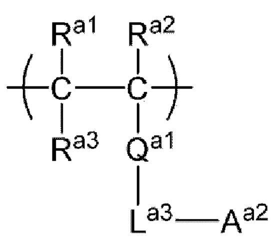
(a1-1)

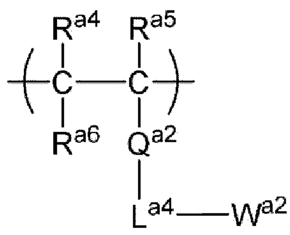
(a2-1)

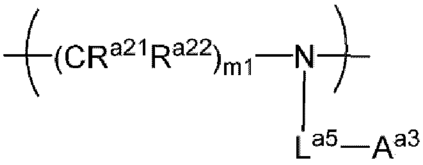

(a1-2)

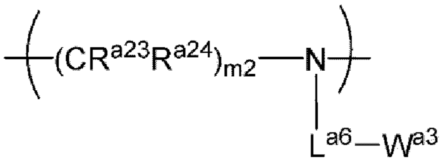

(a2-2)

in Formula (a1-1), $R^{a1}$ to $R^{a3}$ each independently represent a hydrogen atom or an alkyl group, $Q^{a1}$ represents -CO-, -COO-, -OCO-, -CONH-, or a phenylene group, $L^{a3}$ represents a single bond or a divalent linking group, and $A^{a2}$ represents an acid group,
in Formula (a2-1), $R^{a4}$ to $R^{a6}$ each independently represent a hydrogen atom or an alkyl group, $Q^{a2}$ represents -CO-, -COO-, -OCO-, -CONH-, or a phenylene group, $L^{a4}$ represents a single bond or a divalent linking group, and $W^{a2}$ represents a graft chain including a repeating unit of a polyester structure or a polyether structure,
in Formula (a1-2), $R^{a21}$ and $R^{a22}$ each independently represent a hydrogen atom or an alkyl group, m1 represents an integer of 1 to 5, $L^{a5}$ represents a single bond or a divalent linking group, and $A^{a3}$ represents an acid group,
in Formula (a2-2), $R^{a23}$ and $R^{a24}$ each independently represent a hydrogen atom or an alkyl group, m2 represents an integer of 1 to 5, $L^{a6}$ represents a single bond or a divalent linking group, and $W^{a3}$ represents a graft chain including a repeating unit of a polyester structure or a polyether structure.

<4> The photocurable composition according to any one of <1> to <3>,
in which the photopolymerization initiator includes at least one selected from an α-aminoketone compound or an acylphosphine compound.
<5> The photocurable composition according to any one of <1> to <4>,
in which the resin includes a resin B that is a resin different from the resin A and has a repeating unit derived from a (meth)acrylate compound.
<6> The photocurable composition according to <5>,
in which the resin B is a resin represented by Formula (b1),

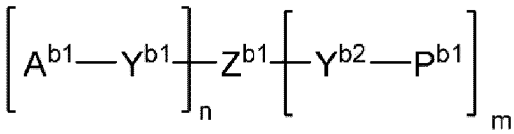

(b1)

in Formula (b1), $Z^{b1}$ represents an (m+n)-valent linking group, $Y^{b1}$ and $Y^{b2}$ each independently represent a single bond or a linking group, $A^{b1}$ represents a group including a functional group selected from a heterocyclic group, an acid group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group, $P^{b1}$ represents a polymer chain including a repeating unit derived from a (meth)acrylate compound, n represents 1 to 20, m represents 2 to 20, m+n represents 3 to 21, n number of $Y^{b1}$'s and n number of $A^{b1}$'s may be the same or different from each other, and m number of $Y^{b2}$'s and m number of $P^{b1}$'s may be the same or different from each other.
<7> The photocurable composition according to <5> or <6>,
in which the resin A is a binder, and the resin B is a dispersant of the particles.
<8> The photocurable composition according to any one of <1> to <7>,
in which, in a case where a film having a thickness of 4 μm is formed by heating the photocurable composition at 200°C for 5 minutes, a phase-separated structure of a first phase containing the particles and a second phase having a lower content of the particles than a content of the particles of the first phase is formed in the film.
<9> The photocurable composition according to <8>,
in which the phase-separated structure is a sea-island structure or a co-continuous phase structure.
<10> The photocurable composition according to any one of <1> to <9>,
in which, in a case where a film having a thickness of 4 μm is formed by heating the photocurable composition at 200°C for 5 minutes, a maximum value of a transmittance of the film to light in a wavelength range of 400 to 1000 nm is 80% or less.

<11> A film formed of the photocurable composition according to any one of <1> to <10>.
<12> An optical sensor comprising:
the film according to <11>.
<13> A method for manufacturing an optical sensor, comprising:

a step of forming a composition layer by applying the photocurable composition according to any one of <1> to <10> onto a support; and
a step of exposing the composition layer.

According to the present invention, it is possible to provide a photocurable composition capable of forming a film having good storage stability and excellent adhesiveness and light scattering properties, a film and an optical sensor formed of the photocurable composition, and a method for manufacturing an optical sensor.

## BRIEF DESCRIPTION OF THE DRAWINGS

Fig. 1 is a schematic diagram showing an embodiment of an optical sensor according to the present invention.
Fig. 2 is a schematic diagram showing another embodiment of the optical sensor according to the present invention.

## DESCRIPTION OF THE PREFERRED EMBODIMENTS

Hereinafter, the details of the present invention will be described.
The following description regarding configuration requirements has been made based on a representative embodiment of the present invention. However, the present invention is not limited to the embodiment.
In the present specification, numerical ranges represented by "to" include numerical values before and after "to" as lower limit values and upper limit values.
In the present specification, unless specified as a substituted group or as an unsubstituted group, a group (atomic group) denotes not only a group (atomic group) having no substituent but also a group (atomic group) having a substituent. For example, "alkyl group" denotes not only an alkyl group having no substituent (unsubstituted alkyl group) but also an alkyl group having a substituent (substituted alkyl group).
In the present specification, "(meth)acrylate" represents acrylate or methacrylate, "(meth)acryl" represents acryl and methacryl, "(meth)allyl" represents allyl and methallyl, and "(meth)acryloyl" represents acryloyl and methacryloyl.
In the present specification, in a chemical formula, Me represents a methyl group, Et represents an ethyl group, Pr represents a propyl group, Bu represents a butyl group, and Ph represents a phenyl group.
In the present specification, unless specified otherwise, "exposure" denotes not only exposure using light but also drawing using a corpuscular beam such as an electron beam or an ion beam. Examples of the light used for exposure include an actinic ray or radiation, for example, a bright light spectrum of a mercury lamp, a far ultraviolet ray represented by an excimer laser, an extreme ultraviolet ray (EUV light), an X-ray, or an electron beam.
In the present specification, a weight-average molecular weight and a number-average molecular weight are defined as values in terms of polystyrene measured by gel permeation chromatography (GPC). In the present specification, the weight-average molecular weight (Mw) and the number-average molecular weight (Mn) can be obtained, for example, by using HLC-8220GPC (manufactured by Tosoh Corporation), using a column in which TOSOH TSK gel Super HZM-H, TOSOH TSK gel Super HZ4000, and TOSOH TSK gel Super HZ2000 are linked to each other, and using tetrahydrofuran as a developing solvent.
In the present specification, a value of refractive index is a value of refractive index with refractive index to light at a wavelength of 589 nm at 23°C, unless otherwise specified.

<Photocurable composition>

The photocurable composition according to the embodiment of the present invention includes

particles having a refractive index of 1.8 or more and an average primary particle diameter of 200 nm or less,
a resin,
a polymerizable monomer having a (meth)acryloyl group,
a photopolymerization initiator,
a sensitizer, and
a solvent,

in which the resin includes a resin A including a repeating unit represented by Formula (a1) and a repeating unit represented by Formula (a2), and

the sensitizer includes at least one compound S selected from a compound represented by Formula (s1) or a compound represented by Formula (s2).

Hereinafter, the particles having a refractive index of 1.8 or more and an average primary particle diameter of 200 nm or less are also referred to as specific particles.

The photocurable composition according to the embodiment of the present invention has excellent storage stability. Many particles having a refractive index of 1.8 or more generally have a large specific gravity, but in the photocurable composition according to the embodiment of the present invention, since the particles having a relatively small particle diameter with an average primary particle diameter of 200 nm or less are used as the particles having a refractive index of 1.8 or more, sedimentation of the particles in the photocurable composition including a solvent can be suppressed, and as a result, excellent storage stability can be obtained.

In addition, the film obtained from the photocurable composition according to the embodiment of the present invention has good light scattering properties and excellent adhesiveness to the support. The reason for obtaining such an effect is presumed as follows. The photocurable composition according to the embodiment of the present invention contains the polymerizable monomer having a (meth)acryloyl group, the resin A, and the compound S, but since the polymerizable monomer having a (meth)acryloyl group and the resin A have low compatibility, it is presumed that, in a case where the photocurable composition according to the embodiment of the present invention is applied onto a support and irradiated with light, a phase-separated structure between a phase in which the polymerizable monomer having a (meth) acryloyl group is polymerized and a phase of the resin A is formed. In addition, it is presumed that the compound S has a high affinity for a (meth)acryloyl group and is likely to be unevenly distributed in a phase in which a polymerizable monomer having a (meth)acryloyl group is polymerized. Therefore, it is presumed that the polymerizable monomer in the late stage of polymerization can be further improved, and the phase-separated structure can be more easily formed. Therefore, it is presumed that the film is formed of the first phase containing the specific particles and the second phase having a lower content of the specific particles than that of the first phase. It is considered that the phase-separated structure causes a bias in the position in which the specific particles are present in the film, and the first phase, which is a region having a large refractive index, and the second phase, which is a region having a small refractive index, are mixed in the film. Since light scattering occurs between these two phases, it is presumed that the film obtained from the photocurable composition according to the embodiment of the present invention has excellent light scattering properties.

In addition, as described above, since the compound S has a high affinity for a (meth)acryloyl group and is likely to be unevenly distributed in a phase in which a polymerizable monomer having a (meth)acryloyl group is polymerized, it is presumed that the polymerizability of the polymerizable monomer in the late stage of polymerization is further enhanced, and the curing of the film can be further promoted. Therefore, it is presumed that the film obtained from the photocurable composition according to the embodiment of the present invention has excellent adhesiveness to the support.

it is preferable that in a case where a film having a thickness of 4 μm is formed by heating the photocurable composition according to the embodiment of the present invention at 200°C for 5 minutes, a phase-separated structure of a first phase including the specific particles and a second phase having a lower content of the specific particles than that of the first phase is formed in the film. By forming such a phase-separated structure in the film, the light scattering properties of the film can be improved. Further, angle dependence of the scattered light can be reduced.

A base material of the first phase and the second phase is the film-forming component such as a resin or a cured substance derived from the film-forming component. In addition, mere aggregates of the above-described specific particles are one form of the particles, and the mere aggregates of the above-described specific particles themselves are not the first phase. The above-described first phase is a phase in which the above-described specific particles are present in the film-forming component or the cured substance derived from the film-forming component. In addition, it is sufficient that the second phase has a lower content of the above-described specific particles than the first phase, and the second phase may not substantially contain the above-described specific particles. From the reason of easily obtaining more excellent light scattering properties, the content of the specific particles in the second phase is preferably 30% by mass or less, more preferably 20% by mass or less, still more preferably 10% by mass or less, and even more preferably 5% by mass or less with respect to the total content of the particles included in the photocurable composition, and it is particularly preferable that the second phase does not substantially include the specific particles. Here, the second phase not substantially including the specific particles means that the content of the specific particles is 1% by mass or less, preferably 0.5% by mass or less, with respect to the total content of the specific particles included in the photocurable composition, and it is particularly preferable that the second phase does not include the specific particles.

The formation of the phase-separated structure between the first phase and the second phase in the film can be observed using a scanning electron microscope (SEM), a transmission electron microscope (TEM), or an optical microscope. For example, the photocurable composition is applied to a support such as a glass substrate and heated at 200°C for 5 minutes to form a film having a thickness of 4 μm, and then a cross section of the obtained film in a thickness

direction is observed using a scanning electron microscope (SEM), a transmission electron microscope (TEM), or an optical microscope. As a result, it is possible to investigate whether or not the phase-separated structure between the first phase and the second phase is formed in the film.

The phase-separated structure in the above-described film preferably has a phase interface isotropically present in the film, and for example, more preferably a sea-island structure or a co-continuous phase structure. By forming these phase-separated structures, light can be effectively scattered between the first phase and the second phase, and particularly excellent light scattering properties can be easily obtained. The sea-island structure is a structure formed by a sea region which is a continuous region and an island region which is a discontinuous region. In the sea-island structure, the second phase may form the sea and the first phase may form the island, or the first phase may form the sea and the second phase may form the island. The case where the first phase forms the sea and the second phase forms the island is preferable from the viewpoint of transmittance. The case where the first phase forms the island and the second phase forms the sea is preferable from the viewpoint of angle dependence. In addition, the co-continuous phase structure is a network structure in which the first phase and the second phase each form a continuous phase structure intrusive to each other.

In a case where the photocurable composition according to the embodiment of the present invention is heated at 200°C for 5 minutes to form a film having a thickness of 4 μm, from the viewpoint of reducing wavelength dependence of light scattering, the maximum value of transmittance of the film with respect to light in a wavelength range of 400 to 700 nm is preferably 80% or less, more preferably 70% or less, still more preferably 60% or less, and particularly preferably 50% or less. The lower limit of the above-described maximum value of the light transmittance is preferably 10% or more, more preferably 15% or more, and still more preferably 20% or more.

In addition, a maximum value of the light transmittance of the above-described film at 400 to 1000 nm is preferably 80% or less, more preferably 70% or less, still more preferably 60% or less, and particularly preferably 50% or less. The lower limit of the above-described maximum value of the light transmittance is preferably 10% or more, more preferably 15% or more, and still more preferably 20% or more.

The average value of a difference in refractive index between the phases in the above-described film is preferably 0.1 or more, more preferably 0.2 or more, still more preferably 0.3 or more, and particularly preferably 0.4 or more.

The haze of the above-described film based on JIS K 7136 is preferably 30% to 100%. The upper limit is preferably 99% or less, more preferably 95% or less, and still more preferably 90% or less. The lower limit is preferably 35% or more, more preferably 40% or more, and still more preferably 50% or more.

The formation of the film having such spectral characteristics can be achieved by appropriately adjusting a shape of the phase-separated structure, a refractive index of the particles, an abundance of the particles in the film, a degree of uneven distribution of the particles in the film, and the like. In this case, it is better to provide a higher refractive index of the particles, abundance of the particles, and degree of uneven distribution of the particles.

A concentration of solid contents of the photocurable composition according to the embodiment of the present invention is preferably 5% to 90% by mass. The upper limit is preferably 85% by mass or less, more preferably 80% by mass or less, still more preferably 75% by mass or less, even more preferably 70% by mass or less, and even still more preferably 60% by mass or less. The lower limit is preferably 10% by mass or more, more preferably 15% by mass or more, and still more preferably 20% by mass or more.

Hereinafter, the respective components used in the photocurable composition of the embodiment of the present invention will be described.

<<Specific particles>>

The photocurable composition according to the embodiment of the present invention includes particles (hereinafter, also referred to as specific particles) having a refractive index of 1.8 or more and an average primary particle diameter of 200 nm or less.

The average primary particle diameter of the specific particles is 200 nm or less, and is preferably 180 mn or less, more preferably 150 mn or less, and still more preferably 100 mn or less from the viewpoint of the storage stability of the photocurable composition. In addition, from the viewpoint of light scattering properties of the obtained film, the average primary particle diameter of the specific particles is preferably 10 nm or more, more preferably 20 nm or more, still more preferably 30 nm or more, even more preferably 40 nm or more, and particularly preferably 50 nm or more.

In the present specification, the average primary particle diameter of particles is a value measured by the following method. That is, the primary particle diameter of the particles can be obtained by observing the particles with a transmission electron microscope (TEM) and observing a portion (primary particle) where the particles do not aggregate. A particle size distribution of the primary particles can be obtained by photographing a transmission electron micrograph of the primary particles using a transmission electron microscope and measuring a particle size distribution with an image processing device using the micrograph. In the present specification, the average primary particle diameter of the particles refers to the number average particle diameter calculated from the particle size distribution of the primary particles. In the

present specification, an electron microscope (H-7000, manufactured by Hitachi, Ltd.) is used as the transmission electron microscope, and a LUZEX AP (manufactured by Nireco Corporation) is used as the image processing device.

For the specific particles, a D50 particle diameter at which a cumulative volume in a particle size distribution of a particle diameter is 50% is preferably 330 nm or less, more preferably 240 nm or less, and still more preferably 160 nm or less. The lower limit of the D50 particle diameter is preferably 20 nm or more, more preferably 50 nm or more, and still more preferably 80 nm or more.

For the specific particles, a D90 particle diameter at which a cumulative volume in a particle size distribution of a particle diameter is 90% is preferably 580 nm or less, more preferably 430 nm or less, and still more preferably 290 nm or less. The lower limit of the D90 particle diameter is preferably 30 nm or more, more preferably 90 nm or more, and still more preferably 140 nm or more.

In the present specification, the particle size distribution of the particle diameter of the specific particles is a value measured by a dynamic light scattering method. Examples of the measuring device include MICROTRACUPA 150 manufactured by NIKKISO Co., Ltd.

The refractive index of the specific particles is 1.8 or more, and is preferably 2.0 or more, more preferably 2.2 or more, and still more preferably 2.4 or more from the viewpoint of light scattering properties of the obtained film. The upper limit of the refractive index of the specific particles is not particularly limited, but can be set to 5.0 or less or 4.0 or less.

The refractive index of particles is a value measured by the following method. First, a dispersion liquid is prepared using the particles, a resin (dispersant) having a known refractive index, and propylene glycol monomethyl ether acetate. Next, the prepared dispersion liquid and a resin having a known refractive index are mixed with each other to prepare coating liquids in which the concentrations of the particles are 10% by mass, 20% by mass, 30% by mass, and 40% by mass with respect to the total solid content of the coating liquids. Using each of the coating liquids, a film having a thickness of 300 nm is formed on a silicon wafer, and the refractive index of the obtained film is measured by ellipsometry (LAMBDA ACE RE-3300, manufactured by SCREEN Holdings Co., Ltd.). Next, the refractive index corresponding to the concentration of the particles is plotted on a graph to derive the refractive index of the particles.

The specific gravity of the specific particles is preferably 1 to 7 $g/cm^3$. The upper limit is preferably 6 $g/cm^3$ or less and more preferably 5 $g/cm^3$ or less. The lower limit of the specific gravity is not particularly limited, but may be 1.5 $g/cm^3$ or more or 2 $g/cm^3$ or more.

In the present specification, the specific gravity of particles is a value measured by the following method. First, 50 g of particles are put into a 100 mL volumetric flask. Subsequently, 100 mL of water is weighed using another 100 mL graduated cylinder. Thereafter, first, the weighed water is put into the volumetric flask to the extent that the particles are immersed, and then ultrasonic waves are applied to the volumetric flask to allow the particles and water to blend in. Next, additional water is added thereto until the marked line of the volumetric flask is reached, and the specific gravity is calculated as 50 g/(volume of water remaining in volumetric flask).

The specific particles are preferably transparent or white particles. Further, the specific particles are preferably inorganic particles. Specific examples of the specific particles include titanium oxide particles, strontium titanate particles, barium titanate particles, zinc oxide particles, magnesium oxide particles, zirconium oxide particles, barium sulfate particles, zinc sulfide particles, niobium pentoxide particles, tantalum pentoxide particles, and yttrium phosphate particles.

As the specific particles, particles having titanium atoms are preferable, and titanium oxide particles are more preferable. According to this aspect, it is possible to form a film having excellent light scattering properties.

It is also preferable that the specific particles are yttrium phosphates. According to this aspect, the curability of the photocurable composition can be further improved, and the adhesiveness of the film obtained from the photocurable composition to the support can be improved.

In the titanium oxide particles, the content (purity) of titanium dioxide ($TiO_2$) is preferably 70% by mass or more, more preferably 80% by mass or more, and still more preferably 85% by mass or more. In the titanium oxide particles, the content of lower titanium oxide represented by $Ti_nO_{2n-1}$ (n represents a number of 2 to 4), titanium nitride, or the like is preferably 30% by mass or less, more preferably 20% by mass or less, and still more preferably 15% by mass or less.

The titanium oxide may be rutile type titanium oxide or anatase type titanium oxide. From the viewpoint of colorability and the temporal stability of the dispersion liquid or the composition, rutile type titanium oxide is preferable. In particular, rutile type titanium oxide has a small change in color difference and excellent colorability even under heating. In addition, the rutile transformation rate of the titanium oxide is preferably 95% or more and more preferably 99% or more.

As rutile type titanium oxide, a known titanium oxide can be used. As a method of manufacturing rutile type titanium oxide, two methods including a sulfuric acid method and a chlorine method are present, and a titanium oxide manufactured using any one of the methods can be suitably used. Here, the sulfuric acid method refers to a manufacturing method including: dissolving ilmenite ore or titanium slug as a raw material in concentrated sulfuric acid to separate iron as iron sulfate; hydrolyzing the separated solution to obtain a precipitate of hydroxide; and calcinating the precipitate at a high temperature to extract rutile type titanium oxide. In addition, the chlorine method refers to a manufacturing method including: causing synthetic rutile or natural rutile as a raw material to react with chlorine gas or carbon at a high temperature of approximately 1,000°C to synthesize of titanium tetrachloride; and oxidizing the titanium tetrachloride at a

high temperature to extract rutile type titanium oxide. It is preferable that rutile type titanium oxide is obtained using the chlorine method.

As the specific surface area of titanium oxide particles, a value measured using a Brunauer, Emmett, Teller (BET) method is preferably 10 to 400 $m^2/g$, more preferably 10 to 200 $m^2/g$, still more preferably 10 to 150 $m^2/g$, particularly preferably 10 to 40 $m^2/g$, and most preferably 10 to 20 $m^2/g$. The pH of titanium oxide is preferably 6 to 8. The oil absorption of titanium oxide is preferably 10 to 60 (g/100 g) and more preferably 10 to 40 (g/100 g).

In the titanium oxide particles, the total content of $Fe_2O_3$, $Al_2O_3$, $SiO_2$, $Nb_2O_5$, and $Na_2O$ is preferably 0.1% by mass or less, more preferably 0.05% by mass or less, still more preferably 0.02% by mass or less, and particularly preferably substantially 0% by mass.

The shape of the titanium oxide particles is not particularly limited. Examples of the shape of titanium oxide include an isotropic shape (for example, a spherical shape and a polyhedral shape), an anisotropic shape (for example, a needle shape, a rod shape, and a plate shape), and an unstructured shape. The hardness (Mohs hardness) of titanium oxide particles is preferably 5 to 8 and more preferably 7 to 7.5.

The inorganic particles such as the titanium oxide particles may be surface-treated with a surface treatment agent such as an organic compound. Examples of the surface treatment agent used for the surface treatment of the titanium oxide include polyol, aluminum oxide, aluminum hydroxide, silica (silicon oxide), water-containing silica, alkanolamine, stearic acid, organosiloxane, zirconium oxide, hydrogen dimethicone, a silane coupling agent, and a titanate coupling agent. In particular, a silane coupling agent is preferable. The surface treatment may be performed using one surface treatment agent alone or a combination of two or more surface treatment agents.

It is also preferable that the inorganic particles such as the titanium oxide particles are covered with a basic metal oxide or a basic metal hydroxide. Examples of the basic metal oxide or the basic metal hydroxide include a metal compound including magnesium, zirconium, cerium, strontium, antimony, barium, calcium, or the like.

As the titanium oxide particles, titanium oxide particles described in "Titanium Oxide - Physical Properties and Applied Technology, Manabu Kiyono, pp. 13 to 45, June 25, 1991, published by Gihodo Shuppan Co., Ltd." can also be suitably used.

As the specific particles, commercially available particles can be used. The commercially available product may be used as it is or may be used after a classification treatment. Examples of the commercially available product of titanium oxide particles include:

products manufactured by ISHIHARA SANGYO KAISHA, Ltd. such as trade name TIPAQUE R-550, R-580, R-630, R-670, R-680, R-780, R-780-2, R-820, R-830, R-850, R-855, R-930, R-980, CR-50, CR-50-2, CR-57, CR-58, CR-58-2, CR-60, CR-60-2, CR-63, CR-67, CR-Super 70, CR-80, CR-85, CR-90, CR-90-2, CR-93, CR-95, CR-953, CR-97, PF-736, PF-737, PF-742, PF-690, PF-691, PF-711, PF-739, PF-740, PC-3, S-305, CR-EL, PT-301, PT-401M, PT-401L, PT-501A, PT-501R, UT771, TTO-51, TTO-80A, TTO-S-2, A-220, MPT-136, MPT-140, or MPT-141;

products manufactured by Sakai Chemical Industry Co., Ltd. such as trade names R-3L, R-5N, R-7E, R-11P, R-21, R-25, R-32, R-42, R-44, R-45M, R-62N, R-310, R-650, SR-1, D-918, GTR-100, FTR-700, TCR-52, A-110, A-190, SA-1, SA-1L, STR-100A-LP, STR-100C-LP, or TCA-123E;
products manufactured by TAYCA Corporation such as trade name JR, JRNC, JR-301, JR-403, JR-405, JR-600A, JR-600E, JR-603, JR-605, JR-701, JR-800, JR-805, JR-806, JR-1000, MT-01, MT-05, MT-10EX, MT-100S, MT-100TV, MT-100Z, MT-100AQ, MT-100WP, MT-100SA, MT-100HD, MT-150EX, MT-150W, MT-300HD, MT-500B, MT-500SA, MT-500HD, MT-600B, MT-600SA, MT-700B, MT-700BS, MT-700HD, or MT-700Z;
products manufactured by Titan Kogyo Ltd. such as trade name KR-310, KR-380, KR-380N, or ST-485SA15;
products manufactured by Fuji Titanium Industry Co., Ltd. such as trade name TR-600, TR-700, TR-750, TR-840, or TR-900; and
products manufactured by Shiraishi Calcium Kaisha Ltd. such as trade name Brilliant 1500. In addition, titanium oxide particles described in paragraphs 0025 to 0027 of JP2015-067794A can also be used.

Examples of a commercially available product of strontium titanate particles include SW-100 (manufactured by Titan Kogyo Ltd.). Examples of a commercially available product of barium sulfate particles include BF-1L (manufactured by Sakai Chemical Industry Co., Ltd.). Examples of a commercially available product of zinc oxide particles include Zincox Super F-1 (manufactured by Hakusui Chemical Co., Ltd.). Examples of a commercially available product of zirconium oxide particles include Z-NX (manufactured by Taiyo Koko Co., Ltd.) and Zirconeo-Cp (manufactured by ITEC Co., Ltd.).

The content of the specific particles is preferably 5% to 90% by mass in the total solid content of the photocurable composition. The upper limit is preferably 85% by mass or less, more preferably 80% by mass or less, and still more preferably 70% by mass or less. The lower limit is preferably 10% by mass or more, preferably 15% by mass or more, more preferably 20% by mass or more, still more preferably 25% by mass or more, even more preferably 30% by mass or more, and particularly preferably 35% by mass or more.

The photocurable composition according to the embodiment of the present invention may contain only one kind

of specific particle, or may contain two or more kinds thereof. In a case where only one kind of the specific particle is included, more excellent storage stability is easily obtained. In addition, in a case where two or more kinds of the specific particles are contained, the angle dependence of light scattering can be further reduced. In a case where two or more kinds of the specific particles are included, the total content thereof is preferably within the above-described range.

<<Resin>>

The photocurable composition of the embodiment of the present invention contains a resin. The resin is blended in, for example, an application for dispersing the particles or the like in the photocurable composition or an application as a binder. Mainly, a resin which is used for dispersing the particles or the like in the photocurable composition is also referred to as a dispersant. However, such applications of the resin are merely exemplary, and the resin can also be used for other purposes in addition to such applications. It is preferable that the resin contained in the photocurable composition according to the embodiment of the present invention contains a resin as a binder and a resin as a dispersant.

(Resin A)

As the resin contained in the photocurable composition according to the embodiment of the present invention, a resin A containing a repeating unit represented by Formula (a1) and a repeating unit represented by Formula (a2) is used.

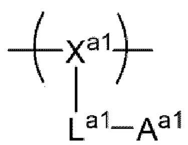

(a1)

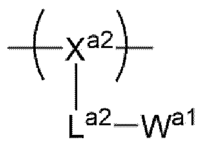

(a2)

in Formula (a1), $X^{a1}$ represents a trivalent linking group, $L^{a1}$ represents a single bond or a divalent linking group, and $A^{a1}$ represents an acid group,
in Formula (a2), $X^{a2}$ represents a trivalent linking group, $L^{a2}$ represents a single bond or a divalent linking group, and $W^{a1}$ represents a graft chain including a repeating unit of a polyester structure or a polyether structure.

Examples of the trivalent linking group represented by $X^{a1}$ in Formula (a1) and the trivalent linking group represented by $X^{a2}$ in Formula (a2) include a poly(meth)acrylic linking group, a polyalkyleneimine-based linking group, a polyester-based linking group, a polyurethane-based linking group, a polyurea-based linking group, a polyamide-based linking group, a polyether-based linking group, and a polystyrene-based linking group; a poly(meth)acrylic linking group or a polyalkyleneimine-based linking group is preferable, and a poly(meth)acrylic linking group is more preferable.
Examples of the divalent linking group represented by $L^{a1}$ in Formula (a1) and the divalent linking group represented by $L^{a2}$ in Formula (a2) include an alkylene group (preferably an alkylene group having 1 to 12 carbon atoms), an arylene group (preferably an arylene group having 6 to 20 carbon atoms), -NH-, -SO-, $-SO_2-$, -CO-, -O-, -COO-, OCO-, -S-, and a group formed by a combination of two or more of these groups.
Examples of the acid group represented by $A^{a1}$ in Formula (a1) include a carboxy group, a phosphoric acid group, a sulfo group, and a phenolic hydroxy group, and a carboxy group is preferable.
$W^{a1}$ in Formula (a1) represents a graft chain including a repeating unit of a polyester structure or a polyether structure. From the reason that a phase-separated structure is easily formed in the film and a film having more excellent light scattering properties can be formed, $W^{a1}$ is preferably a graft chain including a repeating unit of a polyester structure. **In** the present specification, the graft chain means a polymer chain branched and extended from the main chain of the repeating unit. As the graft chain, the number of atoms excluding the hydrogen atoms is preferably 40 to 10,000, the number of atoms excluding the hydrogen atoms is more preferably 50 to 2,000, and the number of atoms excluding the hydrogen atoms is still more preferably 60 to 500.
Examples of the repeating unit having a polyester structure include a repeating unit having a structure represented by Formulae (G-1) to (G-3). Examples of the repeating unit having a polyether structure include a repeating unit having a structure represented by Formula (G-4).

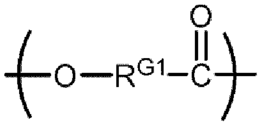

(G-1)

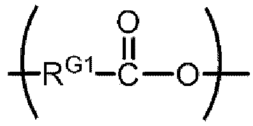

(G-2)

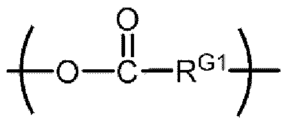

(G-3)

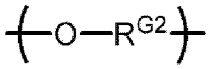

(G-4)

In the formulae, $R^{G1}$ and $R^{G2}$ each independently represent an alkylene group. The number of carbon atoms in the alkylene group represented by $R^{G1}$ and $R^{G2}$ is preferably 1 to 20, more preferably 2 to 16, and still more preferably 3 to 12. The alkylene group is preferably linear or branched.

A terminal structure of the graft chain is not particularly limited. The terminal structure may be a hydrogen atom or a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group.

The polyester graft chain is preferably a structure represented by any of Formulae (G-1a) to (G-3a). The repeating unit having a polyether structure is preferably a structure represented by Formula (G-4a).

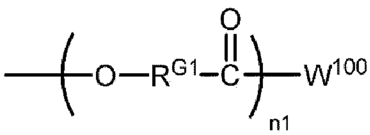

(G-1a)

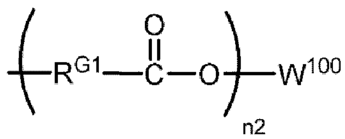

(G-2a)

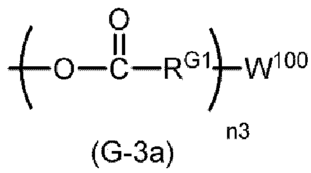

(G-3a)

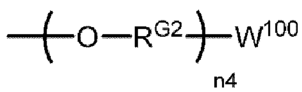

(G-4a)

In the formulae, $R^{G1}$ and $R^{G2}$ each independently represent an alkylene group, $W^{100}$'s each independently represent a hydrogen atom or a substituent, and n1 to n4 each independently represent an integer of 2 or more.

$R^{G1}$ and $R^{G2}$ have the same meanings as $R^{G1}$ and $R^{G2}$ described in Formulae (G-1) to (G-4), and the same applies to the preferred ranges thereof.

$W^{100}$ in Formulae (G-1a) to (G-4a) is preferably a substituent. Examples of the substituent include an alkyl group, an aryl group, a heteroaryl group, an alkoxy group, an aryloxy group, a heteroaryloxy group, an alkylthioether group, an arylthioether group, and a heteroarylthioether group.

n1 to n3 in Formulae (G-1a) to (G-4a) are each independently preferably an integer of 2 to 100, more preferably an integer of 2 to 80, and still more preferably an integer of 8 to 60.

In Formula (G-1a), in a case where n1 is 2 or more, a plurality of $R^{G1}$'s in each repeating unit may be the same or different from each other. In a case where $R^{G1}$ includes two or more kinds of repeating units different from each other, the arrangement of the repeating units is not particularly limited, and may be performed in any of a random manner, an alternative manner, and a blocked manner. The same applies to Formula (G-2a), Formula (G-3a), and Formula (G-4a).

In the resin A, the weight-average molecular weight of the repeating unit represented by Formula (a2) is preferably 1,000 or more, more preferably 1,000 to 10,000, and still more preferably 1,000 to 7,500. In the present specification, the weight-average molecular weight of the repeating unit represented by Formula (a2) is a value calculated from the weight-average molecular weight of the raw material monomer used for the polymerization of the repeating unit. For example, the repeating unit represented by Formula (a2) can be formed by polymerizing a macromonomer. Here, the macromonomer means a polymer compound in which a polymerizable group is introduced at a polymer terminal. In a case where a repeating unit represented by Formula (a2) is formed using a macromonomer, the weight-average molecular weight of the macromonomer corresponds to the weight-average molecular weight of the repeating unit represented by

Formula (a2).

In the resin A, the content of the repeating unit represented by Formula (a1) is preferably 10 to 80 mol% with respect to all the repeating units of the resin A. The upper limit is preferably 70 mol% or lower and more preferably 60 mol% or lower. The lower limit is preferably 15 mol% or higher and more preferably 20 mol% or higher.

In the resin A, the content of the repeating unit represented by Formula (a2) is preferably 1 to 70 mol% with respect to all the repeating units of the resin A. The upper limit is preferably 60 mol% or lower and more preferably 50 mol% or lower. The lower limit is preferably 3 mol% or higher and more preferably 5 mol% or higher.

The resin A preferably includes at least one selected from a resin A1 including a repeating unit represented by Formula (a1-1) and a repeating unit represented by Formula (a2-1), or a resin A2 including a repeating unit represented by Formula (a1-2) and a repeating unit represented by Formula (a2-2), and more preferably includes the above-described resin A1.

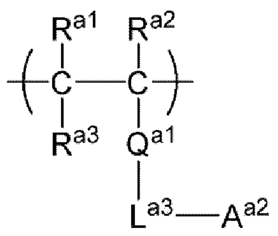
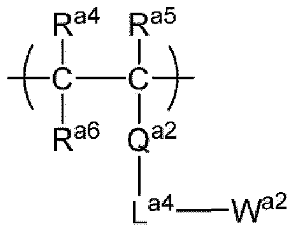

(a1-1) (a2-1)

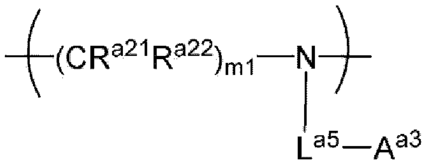
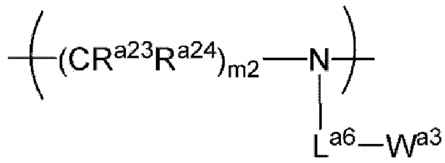

(a1-2) (a2-2)

in Formula (a1-1), $R^{a1}$ to $R^{a3}$ each independently represent a hydrogen atom or an alkyl group, $Q^{a1}$ represents -CO-, -COO-, -OCO-, -CONH-, or a phenylene group, $L^{a3}$ represents a single bond or a divalent linking group, and $A^{a2}$ represents an acid group,

in Formula (a2-1), $R^{a4}$ to $R^{a6}$ each independently represent a hydrogen atom or an alkyl group, $Q^{a2}$ represents -CO-, -COO-, -OCO-, -CONH-, or a phenylene group, $L^{a4}$ represents a single bond or a divalent linking group, and $W^{a2}$ represents a graft chain including a repeating unit of a polyester structure or a polyether structure,

in Formula (a1-2), $R^{a21}$ and $R^{a22}$ each independently represent a hydrogen atom or an alkyl group, m1 represents an integer of 1 to 5, $L^{a5}$ represents a single bond or a divalent linking group, and $A^{a3}$ represents an acid group,

in Formula (a2-2), $R^{a23}$ and $R^{a24}$ each independently represent a hydrogen atom or an alkyl group, m2 represents an integer of 1 to 5, $L^{a6}$ represents a single bond or a divalent linking group, and $W^{a3}$ represents a graft chain including a repeating unit of a polyester structure or a polyether structure.

$A^{a2}$ of Formula (a1-1) and $A^{a3}$ of Formula (a1-2) have the same meaning as $A^{a1}$ of Formula (a1), and the preferred ranges thereof are also the same.

$W^{a2}$ in Formula (a2-1) and $W^{a3}$ in Formula (a2-2) have the same meaning as $W^{a1}$ in Formula (a2), and the preferred ranges thereof are also the same.

The number of carbon atoms in the alkyl group represented by $R^{a1}$ to $R^{a6}$ and $R^{a21}$ to $R^{a24}$ in the formulae is preferably 1 to 10 and more preferably 1 to 3.

$R^{a1}$ to $R^{a6}$ and $R^{a21}$ to $R^{a24}$ in the formulae preferably each independently represent a hydrogen atom or a methyl group.

$Q^{b1}$ of Formula (a1-1) and $Q^{b2}$ of Formula (a2-1) are each independently preferably -COO- or -CONH-, and more preferably -COO-.

Examples of the divalent linking group represented by $L^{a3}$ to $L^{a6}$ in the formulae include an alkylene group (preferably an alkylene group having 1 to 12 carbon atoms), an arylene group (preferably an arylene group having 6 to 20

carbon atoms), -NH-, -SO-, $-SO_2-$, -CO-, -O-, -COO-, OCO-, -S-, and a group formed by a combination of two or more of these groups.

m1 of Formula (a1-2) and m2 of Formula (a2-2) each independently represent an integer of 1 to 5, preferably an integer of 1 to 3, more preferably 1 or 2, and still more preferably 1.

In the resin A1, the content of the repeating unit represented by Formula (a1-1) is preferably 10 to 50 mol% with respect to all the repeating units of the resin A1. The upper limit is preferably 40 mol% or lower and more preferably 30 mol% or lower. The lower limit is preferably 15 mol% or higher and more preferably 20 mol% or higher. The content of the repeating unit represented by Formula (a2-1) is preferably 20 to 70 mol% with respect to all the repeating units of the resin A1. The upper limit is preferably 60 mol% or lower and more preferably 50 mol% or lower. The lower limit is preferably 30 mol% or higher and more preferably 40 mol% or higher.

In the resin A2, the content of the repeating unit represented by Formula (a1-2) is preferably 10 to 80 mol% with respect to all the repeating units of the resin A2. The upper limit is preferably 70 mol% or lower and more preferably 60 mol% or lower. The lower limit is preferably 20 mol% or higher and more preferably 30 mol% or higher. The content of the repeating unit represented by Formula (a2-2) is preferably 1 to 70 mol% with respect to all the repeating units of the resin A2. The upper limit is preferably 60 mol% or lower and more preferably 50 mol% or lower. The lower limit is preferably 3 mol% or higher and more preferably 5 mol% or higher.

The resin A may further include a repeating unit having an ethylenically unsaturated bond-containing group. Examples of the ethylenically unsaturated bond-containing group include a vinyl group, a styrene group, a maleimide group, a (meth)allyl group, a (meth)acryloyl group, a (meth)acryloyloxy group, and a (meth)acryloylamide group; and a (meth)acryloyl group, a (meth)acryloyloxy group, or a (meth)acryloylamide group is preferable, a (meth)acryloyloxy group is more preferable, and an acryloyloxy group is still more preferable.

In a case where the resin A includes the repeating unit having an ethylenically unsaturated bond-containing group, a content of the repeating unit having an ethylenically unsaturated bond-containing group in the resin A is preferably 1 to 50 mol%. The lower limit is preferably 3 mol% or higher and more preferably 5 mol% or higher. The upper limit is preferably 40 mol% or lower and more preferably 30 mol% or lower.

The weight-average molecular weight of the resin A is preferably 10,000 to 50,000. The lower limit is preferably 12,000 or more and more preferably 13,000 or more. The upper limit is preferably 45,000 or less and more preferably 40,000 or less.

The acid value of the resin A is preferably 20 to 200 mgKOH/g. The lower limit is preferably 25 mgKOH/g or higher and more preferably 30 mgKOH/g or higher. The upper limit is preferably 150 mgKOH/g or less, and more preferably 120 mgKOH/g or less.

The ethylenically unsaturated bond-containing group value of the resin A is preferably 0.1 to 2.0 mmol/g. The upper limit is preferably 1.9 mmol/g or less and more preferably 1.8 mmol/g or less. The lower limit is preferably 0.2 mmol/g or more and more preferably 0.3 mmol/g or more.

The ethylenically unsaturated bond-containing group value of resin is a numerical value representing a molar amount of ethylenically unsaturated bond-containing group values per 1 g of the solid content of the resin. As the ethylenically unsaturated bond-containing group value of the resin, a value calculated from charged raw materials is used in a case where the value can be calculated from the raw materials used for the synthesis of the resin. **In** addition, regarding the ethylenically unsaturated bond-containing group value of the resin, in a case where the value cannot be calculated from the raw materials used for the synthesis of the resin, a value measured using a hydrolysis method is used. Specifically, a component (a) of an ethylenically unsaturated bond-containing group site is extracted from the resin by an alkali treatment, a content of the component (a) is measured by high-performance liquid chromatography (HPLC), and the ethylenically unsaturated bond-containing group value of the resin can be calculated by the following expression. In addition, in a case where the above-described component (a) cannot be extracted from the resin by an alkali treatment, a value measured by a nuclear magnetic resonance (NMR) method is used.

Ethylenically unsaturated bond-containing group value of resin [mmol/g] = (Content of component (a) [ppm]/Molecular weight of component (a) [g/mol])/(Weighed value of resin [g] $\times$ (Concentration of solid contents of resin [% by mass]/100) $\times$ 10)

The resin A may be used as a binder or a dispersant.

(Other resins)

The photocurable composition according to the embodiment of the present invention may further contain a resin other than the above-described resin A (hereinafter, also referred to as other resins). As other resins, any known resin can be used. Examples of the resin include a (meth)acrylic resin, a (meth)acrylamide resin, an epoxy resin, an ene-thiol resin, a

polycarbonate resin, a polyether resin, a polyarylate resin, a polysulfone resin, a polyethersulfone resin, a polyphenylene resin, a polyarylene ether phosphine oxide resin, a polyimide resin, a polyamide resin, a polyolefin resin, a cyclic olefin resin, a polyester resin, a styrene resin, a silicone resin, and a urethane resin. The other resins may be used as a binder or a dispersant.

As the other resins, a resin having an acid group can be used. Examples of the acid group include a carboxy group, a phosphoric acid group, a sulfo group, and a phenolic hydroxy group.

As the other resins, a resin having a basic group can be used. Examples of the basic group include an amino group.

As other resins, a resin including a repeating unit derived from a compound represented by Formula (ED1) and/or a compound represented by Formula (ED2) (hereinafter, these compounds will also be referred to as an "ether dimer") can be used.

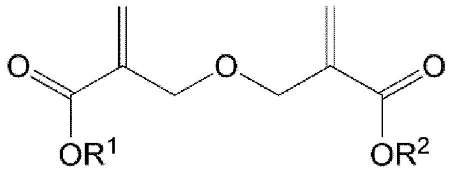

(ED1)

In Formula (ED1), $R^1$ and $R^2$ each independently represent a hydrogen atom or a hydrocarbon group having 1 to 25 carbon atoms, which may have a substituent.

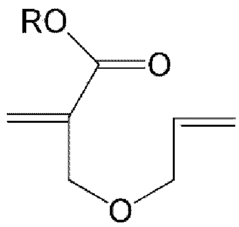

(ED2)

In Formula (ED2), R represents a hydrogen atom or an organic group having 1 to 30 carbon atoms. Specific examples of Formula (ED2) can be found in the description of JP2010-168539A.

As the other resins, a dispersant can also be used. Examples of a commercially available product as the dispersant include DISPERBYK series (for example, DISPERBYK-111, 2001, and the like) manufactured by BYK-Chemie Japan K.K., Solsperse series (for example, Solsperse 20000, 76500, and the like) manufactured by Lubrizol Corporation, and AJISPER series manufactured by Ajinomoto Fine-Techno Co., Inc. In addition, products described in paragraph 0129 of JP2012-137564A and products described in paragraph 0235 of JP2017-194662A can also be used as the dispersant.

As the other resins, a random polymer or a block polymer can also be used.

As the other resins, it is preferable to use a resin having a structure in which a plurality of polymer chains are bonded to a tri- or higher valent linking group. By using such a resin, due to steric hindrance caused by the polymer chain, aggregation and the like of particles in the photocurable composition can be suppressed more effectively, and excellent storage stability can be obtained. In addition, the above-described phase-separated structure is easily formed in the film during film formation, and the light scattering properties of the obtained film are easily improved.

The other resins are preferably resins having a repeating unit derived from a (meth)acrylate compound (hereinafter, also referred to as a resin B). Since the resin A and the resin B have low compatibility, by using such resins in combination, the above-described phase-separated structure is easily formed in the film during film formation, and the light scattering properties of the obtained film can be further improved.

It is preferable that the resin B is a resin having an acid group. Examples of the acid group include a carboxy group, a phosphoric acid group, a sulfo group, and a phenolic hydroxy group.

The resin B is preferably a resin represented by Formula (b1).

$$\left[A^{b1}-Y^{b1}\right]_n Z^{b1} \left[Y^{b2}-P^{b1}\right]_m \qquad \text{(b1)}$$

In Formula (b1), $Z^{b1}$ represents an (m+n)-valent linking group, $Y^{b1}$ and $Y^{b2}$ each independently represent a single bond or a linking group, $A^{b1}$ represents a group including a functional group selected from a heterocyclic group, an

acid group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group, $P^{b1}$ represents a polymer chain including a repeating unit derived from a (meth)acrylate compound, n represents 1 to 20, m represents 2 to 20, m+n represents 3 to 21, n number of $Y^{b1}$'s and n number of $A^{b1}$'s may be the same or different from each other, and m number of $Y^{b2}$'s and m number of $P^{b1}$'s may be the same or different from each other.

$A^{b1}$ of Formula (b1) represents a group including the above-described functional group (hereinafter, also referred to as a specific functional group). The specific functional group contained in $A^{b1}$ is preferably a heterocyclic group, an acid group, a group having a basic nitrogen atom, a hydrocarbon group having 4 or more carbon atoms, or a hydroxy group, and more preferably an acid group. Examples of the acid group include the above-described acid group, and a carboxy group is preferable.

$A^{b1}$ may contain at least one specific functional group, and may contain two or more specific functional groups. The specific functional group itself may be $A^{b1}$

$A^{b1}$ is preferably a group containing 1 to 10 specific functional groups, and more preferably a group containing 1 to 6 specific functional groups. In addition, as the group including the specific functional group, which is represented by Ab$^{1}$, a group which is formed by the specific functional group and a linking group including 1 to 200 carbon atoms, 0 to 20 nitrogen atoms, 0 to 100 oxygen atoms, 1 to 400 hydrogen atoms, and 0 to 40 sulfur atoms being bonded to each other can be used. Examples thereof include a group which is formed by specific functional groups such as one or more acid groups being bonded through a chain-like saturated hydrocarbon group having 1 to 10 carbon atoms, a cyclic saturated hydrocarbon group having 3 to 10 carbon atoms, or an aromatic hydrocarbon group having 5 to 10 carbon atoms. The chain-like saturated hydrocarbon group, the cyclic saturated hydrocarbon group, and the aromatic hydrocarbon group may further have a substituent. Examples of the substituent include an alkyl group having 1 to 20 carbon atoms, an aryl group having 6 to 16 carbon atoms, a hydroxy group, a carboxy group, an amino group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonic acid ester group, and an ethylenically unsaturated bond-containing group.

The chemical formula weight of $A^{b1}$ is preferably 30 to 2,000. The upper limit is preferably 1,000 or less and more preferably 800 or less. The lower limit is preferably 50 or more and more preferably 100 or more. The chemical formula weight of $A^{b1}$ is a value calculated from the structural formula.

Examples of the (m+n)-valent linking group represented by $Z^{b1}$ in Formula (b1) include a group composed of 1 to 100 carbon atoms, 0 to 10 nitrogen atoms, 0 to 50 oxygen atoms, 1 to 200 hydrogen atoms, and 0 to 20 sulfur atoms. Examples of the (m+n)-valent linking group also include a group (which may form a ring structure) composed of the following structural unit or a combination of two or more of the following structural units. **In** the formulae, * represents a bonding site.

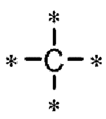 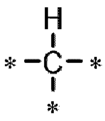 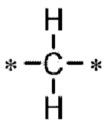 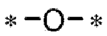 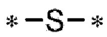 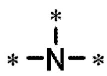 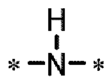 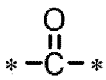 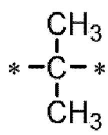

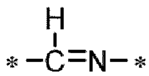 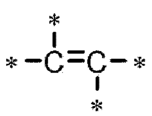 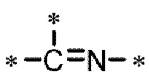 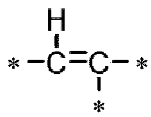 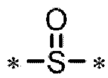 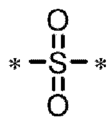 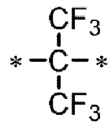

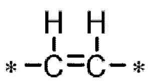 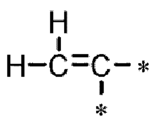 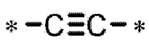 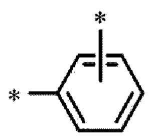 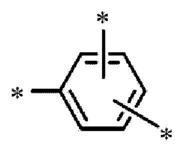

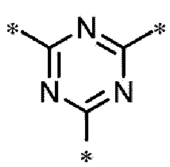 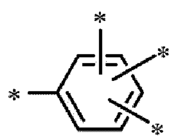 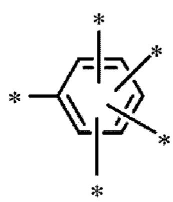 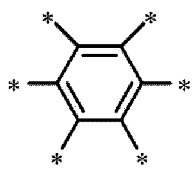

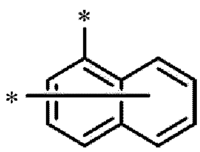
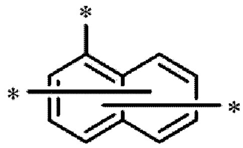
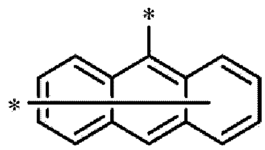

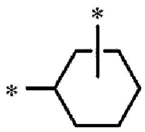
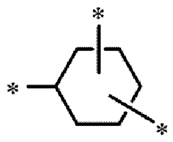
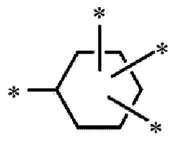
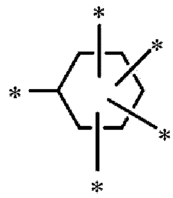
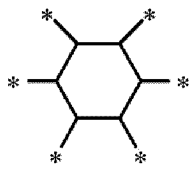

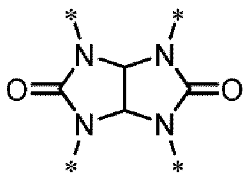
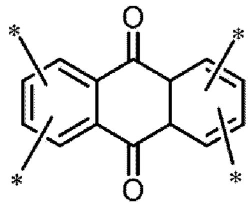
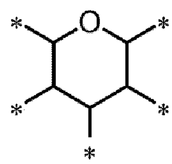

The (m+n)-valent linking group may have a substituent. Examples of the substituent include an alkyl group having 1 to 20 carbon atoms, an aryl group having 6 to 16 carbon atoms, a hydroxy group, an amino group, a carboxy group, a sulfonamide group, an N-sulfonylamide group, an acyloxy group having 1 to 6 carbon atoms, an alkoxy group having 1 to 20 carbon atoms, a halogen atom, an alkoxycarbonyl group having 2 to 7 carbon atoms, a cyano group, a carbonic acid ester group, and an ethylenically unsaturated bond-containing group.

It is preferable that the (m+n)-valent linking group represented by $Z^{b1}$ is a group represented by any one of Formulae (Z-1) to (Z-4).

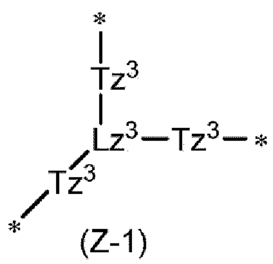
(Z-1)

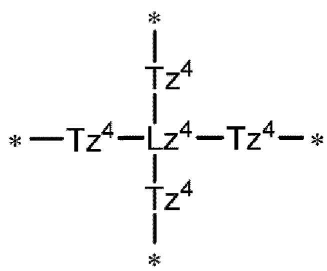
(Z-2)

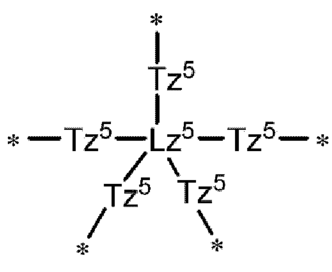
(Z-3)

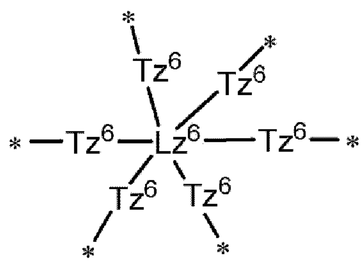
(Z-4)

Formula (Z-1), $Lz^3$ represents a trivalent group, $Tz^3$ represents a single bond or a divalent linking group, and three $Tz^3$'s may be the same or different from each other.

Formula (Z-2), $Lz^4$ represents a tetravalent group, $Tz^4$ represents a single bond or a divalent linking group, and four $Tz^4$'s may be the same or different from each other.

Formula (Z-3), $Lz^5$ represents a pentavalent group, $Tz^5$ represents a single bond or a divalent linking group, and

five $Tz^5$'s may be the same or different from each other.

Formula (Z-4), $Lz^6$ represents a hexavalent group, $Tz^6$ represents a single bond or a divalent linking group, and six $Tz^6$'s may be the same or different from each other.

In the above formulae, * represents a bonding site.

Examples of the divalent linking group represented by $Tz^3$ to $Tz^6$ include an alkylene group, an arylene group, a heterocyclic group, -O-, -CO-, -COO-, -OCO-, -NR-, -CONR-, -NRCO-, -S-, -SO-, $-SO_2-$, and a linking group formed by linking two or more of these groups. Here, R's each independently represent a hydrogen atom, an alkyl group, or an aryl group.

The number of carbon atoms in the alkyl group and in the alkylene group is preferably 1 to 30. The upper limit is more preferably 25 or less and still more preferably 20 or less. The lower limit is more preferably 2 or more and still more preferably 3 or more. The alkyl group and the alkylene group may be linear, branched, or cyclic.

The number of carbon atoms in the aryl group and in the arylene group is preferably 6 to 20 and more preferably 6 to 12.

The heterocyclic group is preferably a 5-membered ring or a 6-membered ring. A heteroatom included in the heterocyclic group is preferably an oxygen atom, a nitrogen atom, or a sulfur atom. The number of heteroatoms included in the heterocyclic group is preferably 1 to 3.

The alkylene group, the arylene group, the heterocyclic group, the alkyl group, and the aryl group may be unsubstituted or may have the above-described substituent.

Examples of the trivalent group represented by $Lz^3$ include a group obtained by removing one hydrogen atom from the above-described divalent linking group. Examples of the tetravalent group represented by $Lz^4$ include a group obtained by removing two hydrogen atoms from the above-described divalent linking group. Examples of the pentavalent group represented by $Lz^5$ include a group obtained by removing three hydrogen atoms from the above-described divalent linking group. Examples of the hexavalent group represented by $Lz^6$ include a group obtained by removing four hydrogen atoms from the above-described divalent linking group. The trivalent to hexavalent group represented by $Lz^3$ to $Lz^6$ may have the above-described substituent.

The chemical formula weight of $Z^{b1}$ is preferably 20 to 3000. The upper limit is preferably 2,000 or less and more preferably 1,500 or less. The lower limit is preferably 50 or more and more preferably 100 or more. The chemical formula weight of $Z^{b1}$ is a value calculated from the structural formula.

Specific examples of the (m+n)-valent linking group can be found in paragraphs 0043 to 0055 of JP2014-177613A, the content of which is incorporated herein by reference.

In Formula (b1), $Y^{b1}$ and $Y^{b2}$ each independently represent a single bond or a linking group. Examples of the linking group include a group composed of 1 to 100 carbon atoms, 0 to 10 nitrogen atoms, 0 to 50 oxygen atoms, 1 to 200 hydrogen atoms, and 0 to 20 sulfur atoms. The above-described group may further have the above-described substituent. Specific examples of the linking group represented by $Y^{b1}$ and $Y^{b2}$ include a group composed of the following structural units or a combination of two or more of the structural units. In the formulae, * represents a bonding site.

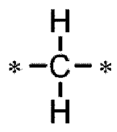 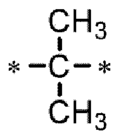 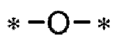 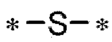 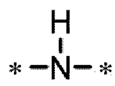 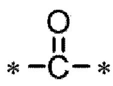 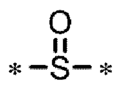 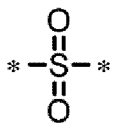

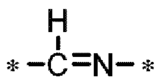 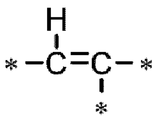 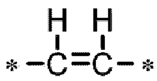 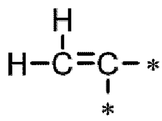 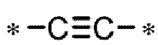

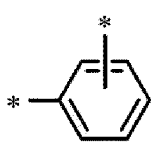 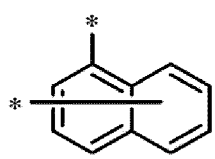 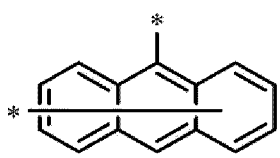 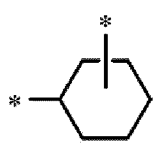

In Formula (b1), $P^{b1}$ represents a polymer chain including a repeating unit derived from a (meth)acrylate compound.

Examples of the repeating unit derived from a (meth)acrylate compound include a repeating unit having a structure represented by Formula (G-10).

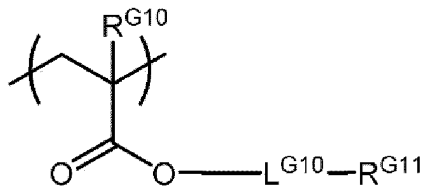

(G-10)

In Formula (G-10), $R^{G10}$ represents a hydrogen atom or a methyl group, $L^{G10}$ represents a single bond or a divalent linking group, and $R^{G11}$ represents a hydrogen atom or a substituent.

Examples of the divalent linking group represented by $L^{G10}$ include an alkylene group (preferably an alkylene group having 1 to 12 carbon atoms), an alkyleneoxy group (preferably an alkyleneoxy group having 1 to 12 carbon atoms), an oxyalkylenecarbonyl group (preferably an oxyalkylenecarbonyl group having 1 to 12 carbon atoms), an arylene group (preferably an arylene group having 6 to 20 carbon atoms), -NH-, -SO-, $-SO_2-$, -CO-, -O-, -COO-, OCO-, -S-, and a group formed by a combination of two or more of these groups.

Examples of the substituent represented by $R^{G11}$ include a hydroxy group, a carboxy group, an alkyl group, an aryl group, a heterocyclic group, an alkoxy group, an aryloxy group, a heterocyclic oxy group, an alkylthioether group, an arylthioether group, a heterothioether group, an ethylenically unsaturated bond-containing group, an epoxy group, an oxetanyl group, and a blocked isocyanate group.

A weight-average molecular weight of the polymer chain represented by $P^{b1}$ is preferably 1,000 or more and more preferably 1,000 to 10,000. The upper limit is preferably 9,000 or less, more preferably 6,000 or less, and still more preferably 3,000 or less. The lower limit is preferably 1,200 or more and more preferably 1,400 or more. The weight-average molecular weight of $P^{b1}$ is a value calculated from the weight-average molecular weight of a raw material used for introducing into the polymer chain.

The weight-average molecular weight of the resin represented by Formula (b1) is preferably 5,000 to 50,000. The lower limit is preferably 6,000 or more and more preferably 7,000 or more. The upper limit is preferably 40,000 or less and more preferably 30,000 or less.

The acid value of the resin represented by Formula (b1) is preferably 20 to 250 mgKOH/g. The lower limit is preferably 25 mgKOH/g or higher and more preferably 30 mgKOH/g or higher. The upper limit is preferably 200 mgKOH/g or less.

In a case where the photocurable composition according to the embodiment of the present invention includes the above-described resin A and resin B, it is preferable that the resin A is a binder and the resin B is a dispersant of the above-described specific particles.

The content of the resin in the total solid content of the photocurable composition is preferably 1 to 50% by mass. The lower limit is preferably 5% by mass or more and more preferably 10% by mass or more. The upper limit is preferably 45% by mass or less, more preferably 40% by mass or less, and still more preferably 35% by mass or less.

The content of the above-described resin A in the resin contained in the photocurable composition is preferably 5% by mass or more, more preferably 10% by mass or more, and still more preferably 15% by mass or more. The upper limit may be 100% by mass or less or 50% by mass or less.

In a case where the photocurable composition according to the embodiment of the present invention includes the above-described resin A and resin B, the content of the resin B is preferably 1 to 200 parts by mass with respect to 100 parts by mass of the resin A. The upper limit is preferably 150 parts by mass or less and more preferably 100 parts by mass or less. The lower limit is preferably 30 parts by mass or more and more preferably 50 parts by mass or more.

One kind of resin may be used alone, or two or more kinds thereof may be used in combination. In a case where two or more kinds of resins are used in combination, the total content thereof is preferably within the above-described range.

<<Polymerizable monomer>>

The photocurable composition according to the embodiment of the present invention contains a polymerizable monomer having a (meth)acryloyl group. Hereinafter, the "polymerizable monomer having a (meth)acryloyl group" is also referred to as a "polymerizable monomer". It is preferable that the polymerizable monomer is a radically polymerizable monomer.

The polymerizable monomer is preferably a compound containing two or more (meth)acryloyl groups, more preferably a compound containing three or more (meth)acryloyl groups, and still more preferably a compound containing four or more (meth)acryloyl groups. The upper limit of the number of (meth)acryloyl groups is preferably 15 or less, more

preferably 10 or less, and still more preferably 6 or less. As the polymerizable monomer, a bifunctional or higher (meth) acrylate compound is preferable, a trifunctional or higher functional (meth)acrylate compound is more preferable, a trifunctional to pentadecafunctional (meth)acrylate compound is still more preferable, a trifunctional to decafunctional (meth)acrylate compound is even still more preferable, and a trifunctional to hexafunctional (meth)acrylate compound is particularly preferable.

The molecular weight of the polymerizable monomer is preferably 200 to 3,000. The upper limit of the molecular weight is preferably 2,500 or less and still more preferably 2,000 or less. The lower limit of the molecular weight is preferably 250 or more and still more preferably 300 or more.

In addition, as the polymerizable monomer, a compound represented by any one of the following Formulae (MO-1) to (MO-5) can also be suitably used. In a case where T in the formulae represents an oxyalkylene group, a terminal thereof on a carbon atom side in T is bonded to R.

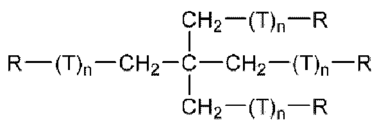

(MO-1)

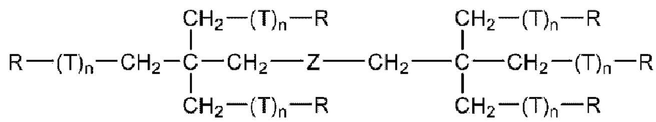

(MO-2)

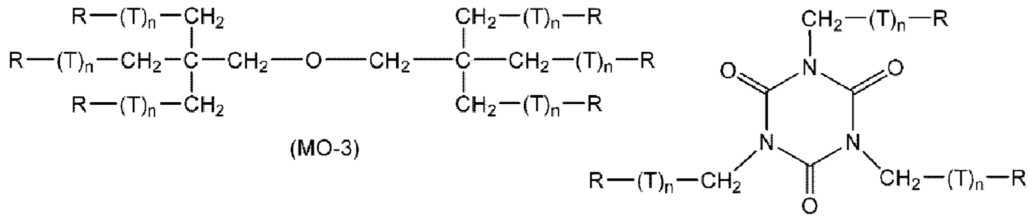

(MO-3)

(MO-4)

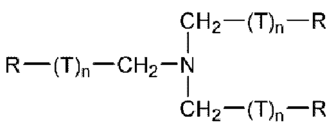

(MO-5)

R: 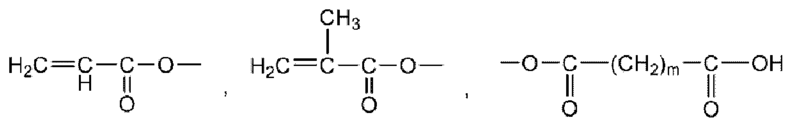

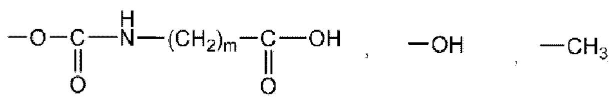

T: $-(CH_2)_m-$, $-OCH_2-$, $-OCH_2CH_2-$, $-OCH_2CH_2CH_2-$, $-OCH_2CH_2CH_2CH_2-$,

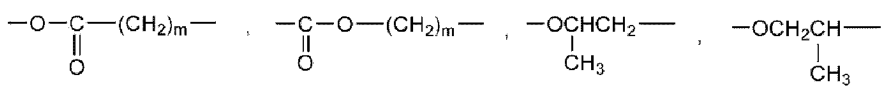

Z: 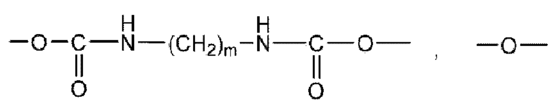

In the formulae, n represents 0 to 14, and m represents 1 to 8. A plurality of R's and a plurality of T's which are present in the same molecule may be the same as or different from each other. At least one of a plurality of R's which are present in each of the compounds represented by Formula (MO-1) to (MO-5) represents a group represented by $-OC(=O)CH=CH_2$ or $-OC(=O)C(CH_3)=CH_2$. Specific examples of the compounds represented by Formulae (MO-1) to (MO-5) include compounds described in paragraphs 0248 to 0251 of JP2007-269779A, the content of which is incorporated

herein by reference.

As the polymerizable monomer, dipentaerythritol tri(meth)acrylate (as a commercially available product, KAYARAD D-330 manufactured by Nippon Kayaku Co., Ltd.), dipentaerythritol tetra(meth)acrylate (as a commercially available product, KAYARAD D-320 manufactured by Nippon Kayaku Co., Ltd.), dipentaerythritol penta(meth)acrylate (as a commercially available product, KAYARAD D-310 manufactured by Nippon Kayaku Co., Ltd.), dipentaerythritol hexa(meth)acrylate (as a commercially available product, KAYARAD DPHA manufactured by Nippon Kayaku Co., Ltd. and NK ESTER A-DPH-12E manufactured by Shin-Nakamura Chemical Co., Ltd.), a compound having a structure in which a (meth)acryloyl group thereof is bonded through an ethylene glycol residue and/or a propylene glycol residue (for example, SR454 and SR499 available from Sartomer Japan Inc.), diglycerin ethylene oxide (EO)-modified (meth)acrylate (as a commercially available product, M-460 manufactured by TOAGOSEI Co., Ltd.), pentaerythritol tetra(meth)acrylate (NK ESTER A-TMMT manufactured by Shin-Nakamura Chemical Co., Ltd.), 1,6-hexanediol diacrylate (KAYARAD HDDA manufactured by Nippon Kayaku Co., Ltd.), KAYARAD RP-1040 (manufactured by Nippon Kayaku Co., Ltd.), ARONIX TO-2349 (manufactured by TOAGOSEI Co., Ltd.), NK OLIGO UA-7200 (manufactured by Shin-Nakamura Chemical Co., Ltd.), 8UH-1006 and 8UH-1012 (manufactured by Taisei Fine Chemical Co., Ltd.), Light Acrylate POB-A0 (manufactured by KYOEISHA CHEMICAL Co., Ltd.), or the like can also be used.

In the polymerizable monomer, it is also preferable to use a trifunctional (meth)acrylate compound such as trimethylolpropane tri(meth)acrylate, trimethylolpropane propyleneoxide-modified tri(meth)acrylate, trimethylolpropane ethyleneoxide-modified tri(meth)acrylate, isocyanuric acid ethyleneoxide-modified tri(meth)acrylate, and pentaerythritol tri(meth)acrylate. Examples of a commercially available product of the trifunctional (meth)acrylate compound include ARONIX M-309, M-310, M-321, M-350, M-360, M-313, M-315, M-306, M-305, M-303, M-452, and M-450 (manufactured by TOAGOSEI Co., Ltd.), NK ESTER A9300, A-GLY-9E, A-GLY-20E, A-TMM-3, A-TMM-3L, A -TMM-3LM-N, A-TMPT, and TMPT (manufactured by Shin-Nakamura Chemical Co., Ltd.), and KAYARAD GPO-303, TMPTA, THE-330, TPA-330, and PET-30 (manufactured by Nippon Kayaku Co., Ltd.).

The polymerizable monomer may be a compound having an acid group. Examples of the acid group include a carboxy group, a sulfo group, and a phosphoric acid group. The acid value of the polymerizable monomer having an acid group is preferably 0.1 to 40 mgKOH/g. The lower limit is preferably 5 mgKOH/g or more. The upper limit thereof is preferably 30 mgKOH/g or less.

The polymerizable monomer may be a compound including a ring structure. By using a polymerizable monomer including a ring structure, it is easy to form a phase-separated structure in the film during film formation, and a film having more excellent light scattering properties can be formed. For the reason that the above-described effect can be obtained more remarkably, the ring structure included in the polymerizable monomer is preferably an aliphatic ring. In addition, the aliphatic ring is preferably an aliphatic crosslinked ring. The aliphatic crosslinked ring is an aliphatic ring having a structure in which two or more atoms that are not adjacent to each other are linked to one aliphatic ring. Specific examples of the aliphatic crosslinked ring include a tricyclodecane ring and an adamantane ring, and a tricyclodecane ring is preferable. From the viewpoint of mobility of the monomer, the number of ring structures included in the polymerizable monomer is preferably 1 to 5, more preferably 1 to 3, and still more preferably 1. Specific examples of the polymerizable monomer including a ring structure include dimethylol-tricyclodecanediacrylate and 1,3-adamantananediol diacrylate.

A content of the polymerizable monomer in the total solid content of the photocurable composition is preferably 0.1% to 40% by mass. The lower limit is preferably 0.5% by mass or more, more preferably 1% by mass or more, still more preferably 5% by mass or more, and even still more preferably 10% by mass or more. The upper limit is preferably 35% by mass or less, more preferably 33% by mass or less, and still more preferably 30% by mass or less. As the polymerizable monomer, one kind may be used alone, or two or more kinds may be used in combination. In a case where two or more polymerizable monomers are used in combination, it is preferable that the total content thereof is within the above-described range.

In addition, the content of the polymerizable monomer is preferably 10 to 400 parts by mass with respect to 100 parts by mass of the resin. The lower limit is preferably 15 parts by mass or more and more preferably 20 parts by mass or more. The upper limit thereof is preferably 380 parts by mass or less and more preferably 350 parts by mass or less.

In addition, the total content of the polymerizable monomer and the resin in the total solid content of the photocurable composition is preferably 10% to 80% by mass. The upper limit is preferably 70% by mass or less, more preferably 65% by mass or less, and still more preferably 60% by mass or less. The lower limit is preferably 20% by mass or more and more preferably 30% by mass or more.

<<Photopolymerization initiator>>

The photocurable composition according to the embodiment of the present invention contains a photopolymerization initiator. The photopolymerization initiator is not particularly limited, and can be appropriately selected from known photopolymerization initiators. For example, a compound having photosensitivity to light in a range from an ultraviolet region to a visible region is preferable. The photopolymerization initiator is preferably a photoradical polymerization

initiator.

Examples of the photopolymerization initiator include a halogenated hydrocarbon derivative (for example, a compound having a triazine skeleton or a compound having an oxadiazole skeleton), an acylphosphine compound, a hexaarylbiimidazole compound, an oxime compound, an organic peroxide, a thio compound, a ketone compound, an aromatic onium salt, an α-hydroxyketone compound, and an α-aminoketone compound. As the photopolymerization initiator, compounds described in paragraphs 0065 to 0111 of JP2014-130173A, compounds described in JP6301489B, peroxide-based photopolymerization initiators described in MATERIAL STAGE, p. 37 to 60, vol. 19, No. 3, 2019, photopolymerization initiators described in WO2018/221177A, photopolymerization initiators described in WO2018/110179A, photopolymerization initiators described in JP2019-043864A, photopolymerization initiators described in JP2019-044030A, peroxide initiators described in JP2019-167313A, aminoacetophenone-based initiators having an oxazolidine group described in JP2020-055992A, oxime-based photopolymerization initiators described in JP2013-190459A, polymers described in JP2020-172619A, compounds represented by Formula 1 described in WO2020/152120A, compounds described in JP2021-181406A, photopolymerization initiators described in JP2022-013379A, compounds represented by Formula (1) described in JP2022-015747A, fluorine-containing fluorene oxime ester-based photoinitiators described in JP2021-507058A, and the like can also be used.

The photopolymerization initiator is preferably at least one selected from a trihalomethyltriazine compound, a benzyldimethylketal compound, an α-hydroxyketone compound, an α-aminoketone compound, an acylphosphine compound, a phosphine oxide compound, a metallocene compound, an oxime compound, a hexaarylbiimidazole compound, an onium compound, a benzothiazole compound, a benzophenone compound, an acetophenone compound, a cyclopentadiene-benzene-iron complex, a halomethyl oxadiazole compound, or a 3-aryl-substituted coumarin compound, more preferably at least one selected from an oxime compound, an α-hydroxyketone compound, an α-aminoketone compound, or an acylphosphine compound, still more preferably at least one selected from an α-aminoketone compound or an acylphosphine compound, and particularly preferably an acylphosphine compound.

Examples of the α-aminoketone compound include a compound represented by Formula (AK-1).

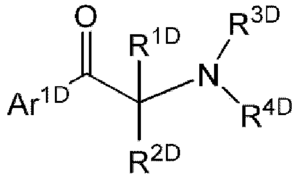

(AK-1)

**In** the formula, $Ar^{1D}$ represents a phenyl group having $-SR^{A1}$ or $-N(R^{A2})(R^{A3})$ as a substituent, where $R^{A1}$ to $R^{A3}$ each independently represent a hydrogen atom or an alkyl group, and $R^{A2}$ and $R^{A3}$ may be bonded to each other to form a ring,

$R^{1D}$ and $R^{2D}$ each independently represent an alkyl group, and $R^{1D}$ and $R^{2D}$ may be bonded to each other to form a ring, and

$R^{3D}$ and $R^{4D}$ each independently represent a hydrogen atom or an alkyl group, and $R^{3D}$ and $R^{4D}$ may be bonded to each other to form a ring.

The number of carbon atoms in the alkyl group represented by $R^{1D}$, $R^{2D}$, $R^{3D}$, and $R^{4D}$ is preferably 1 to 20, more preferably 1 to 10, and still more preferably 1 to 8.

The alkyl group represented by $R^{1D}$, $R^{2D}$, $R^{3D}$, and $R^{4D}$ may be linear, branched, or cyclic, and is preferably linear or branched and more preferably linear.

The alkyl group represented by $R^{1D}$, $R^{2D}$, $R^{3D}$, and $R^{4D}$ may be unsubstituted or may have a substituent. Examples of the substituent include a halogen atom, an alkyl group, an aryl group, a heterocyclic group, a cyano group, a hydroxy group, a nitro group, an amino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, a sulfonyl group, an alkoxycarbonyl group, a heterocyclic oxy group, an acyloxy group, a carbamoyloxy group, a silyloxy group, an aryloxycarbonyl group, an aryloxycarbonylamino group, an imide group, a heterocyclic thio group, a sulfinyl group, a phosphoryl group, an acyl group, a carboxy group, and a sulfo group, and an aryl group is preferable.

It is preferable that any one of $R^{1D}$ or $R^{2D}$ is an unsubstituted alkyl group and the other is an alkyl group substituted with an aryl group.

$R^{3D}$ and $R^{4D}$ are preferably unsubstituted alkyl groups.

Specific examples of the α-aminoketone compound include 2-methyl-1-phenyl-2-morpholinopropan-1-one, 2-methyl-1-[4-(hexyl)phenyl]-2-morpholinopropan-1-one, 2-ethyl-2-dimethylamino-1-(4-morpholinophenyl)-butanone-1,

2-benzyl-2-dimethylamino-1-(4-morpholinophenyl)-butanone-1, and 2-(dimethylamino)-2-[(4-methylphenyl) methyl]-1-[4-(4-morpholinyl)phenyl]-1-butanone. Examples of a commercially available product of the α-aminoketone compound include Omnirad 907, Omnirad 369, Omnirad 369E, and Omnirad 379EG (all manufactured by IGM Resins B.V).

Examples of the acylphosphine compound include a compound represented by Formula (AP-1) or Formula (AP-2), and a compound represented by Formula (AP-1) is preferable.

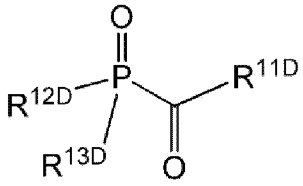

(AP-1)

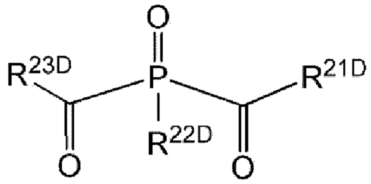

(AP-2)

In Formula (AP-1), $R^{11D}$ represents an alkyl group, an aryl group, or a heterocyclic group, and $R^{12D}$ and $R^{13D}$ each independently represent an alkyl group, an alkoxy group, an aryl group, an aryloxy group, a heterocyclic group, or a heterocyclic oxy group.

In Formula (AP-2), $R^{21D}$ and $R^{23D}$ each independently represent an alkyl group, an aryl group, or a heterocyclic group, and $R^{22D}$ represents an alkyl group, an alkoxy group, an aryl group, an aryloxy group, a heterocyclic group, or a heterocyclic oxy group.

The number of carbon atoms in the above-described alkyl group is preferably 1 to 20, more preferably 1 to 10, and still more preferably 1 to 8. The alkyl group may be linear, branched, or cyclic.

The number of carbon atoms in the above-described alkoxy group is preferably 1 to 20, more preferably 1 to 10, and still more preferably 1 to 8. The alkoxy group may be linear, branched, or cyclic.

The number of carbon atoms in the aryl group and the aryloxy group is preferably 6 to 20, more preferably 6 to 15, and still more preferably 6 to 10. The aryl group and the aryloxy group may be monocyclic or may be a fused ring.

The heterocyclic group and the heterocyclic oxy group are preferably a 5-membered ring or a 6-membered ring. The heterocyclic group and the heterocyclic oxy group may be a monocyclic ring or a fused ring. The number of carbon atoms constituting the ring of the heterocyclic group and the ring of the heterocyclic oxy group is preferably 1 to 30, more preferably 1 to 18, and still more preferably 1 to 12. The number of heteroatoms constituting the ring of the heterocyclic group and the ring of the heterocyclic oxy group is preferably 1 to 3. The heteroatom constituting the ring of the heterocyclic group and the ring of the heterocyclic oxy group is preferably a nitrogen atom, an oxygen atom, or a sulfur atom.

The above-described alkyl group, alkoxy group, aryl group, aryloxy group, heterocyclic group, and heterocyclic oxy group may be unsubstituted or may have a substituent. Examples of the substituent include the groups mentioned as the substituent which can be contained in the alkyl group represented by $R^{1D}$, $R^{2D}$, $R^{3D}$, and $R^{4D}$ described above.

Specific examples of the acylphosphine compound include the compounds described in paragraph 0079 to 0081 of JP2010-026094A. Examples of a commercially available product of the acylphosphine compound include Omnirad 819 and Omnirad TPO H (both manufactured by IGM Resins B.V).

Examples of a commercially available product of the α-hydroxyketone compound include Omnirad 184, Omnirad 1173, Omnirad 2959, and Omnirad 127 (all manufactured by IGM Resins B.V).

Examples of the oxime compound include compounds described in paragraph 0142 of WO2022/085485A, compounds described in JP5430746B, compounds described in JP5647738B, compounds represented by General Formula (1) and compounds described in paragraphs 0022 to 0024 of JP2021-173858A, and compounds represented by General Formula (1) and compounds described in paragraphs 0117 to 0120 of JP2021-170089A. Specific examples of the oxime compound include 3-benzoyloxyiminobutane-2-one, 3-acetoxyiminobutane-2-one, 3-propionyloxyiminobutane-2-one, 2-acetoxyiminopentane-3-one, 2-acetoxyimino-1-phenylpropane-1-one, 2-benzoyloxyimino-1-phenylpropane-1-one, 3-(4-toluene sulfonyloxy)iminobutane-2-one, 2-ethoxycarbonyloxyimino-1-phenylpropane-1-one, and 1-[4-(phenylthio)phenyl]-3-cyclohexyl-propane-1,2-dione-2-(O-acetyloxime). Examples of a commercially available product thereof include Irgacure OXE01, Irgacure OXE02, Irgacure OXE03, and Irgacure OXE04 (all of which are manufactured by BASF SE), TR-PBG-304 and TR-PBG-327 (manufactured by TRONLY), and ADEKA OPTOMER N-1919 (manufactured by ADEKA Corporation; photopolymerization initiator 2 described in JP2012-014052A). In addition, as the oxime compound, it is also preferable to use a compound having no colorability or a compound having high transparency and being resistant to discoloration. Examples of a commercially available product thereof include ADEKA ARKLS NCI-730, NCI-831, and NCI-930 (all of which are manufactured by ADEKA Corporation).

As the oxime compound, an oxime compound having a fluorene ring, an oxime compound having a skeleton in

which at least one benzene ring of a carbazole ring is a naphthalene ring, an oxime compound having a fluorine atom, an oxime compound having a nitro group, an oxime compound having a benzofuran skeleton, an oxime compound in which a substituent having a hydroxy group is bonded to a carbazole skeleton, or the compounds described in paragraphs 0143 to 0149 of WO2022/085485A can also be used.

The content of the photopolymerization initiator in the total solid content of the photocurable composition is preferably in a range of 0.1% to 30% by mass. The lower limit is preferably 0.5% by mass or more, more preferably 1% by mass or more, still more preferably 2% by mass or more, and even still more preferably 3% by mass or more. The upper limit is preferably 20% by mass or less, more preferably 15% by mass or less, and still more preferably 10% by mass or less. The photocurable composition according to the embodiment of the present invention may contain only one kind of photopolymerization initiator, or may contain two or more kinds of photopolymerization initiators. In a case of containing two or more kinds of photopolymerization initiators, it is preferable that the total content of the photopolymerization initiators is within the above-described range.

<<Sensitizer>>

The photocurable composition according to the embodiment of the present invention contains a sensitizer. As the sensitizer, a sensitizer including at least one compound S selected from a compound represented by Formula (s1) or a compound represented by Formula (s2) is used.

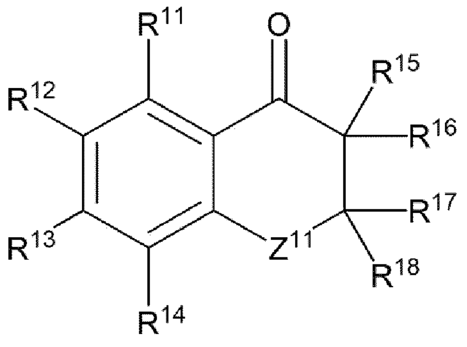

(s1)

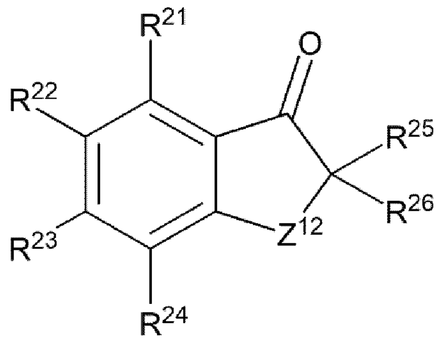

(s2)

in Formula (s1), $Z^{11}$ represents O, S, or $NR^{Z1}$, $R^{Z1}$ represents a hydrogen atom, an alkyl group, or an acyl group, $R^{11}$ to $R^{18}$ each independently represent a hydrogen atom or a substituent, two adjacent to each other among $R^{11}$ to $R^{14}$ may be linked to each other to form an aliphatic ring or an aromatic ring, and $R^{15}$ or $R^{16}$ and $R^{17}$ or $R^{18}$ may be linked to each other to form an aliphatic ring,

in Formula (s2), $Z^{12}$ represents O, S, or $NR^{Z2}$, $R^{Z2}$ represents a hydrogen atom, an alkyl group, or an acyl group, $R^{21}$ to $R^{26}$ each independently represent a hydrogen atom or a substituent, and two adjacent to each other among $R^{21}$ to $R^{24}$ may be linked to each other to form an aliphatic ring or an aromatic ring.

$Z^{11}$ in Formula (s1) represents O, S, or $NR^{Z1}$, where $R^{Z1}$ represents a hydrogen atom, an alkyl group, or an acyl group.

$Z^{11}$ is preferably O or S, and more preferably S.

The number of carbon atoms in the alkyl group represented by $R^{Z1}$ is preferably 1 to 20, more preferably 1 to 10, and still more preferably 1 to 8. The alkyl group may be linear, branched, or cyclic, and is preferably linear or branched.

The acyl group represented by $R^{Z1}$ preferably has 2 to 20 carbon atoms, more preferably has 2 to 10 carbon atoms, and still more preferably has 2 to 8 carbon atoms.

$R^{Z1}$ is preferably a hydrogen atom or an alkyl group.

Examples of the substituent represented by $R^{11}$ to $R^{18}$ in Formula (s1) include a halogen atom, an alkyl group, an aryl group, a heterocyclic group, a cyano group, a hydroxy group, a nitro group, an amino group, an alkoxy group, an aryloxy group, an amide group, an arylamino group, a ureido group, a sulfamoylamino group, an alkylthio group, an arylthio group, an alkoxycarbonylamino group, a sulfonamide group, a carbamoyl group, a sulfamoyl group, a sulfonyl group, an alkoxycarbonyl group, a heterocyclic oxy group, an acyloxy group, a carbamoyloxy group, a silyloxy group, an aryloxycarbonyl group, an aryloxycarbonylamino group, an imide group, a heterocyclic thio group, a sulfinyl group, a phosphoryl group, an acyl group, a carboxy group, and a sulfo group, and a halogen atom, an alkyl group, a cyano group, a hydroxy group, a nitro group, an amino group, an alkoxy group, an alkylthio group, an alkoxycarbonyl group, an acyloxy group, an acyl group, a carboxy group, or a sulfo group is preferable, a halogen atom, an alkyl group, or an alkoxy group is more

preferable, and a halogen atom or an alkyl group is still more preferable.

The number of carbon atoms in the alkyl group is preferably 1 to 10 and more preferably 1 to 5. The alkyl group may be any of linear, branched, and cyclic forms, but is preferably linear or branched and more preferably linear.

The number of carbon atoms in the alkoxy group is preferably 1 to 10 and more preferably 1 to 5. The alkoxy group may be linear, branched, or cyclic, and is preferably linear or branched and more preferably linear.

Examples of the halogen atom include a fluorine atom, a chlorine atom, a bromine atom, and an iodine atom.

It is preferable that at least one of $R^{11}$, $R^{12}$, $R^{13}$, or $R^{14}$ in Formula (s1) is a halogen atom or an alkyl group, and it is more preferable that at least one of $R^{12}$ or $R^{13}$ is a halogen atom or an alkyl group.

In Formula (s1), two adjacent to each other among $R^{11}$ to $R^{14}$ may be linked to each other to form an aliphatic ring or an aromatic ring. Examples of the ring structure in a case where these form a ring include an aliphatic ring of a 5- or 6-membered ring and an aromatic ring. The ring formed by bonding these may further have a substituent. Examples of the substituent include the above-described substituents.

In Formula (s1), $R^{15}$ or $R^{16}$ and $R^{17}$ or $R^{18}$ may be linked to each other to form an aliphatic ring. The aliphatic ring is preferably a 3- to 6-membered aliphatic ring and more preferably a 5- or 6-membered aliphatic ring. The ring formed by bonding these may further have a substituent. Examples of the substituent include the above-described substituents.

$Z^{12}$ in Formula (s2) represents O, S, or $NR^{Z2}$, where $R^{Z2}$ represents a hydrogen atom, an alkyl group, or an acyl group.

$Z^{12}$ is preferably O or S, and more preferably S.

The number of carbon atoms in the alkyl group represented by $R^{Z2}$ is preferably 1 to 20, more preferably 1 to 10, and still more preferably 1 to 8. The alkyl group may be linear, branched, or cyclic, and is preferably linear or branched.

The acyl group represented by $R^{Z2}$ preferably has 2 to 20 carbon atoms, more preferably has 2 to 10 carbon atoms, and still more preferably has 2 to 8 carbon atoms.

$R^{Z2}$ is preferably a hydrogen atom or an alkyl group.

Examples of the substituent represented by $R^{21}$ to $R^{26}$ in Formula (s2) include the groups shown as an example of the substituent represented by $R^{11}$ to $R^{18}$ in Formula (s1), and the same applies to the preferred range thereof.

It is preferable that at least one of $R^{21}$, $R^{22}$, $R^{23}$, or $R^{24}$ in Formula (s2) is a halogen atom or an alkyl group, and it is more preferable that at least one of $R^{22}$ or $R^{23}$ is a halogen atom or an alkyl group.

Two adjacent to each other among $R^{21}$ to $R^{24}$ in Formula (s2) may be linked to each other to form an aliphatic ring or an aromatic ring. Examples of the ring structure in a case where these form a ring include an aliphatic ring of a 5- or 6-membered ring and an aromatic ring. The ring formed by bonding these may further have a substituent. Examples of the substituent include the above-described substituents.

From the reason of further improving the light scattering properties of the obtained film and the adhesiveness to the support, the compound S is preferably a compound represented by Formula (s1). That is, the sensitizer contained in the photocurable composition according to the embodiment of the present invention preferably contains a compound represented by Formula (s1).

Specific examples of the compound S include compounds having structures represented by Formulae (Se-1) to (Se-5) described in Examples described later and compounds described in paragraphs 0036 to 0045 of JP2010-026094A.

The photocurable composition according to the embodiment of the present invention can further contain a sensitizer other than the compound S (hereinafter, also referred to as another sensitizer). Examples of the other sensitizers include a thioxanthone compound, a benzophenone compound, a 3-acylcoumarin compound, 3-(aroylmethylene)thiazoline, and an anthracene compound. Specific examples of these compounds include the compounds described in paragraphs 0049 to 0054 of JP2010-026094A.

The content of the sensitizer in the total solid content of the photocurable composition is preferably 0.1 to 20% by mass. The upper limit is preferably 10% by mass or less and more preferably 5% by mass or less. The lower limit is preferably 0.5% by mass or more and more preferably 1% by mass or more.

The content of the compound S in the total solid content of the photocurable composition is preferably 0.1 to 20% by mass. The upper limit is preferably 10% by mass or less and more preferably 5% by mass or less. The lower limit is preferably 0.5% by mass or more and more preferably 1% by mass or more.

The content of the compound S in the sensitizer contained in the photocurable composition is preferably 80% by mass or more, more preferably 90% by mass or more, and still more preferably 95% by mass or more. It is preferable that the sensitizer contained in the photocurable composition is substantially only the compound S. In the present specification, a case where the sensitizer is substantially only the compound S means that the content of the compound S in the sensitizer is 99% by mass or more, and the content is more preferably 99.9% by mass or more, and it is still more preferable that the sensitizer is only the compound S.

The proportion of the compound S to the photopolymerization initiator is preferably such that the compound S is 10 to 60 parts by mass with respect to 100 parts by mass of the photopolymerization initiator. The upper limit is preferably 50 parts by mass or less and more preferably 40 parts by mass or less. The lower limit thereof is preferably 20 parts by mass or more and more preferably 30 parts by mass or more.

The proportion of the compound S to the polymerizable monomer is preferably 1 to 30 parts by mass of the compound S with respect to 100 parts by mass of the polymerizable monomer. The upper limit thereof is preferably 20 parts by mass or less and more preferably 10 parts by mass or less. The lower limit is preferably 3 parts by mass or more and more preferably 5 parts by mass or more.
The sensitizer may be used alone or in combination of two or more kinds thereof. In a case where two or more kinds thereof are used, the total content thereof is preferably within the above-described range.

<<Solvent>>

The photocurable composition according to the embodiment of the present invention contains a solvent. Examples of the solvent include an organic solvent. Basically, the solvent is not particularly limited as long as it satisfies the solubility of the respective components and the application properties of the photocurable composition. Examples of the organic solvent include an ester-based solvent, a ketone-based solvent, an alcohol-based solvent, an amide-based solvent, an ether-based solvent, and a hydrocarbon-based solvent. The details of the organic solvent can be found in paragraph 0223 of WO2015/166779A, the content of which is incorporated herein by reference. In addition, an ester-based solvent in which a cyclic alkyl group is substituted or a ketone-based solvent in which a cyclic alkyl group is substituted can also be preferably used. Specific examples of the organic solvent include acetone, methyl ethyl ketone, cyclohexane, cyclohexanone, cyclopentanone, ethyl acetate, butyl acetate, cyclohexyl acetate, ethylene dichloride, tetrahydrofuran, toluene, ethylene glycol monomethyl ether, ethylene glycol monoethyl ether, ethylene glycol dimethyl ether, propylene glycol monomethyl ether, propylene glycol monoethyl ether, acetylacetone, diacetone alcohol, ethylene glycol monomethyl ether acetate, ethylene glycol ethyl ether acetate, ethylene glycol monoisopropyl ether, ethylene glycol monobutyl ether acetate, 3-methoxypropanol, 2-methoxyethanol, diethylene glycol monomethyl ether, diethylene glycol monoethyl ether, diethylene glycol dimethyl ether, diethylene glycol diethyl ether, propylene glycol monomethyl ether acetate, propylene glycol monoethyl ether acetate, 3-methoxy propyl acetate, N,N-dimethylformamide, dimethyl sulfoxide, γ-butyrolactone, methyl lactate, ethyl lactate, butyl diglycol acetate, 3-methoxy butyl acetate, 3-methoxy-N,N-dimethylpropanamide, 3-butoxy-N,N-dimethylpropanamide, γ-butyrolactone, sulfolane, anisole, 1,4-diacetoxybutane, diethylene glycol monoethyl ether acetate, butane-1,3-diyl diacetate, dipropylene glycol methyl ether acetate, 2-methoxypropyl acetate, 2-methoxy-1-propanol, and isopropyl alcohol. Among these organic solvents, one kind can be used alone, or a mixture of two or more kinds can be used.
It is preferable that the solvent used in the photocurable composition according to the embodiment of the present invention has a boiling point of higher than 90°C, from the reason in which the light scattering properties of the obtained film can be further improved. The boiling point of the solvent is preferably 100°C or higher and more preferably 110°C or higher.
In the present invention, an organic solvent having a low metal content is preferably used. For example, the metal content in the organic solvent is preferably 10 mass parts per billion (ppb) or less. Optionally, an organic solvent having a metal content at a mass parts per trillion (ppt) level may be used. For example, such an organic solvent is available from Toyo Gosei Co., Ltd. (The Chemical Daily, November 13, 2015).
Examples of a method for removing impurities such as a metal from the organic solvent include distillation (such as molecular distillation and thin-film distillation) and filtration using a filter. The filter pore size of the filter used for the filtration is preferably 10 μm or less, more preferably 5 μm or less, and still more preferably 3 μm or less. As a material of the filter, polytetrafluoroethylene, polyethylene, or nylon is preferable.
The organic solvent may include an isomer (a compound having the same number of atoms and a different structure). In addition, only one kind of isomer may be included, or a plurality of isomers may be included.
The organic solvent preferably has the content of peroxides of 0.8 mmol/L or less, and more preferably, the organic solvent does not substantially contain peroxides.
A content of the solvent in the photocurable composition is preferably 10% to 95% by mass. The lower limit is preferably 15% by mass or more, more preferably 20% by mass or more, still more preferably 25% by mass or more, even more preferably 30% by mass or more, and still even more preferably 40% by mass or more. The upper limit is preferably 90% by mass or less, more preferably 85% by mass or less, and still more preferably 80% by mass or less.
The content of the solvent having a boiling point of lower than 90°C in the solvent contained in the photocurable composition is preferably 20% by mass or less, more preferably 10% by mass or less, and still more preferably 5% by mass or less. It is also preferable that the solvent contained in the photocurable composition does not substantially contain a solvent having a boiling point of lower than 90°C. In the present specification, a case where the solvent contained in the photocurable composition does not substantially contain a solvent having a boiling point of lower than 90°C means that the content of the solvent having a boiling point of lower than 90°C in the solvent contained in the photocurable composition is 0.5% by mass or less, preferably 0.1% by mass or less, and it is more preferable that the solvent having a boiling point of lower than 90°C is not contained.
As the solvent, one kind may be used alone, or two or more kinds may be used in combination. In a case where two or more solvents are used in combination, it is preferable that the total content of the solvents is within the above-described

range.

<<Polyalkyleneimine>>

The photocurable composition according to the embodiment of the present invention can also contain polyalkyleneimine. The polyalkyleneimine is a polymer obtained by a ring-opening polymerization of alkyleneimine. The polyalkyleneimine is a polymer having a branched structure including each of a primary amino group, a secondary amino group, and a tertiary amino group. The number of carbon atoms in the alkyleneimine is preferably 2 to 6, more preferably 2 to 4, still more preferably 2 or 3, and particularly preferably 2.

A molecular weight of the polyalkyleneimine is preferably 200 or more and more preferably 250 or more. The upper limit thereof is preferably 100,000 or less, more preferably 50,000 or less, still more preferably 10,000 or less, and particularly preferably 2,000 or less. With regard to the value of the molecular weight of the polyalkyleneimine, in a case where the molecular weight can be calculated from a structural formula, the molecular weight of the polyalkyleneimine is a value calculated from the structural formula. On the other hand, in a case where the molecular weight of the specific amine compound cannot be calculated from the structural formula or is difficult to calculate, a value of a number-average molecular weight measured by a boiling point increase method is used. In addition, even in a case where the molecular weight of the polyalkyleneimine cannot be measured by the boiling point increase method or is difficult to be measured, a value of a number-average molecular weight measured by a viscosity method is used. In addition, in a case where the molecular weight of the polyalkyleneimine cannot be measured by the viscosity method or is difficult to be measured by the viscosity method, a value of a number-average molecular weight in terms of polystyrene through measurement by a gel permeation chromatography (GPC) method is used.

An amine value of the polyalkyleneimine is preferably 5 mmol/g or more, more preferably 10 mmol/g or more, and still more preferably 15 mmol/g or more.

Specific examples of the alkyleneimine include ethyleneimine, propyleneimine, 1,2-butyleneimine, and 2,3-butyleneimine, and ethyleneimine or propyleneimine is preferable and ethyleneimine is more preferable. The polyalkyleneimine is particularly preferably polyethyleneimine. In addition, the polyethyleneimine preferably includes the primary amino group in an amount of 10 mol% or higher, more preferably includes the primary amino group in an amount of 20 mol% or higher, and still more preferably includes the primary amino group in an amount of 30 mol% or higher with respect to the total of the primary amino group, the secondary amino group, and the tertiary amino group. Examples of a commercially available product of the polyethyleneimine include EPOMIN SP-003, SP-006, SP-012, SP-018, SP-200, and P-1000 (all of which are manufactured by NIPPON SHOKUBAI Co., Ltd.).

A content of the polyalkyleneimine in the total solid content of the photocurable composition is preferably 0.05% to 5% by mass. The lower limit is preferably 0.10% by mass or more and more preferably 0.15% by mass or more. The upper limit thereof is preferably 4% by mass or less and more preferably 3% by mass or less. In addition, the content of the polyalkyleneimine is preferably 0.5 to 10 parts by mass with respect to 100 parts by mass of the specific particles. The lower limit is preferably 0.7 parts by mass or more and more preferably 1.0 parts by mass or more. The upper limit is preferably 5 parts by mass or less and more preferably 3 parts by mass or less. The polyalkyleneimine may be used alone or in combination of two or more kinds thereof. In a case where two or more kinds thereof are used, the total content thereof is preferably within the above-described range.

<<Pigment derivative>>

The photocurable composition of the embodiment of the present invention can further contain a pigment derivative. Examples of the pigment derivative include a compound having a structure in which a portion of a chromophore is substituted with an acidic group, a basic group, or a phthalimidomethyl group. Examples of the acid group include a sulfo group, a carboxy group, and a quaternary ammonium salt group thereof. Examples of the basic group include an amino group. The details of the pigment derivative can be found in paragraphs 0162 to 0183 of JP2011-252065A, the content of which is incorporated herein by reference. The content of the pigment derivative is preferably 1 to 30 parts by mass and more preferably 3 to 20 parts by mass with respect to 100 parts by mass of the pigment. Among these pigment derivatives, one kind may be used alone, or two or more kinds may be used in combination. In a case where two or more pigment derivatives are used in combination, it is preferable that the total content of the pigment derivatives is within the above-described range.

<<Anti-coloring agent>>

The photocurable composition of the embodiment of the present invention can contain an anti-coloring agent. Examples of the anti-coloring agent include a phenol compound, a phosphite compound, and a thioether compound. Among these, a phenol compound having a molecular weight of 500 or more, a phosphite compound having a molecular

weight of 500 or more, or a thioether compound having a molecular weight of 500 or more is preferable. The anti-coloring agent is preferably a phenol compound, and more preferably a phenol compound having a molecular weight of 500 or more.

Examples of the phenol compound include a hindered phenol compound. In particular, a compound having a substituent at a position (ortho position) adjacent to a phenolic hydroxy group is preferable. As the substituent, a substituted or unsubstituted alkyl group having 1 to 22 carbon atoms is preferable. In addition, a compound having a phenol group and a phosphite group in the same molecule is also preferable.

As the phenolic hydroxy group-containing compound, a polysubstituted phenol compound is suitably used. The polysubstituted phenol compound can be classified into three types (a hindered type represented by the following Formula (A), a semi-hindered type represented by the following Formula (B), and a less-hindered type represented by the following Formula (C)) having different substitution sites and different structures in terms of reactivity to a peroxy radical trapped for the stable generation of a phenoxy radical.

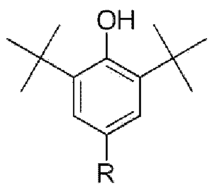
(A)

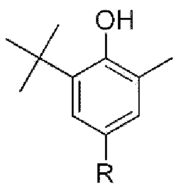
(B)

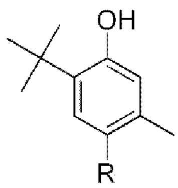
(C)

In Formulae (A) to (C), R represents a hydrogen atom or a substituent. R represents preferably a hydrogen atom, a halogen atom, an amino group which may have a substituent, an alkyl group which may have a substituent, an aryl group which may have a substituent, an alkoxy group which may have a substituent, an aryloxy group which may have a substituent, an alkylamino group which may have a substituent, an arylamino group which may have a substituent, an alkylsulfonyl group which may have a substituent, or an arylsulfonyl group which may have a substituent, and more preferably an amino group which may have a substituent, an alkyl group which may have a substituent, an aryl group which may have a substituent, an alkoxy group which may have a substituent, an aryloxy group which may have a substituent, an alkylamino group which may have a substituent, or an arylamino group which may have a substituent.

As a further preferable form, a composite anti-coloring agent in which a plurality of structures represented by Formulae (A) to (C) described above, having an antioxidant function, are present in the same molecule is still more preferable. Specifically, a compound in which 2 to 4 structures represented by Formulae (A) to (C) described above, having an antioxidant function, are present in the same molecule is preferable. Among these, the semi-hindered type represented by Formula (B) is more preferable. Representative examples of a commercially available product of (A) include SUMILIZER BHT (manufactured by Sumitomo Chemical Co., Ltd.), IRGANOX 1010 and 1222 (manufactured by BASF), and ADEKA STAB AO-20, AO-50, and AO-60 (manufactured by ADEKA Corporation). Representative examples of a commercially available product of (B) include SUMILIZER BBM-S (manufactured by Sumitomo Chemical Co., Ltd.), IRGANOX 245 (manufactured by BASF), and ADEKA STAB AO-80 (manufactured by ADEKA Corporation). Representative examples of a commercially available product of (C) include ADEKA STAB AO-30 and AO-40 (manufactured by ADEKA Corporation).

Examples of the phosphite compound and the thioether compound include compounds described in paragraphs 0213 and 0214 of WO2017/159910A and commercially available products. In addition to the above-described representative examples, examples of a commercially available product of the anti-coloring agent include ADEKA STAB AO-50F, ADEKA STAB AO-60G, and ADEKA STAB AO-330 (manufactured by ADEKA Corporation). In addition, as the anti-coloring agent, compounds described in paragraphs 0211 to 0223 of JP2015-034961 can also be used.

A content of the anti-coloring agent in the total solid content of the photocurable composition is preferably 0.01 to 20% by mass, more preferably 0.1 to 15% by mass, and still more preferably 0.3 to 5% by mass. As the anti-coloring agent, one kind may be used alone, or two or more kinds may be used in combination. In a case where two or more kinds thereof are used in combination, it is preferable that the total content of the two or more kinds thereof is within the above-described range.

<<Ultraviolet absorber>>

The photocurable composition of the embodiment of the present invention can contain an ultraviolet absorber. Examples of the ultraviolet absorber, include a conjugated diene compound, an aminobutadiene compound, a methyldibenzoyl compound, a coumarin compound, a salicylate compound, a benzophenone compound, a benzotriazole compound, an acrylonitrile compound, and a hydroxyphenyltriazine compound. Specific examples of such a compound

include compounds described in paragraphs 0038 to 0052 of JP2009-217221A, paragraphs 0052 to 0072 of JP2012-208374A, paragraphs 0317 to 0334 of JP2013-068814A, paragraphs 0061 to 0080 of JP2016-162946A, and paragraph 0022 to 0024 of WO2021/132247A, the contents of which are incorporated herein by reference. Examples of a commercially available product of the ultraviolet absorber include UV-503 (manufactured by Daito Chemical Co., Ltd.), Tinuvin series and Uvinul series manufactured by BASF SE, and Sumisorb series manufactured by Sumika Chemtex Co., Ltd. In addition, examples of the benzotriazole compound include MYUA series manufactured by Miyoshi Oil & Fat Co., Ltd. (The Chemical Daily, February 1, 2016). In addition, as the ultraviolet absorber, compounds described in paragraphs 0049 to 0059 of JP6268967B, compounds described in paragraphs 0059 to 0076 of WO2016/181987A, and thioaryl group-substituted benzotriazole type ultraviolet absorbers described in WO2020/137819A can also be used.

The maximal absorption wavelength of the ultraviolet absorber is preferably present in a wavelength range of 200 to 340 nm, more preferably present in a wavelength range of 210 to 320 nm, and still more preferably present in a wavelength range of 220 to 300 nm.

A content of the ultraviolet absorber in the total solid content of the photocurable composition is preferably 0.1 to 10% by mass, more preferably 0.1 to 7% by mass, still more preferably 0.1 to 5% by mass, and particularly preferably 0.1 to 3% by mass. As the ultraviolet absorber, one kind may be used alone, or two or more kinds may be used in combination. In a case where two or more kinds thereof are used in combination, it is preferable that the total content of the two or more kinds thereof is within the above-described range.

It is also preferable that the photocurable composition according to the embodiment of the present invention substantially does not include an ultraviolet absorber. In the present specification, the phrase "does not substantially contain an ultraviolet absorber" means that the content of the ultraviolet absorber in the total solid content of the photocurable composition is 0.05% by mass or less, preferably 0.01% by mass or less, and it is more preferable that the ultraviolet absorber is not contained.

<<Silane coupling agent>>

The photocurable composition of the embodiment of the present invention can contain a silane coupling agent. Examples of the silane coupling agent include a silane compound having a hydrolyzable group. The silane coupling agent is preferably a silane compound having a hydrolyzable group and other functional groups. The hydrolyzable group refers to a substituent directly linked to a silicon atom and capable of forming a siloxane bond due to at least one of a hydrolysis reaction or a condensation reaction. Examples of the hydrolyzable group include a halogen atom, an alkoxy group, and an acyloxy group, and an alkoxy group is preferable. The silane coupling agent is preferably a compound having an alkoxysilyl group. Examples of the functional group other than a hydrolyzable group include a vinyl group, a (meth)allyl group, a (meth)acryloyl group, a (meth)acryloyloxy group, a mercapto group, an epoxy group, an oxetanyl group, an amino group, an ureido group, a sulfide group, an isocyanate group, and a phenyl group. Among these, an amino group, a (meth)acryloyl group, a (meth)acryloyloxy group, or an epoxy group is preferable. Specific examples of the silane coupling agent include the compounds described in paragraph 0177 of WO2022/085485A.

A content of the silane coupling agent in the total solid content of the photocurable composition is preferably 0.01 to 10% by mass, more preferably 0.1 to 7% by mass, and still more preferably 1 to 5% by mass. As the silane coupling agent, one kind may be used alone, or two or more kinds may be used in combination. In a case where two or more kinds thereof are used in combination, it is preferable that the total content of the two or more kinds thereof is within the above-described range.

<<Polymerization inhibitor>>

The photocurable composition of the embodiment of the present invention can contain a polymerization inhibitor. Examples of the polymerization inhibitor include hydroquinone, p-methoxyphenol, di-tert-butyl-p-cresol, pyrogallol, tert-butyl catechol, 1,4-benzoquinone, 4,4'-thiobis(3-methyl-6-tert-butylphenol), 2,2'-methylenebis(4-methyl-6-t-butylphenol), and an N-nitrosophenylhydroxylamine salt (an ammonium salt, a cerous salt, or the like), and p-methoxyphenol is preferable. A content of the polymerization inhibitor in the total solid content of the photocurable composition is preferably 0.0001 to 5% by mass, and more preferably 0.0001 to 1% by mass.

<<Chain transfer agent>>

The photocurable composition according to the embodiment of the present invention can contain a chain transfer agent. As the chain transfer agent, the compound described in paragraph 0225 of WO2017/159190A can be used. A content of the chain transfer agent in the total solid content of the photocurable composition is preferably 0.2% to 5.0% by mass and more preferably 0.4% to 3.0% by mass. In addition, the content of the chain transfer agent is preferably 1 to 40 parts by mass and more preferably 2 to 20 parts by mass with respect to 100 parts by mass of the polymerizable monomer.

As the chain transfer agent, one kind may be used alone, or two or more kinds may be used in combination. In a case where two or more kinds thereof are used in combination, it is preferable that the total content of the two or more kinds thereof is within the above-described range.

<<Surfactant>>

The photocurable composition of the embodiment of the present invention can contain a surfactant. As the surfactant, various surfactants such as a fluorine-based surfactant, a nonionic surfactant, a cationic surfactant, an anionic surfactant, or a silicone-based surfactant can be used. The surfactant is preferably a silicone-based surfactant or a fluorine-based surfactant. With regard to the surfactant, surfactants described in paragraph Nos. 0238 to 0245 of WO2015/166779A can be referred to, the contents of which are incorporated herein by reference.

As the fluorine-based surfactant, the compounds described in paragraphs 0167 to 0173 of WO2022/085485A can be used.

Examples of the nonionic surfactant include the compounds described in paragraph 0174 of WO2022/085485A.

Examples of the silicone-based surfactant include DOWSIL SH8400, SH 8400 FLUID, FZ-2122, 67 Additive, 74 Additive, M Additive, and SF 8419 OIL (all of which are manufactured by Dow·TORAY); TSF-4300, TSF-4445, TSF-4460, and TSF-4452 (all of which are manufactured by Momentive Performance Materials Inc.); KP-341, KF-6000, KF-6001, KF-6002, and KF-6003 (all of which are manufactured by Shin-Etsu Chemical Co., Ltd.); and BYK-307, BYK-322, BYK-323, BYK-330, BYK-333, BYK-3760, and BYK-UV3510 (all of which are manufactured by BYK-Chemie).

As the silicone-based surfactant, a compound having the following structure can also be used.

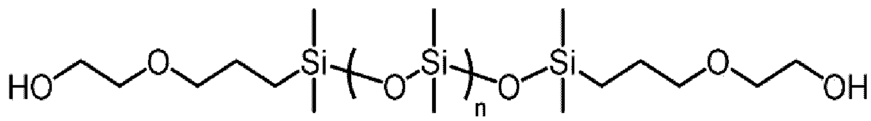

A content of the surfactant in the total solid content of the photocurable composition is preferably 0.001% to 2.0% by mass and more preferably 0.005% to 1.0% by mass. As the surfactant, one kind may be used alone, or two or more kinds may be used in combination. In a case where two or more kinds thereof are used in combination, it is preferable that the total content of the two or more kinds thereof is within the above-described range.

<<Other additives>>

The photocurable composition according to the embodiment of the present invention can contain known additives such as a plasticizer and an oil sensitizer. Examples of the plasticizer include dioctyl phthalate, didodecyl phthalate, triethylene glycol dicaprylate, dimethyl glycol phthalate, tricresyl phosphate, dioctyl adipate, dibutyl sebacate, and triacetyl glycerin.

<Storage container>

A storage container of the photocurable composition according to the embodiment of the present invention is not particularly limited, and a known storage container can be used. In addition, as the storage container, the container described in paragraph 0187 of WO2022/085485A can be used.

<Method for preparing photocurable composition>

The photocurable composition of the embodiment of the present invention can be prepared by mixing the above-mentioned components. During the preparation of the photocurable composition, the respective components may be mixed with each other collectively, or may be mixed with each other sequentially after at least dissolved or dispersed in a solvent. In addition, during mixing, the order of addition or working conditions are not particularly limited.

It is preferable that a process of dispersing the particles is provided in order to prepare the photocurable composition. Examples of a mechanical force used for dispersing the particles in the process of dispersing the particles include compression, squeezing, impact, shearing, and cavitation. Specific examples of these processes include a beads mill, a sand mill, a roll mill, a ball mill, a paint shaker, a microfluidizer, a high-speed impeller, a sand grinder, a flow jet mixer, high-pressure wet atomization, and ultrasonic dispersion. **In** addition, in the pulverization of the particles in a sand mill (beads mill), it is preferable to perform treatment under the condition for increasing a pulverization efficiency by using beads having small diameters; increasing the filling rate of the beads; or the like. Incidentally, it is preferable to remove coarse particles by filtration, centrifugation, or the like after the pulverization treatment. In addition, as the process and the

dispersing machine for dispersing the particles, the process and the dispersing machine described in "Dispersion Technology Comprehension, published by Johokiko Co., Ltd., July 15, 2005", "Actual comprehensive data collection on dispersion technology and industrial application centered on suspension (solid/liquid dispersion system), published by Publication Department, Management Development Center, October 10, 1978", and paragraph 0022 of JP2015-157893A can be suitably used. In addition, in the process of dispersing the particles, the particles may be miniaturized in a salt milling step. A material, a device, process conditions, and the like used in the salt milling step can be found in, for example, JP2015-194521A and JP2012-046629A.

It is preferable that, in the preparation of the photocurable composition, the photosensitive coloring composition is filtered through a filter for the purpose of removing foreign matters, reducing defects, or the like. As the filter, any filter which is used in the related art for filtering or the like can be used without any particular limitation. Examples of a material of the filter include: a fluororesin such as polytetrafluoroethylene (PTFE); a polyamide resin such as nylon (for example, nylon-6 or nylon-6,6); and a polyolefin resin (including a polyolefin resin having a high density and an ultrahigh molecular weight) such as polyethylene or polypropylene (PP). Among these materials, polypropylene (including high-density polypropylene) or nylon is preferable.

The pore size of the filter is preferably 0.01 to 10.0 μm, more preferably 0.05 to 3.0 μm, and still more preferably about 0.1 to 2.0 μm. With regard to the pore size value of the filter, reference can be made to a nominal value of filter manufacturers. As the filter, various filters provided by Nihon Pall Corporation (DFA4201NIEY and the like), Toyo Roshi Kaisha., Ltd., Nihon Entegris K.K. (formerly Nippon Microlith Co., Ltd.), Kitz Micro Filter Corporation, and the like can be used.

It is preferable that a fibrous filter material is used as the filter. Examples of the fibrous filter material include polypropylene fiber, nylon fiber, and glass fiber. Examples of a commercially available product include SBP type series (SBP008 and the like), TPR type series (TPR002, TPR005, and the like), or SHPX type series (SHPX003 and the like), all manufactured by Roki Techno Co., Ltd.

In a case where a filter is used, a combination of different filters (for example, a first filter and a second filter) may be used. In this case, the filtering using each of the filters may be performed once, or twice or more. In addition, a combination of filters having different pore sizes in the above-described range may be used. In addition, the filtering using the first filter may be performed only on the dispersion liquid, and the filtering using the second filter may be performed on a mixture of the dispersion liquid and other components.

<Film>

The film according to the embodiment of the present invention is a film formed of the above-described photocurable composition according to the embodiment of the present invention.

The maximum value of transmittance of the film according to the embodiment of the present invention with respect to light in a wavelength range of 400 to 700 nm is preferably 80% or less, more preferably 70% or less, still more preferably 60% or less, and particularly preferably 50% or less. The lower limit of the above-described maximum value of the light transmittance is preferably 10% or more, more preferably 15% or more, and still more preferably 20% or more.

The maximum value of transmittance of the film according to the embodiment of the present invention with respect to light in a wavelength range of 400 to 1000 nm is preferably 80% or less, more preferably 70% or less, still more preferably 60% or less, and particularly preferably 50% or less. The lower limit of the above-described maximum value of the light transmittance is preferably 10% or more, more preferably 15% or more, and still more preferably 20% or more.

From the viewpoint of light scattering properties, it is preferable that a phase-separated structure of a first phase containing the above-described particles A and a second phase having a lower content of the particles A than that of the first phase is formed in the film according to the embodiment of the present invention. In addition, the above-described phase-separated structure is preferably a sea-island structure or a co-continuous phase structure. By forming these phase-separated structures, light can be effectively scattered between the first phase and the second phase, and particularly excellent light scattering properties can be easily obtained. In the sea-island structure, the second phase may form the sea and the first phase may form the island, or the first phase may form the sea and the second phase may form the island. The case where the first phase forms the sea and the second phase forms the island is preferable from the viewpoint of transmittance. The case where the first phase forms the island and the second phase forms the sea is preferable from the viewpoint of angle dependence.

A haze of the film according to the embodiment of the present invention based on JIS K 7136 is preferably 30% to 100%. The upper limit is preferably 99% or less, more preferably 95% or less, and still more preferably 90% or less. The lower limit is preferably 35% or more, more preferably 40% or more, and still more preferably 50% or more. In a case where the haze of the film is within the above-described range, a sufficient light scattering ability can be obtained while securing a sufficient light transmission amount.

The value of L* of the film according to the embodiment of the present invention in the L*a*b* color system of CIE 1976 is preferably 35 to 100. The value of L* is preferably 40 or higher, more preferably 50 or higher, and still more

preferably 60 or higher. According to this aspect, a film having excellent whiteness can be formed. In addition, the value of L* is preferably 95 or lower, more preferably 90 or lower, and still more preferably 85 or lower. According to this aspect, a film having appropriate visible transparency can be used.

The value of a* is preferably -15 or more, more preferably -10 or more, and still more preferably -5 or more. In addition, the value of a* is preferably 10 or lower, more preferably 5 or lower, and still more preferably 0 or lower. According to this aspect, a film having excellent whiteness can be formed.

The value of b* is preferably -35 or more, more preferably -30 or more, and still more preferably -25 or more. In addition, the value of b* is preferably 20 or lower, more preferably 10 or lower, and still more preferably 0 or lower. According to this aspect, a film having excellent whiteness can be formed.

A thickness of the film according to the embodiment of the present invention is preferably 1 to 50 μm. The upper limit of the film thickness is preferably 40 μm or less, more preferably 35 μm or less, and still more preferably 30 μm or less. The lower limit of the film thickness is preferably 1 μm or more, more preferably 2 μm or more, and still more preferably 3 μm or more. In a case where the film thickness is within the above-described range, a sufficient light scattering ability can be obtained. Furthermore, an effect of improving a device optical sensitivity by reducing the thickness of a sensor and suppressing crosstalk can also be expected.

The film according to the embodiment of the present invention has high light scattering properties, and is preferably used as a light scattering film. For example, the film according to the embodiment of the present invention can be suitably used for a scattering layer for a light emitting element, a scattering layer for a display element, a scattering layer for an ambient optical sensor, and the like.

The film according to the embodiment of the present invention can also be suitably used for a head-mounted display. The head-mounted display includes a display element, an eyepiece unit, a light source, a projection unit, and the like, and can be used at any position inside, between, and among them. Examples of the head-mounted display include head-mounted displays described in JP2019-061199A, JP2021-032975A, JP2019-032434A, JP2018-018077A, JP2016-139112A, US2021/0063745A, CN112394509B, US10921499B, KR10-2018-0061467A, JP2018-101034A, JP2020-101671A, TW2020-28805A, and the like.

<Method for manufacturing film>

The film according to the embodiment of the present invention can be formed through a step of applying the photocurable composition according to the embodiment of the present invention to a support. The method of manufacturing the film may further include a step of forming a pattern. Examples of the pattern forming method include a pattern forming method using a photolithography method.

It is preferable that the pattern forming method using a photolithography method includes: a step (exposure step) of exposing the composition layer, which is formed by applying the photocurable composition according to the embodiment of the present invention onto the support, in a patterned manner; and a step (development step) of forming a pattern by removing a non-exposed portion of the composition layer for development. Optionally, the pattern forming method may further include a step (post-baking step) of baking the developed pattern. Hereinafter, the respective steps will be described.

The support to which the photocurable composition is applied is not particularly limited. A substrate formed of a material such as silicon, non-alkali glass, soda glass, PYREX (registered trade name) glass, or quartz glass is shown as an example. For example, an organic film or an inorganic film may be formed on the substrate. Examples of a material of the organic film include a resin. In addition, as the support, a substrate formed of the resin can also be used. In addition, a charge coupled device (CCD), a complementary metal-oxide semiconductor (CMOS), a transparent conductive film, or the like may be formed on the support. In addition, a black matrix that separates pixels from each other may be formed on the support. In addition, optionally, an undercoat layer may be provided on the support to improve adhesiveness with a layer above the support, to prevent diffusion of materials, or to make a surface of the substrate flat. In addition, in a case where a glass substrate is used as the support, it is preferable that an inorganic film is formed on the glass substrate or the glass substrate may be dealkalized to be used.

As a method for applying the photocurable composition onto the support, a known method can be used. Examples thereof include a dropping method (drop casting); a slit coating method; a spray method; a roll coating method; a spin coating method (spin coating); a cast coating method; a slit and spin method; a pre-wet method (for example, a method described in JP2009-145395A), various printing methods such as an ink jet (for example, on-demand type, piezo type, thermal type), a discharge printing such as nozzle jet, a flexo printing, a screen printing, a gravure printing, a reverse offset printing, and a metal mask printing; a transfer method using molds and the like; and a nanoimprinting method. The application method using an ink jet method is not particularly limited, and examples thereof include a method (in particular, pp. 115 to 133) described in "Extension of Use of Ink Jet - Infinite Possibilities in Patent-" (February, 2005, S.B.Research Co., Ltd.) and methods described in JP2003-262716A, JP2003-185831A, JP2003-261827A, JP2012-126830A, and JP2006-169325A. From the viewpoint of suitability for application, the application using a spin coating method is

preferably spin coating at a range of 300 to 6000 rpm and more preferably spin coating at a range of 400 to 3000 rpm. In addition, the temperature of the support during spin coating is preferably 10°C to 100°C and more preferably 20°C to 70°C. In a case where the temperature of the support is in the above-described range, a film having excellent application uniformity is likely to be formed. In a case where the drop casting method is used, it is preferable that a drop range of the photocurable composition in which a photoresist is used as a partition wall is formed on the support such that a film having a predetermined uniform film thickness can be obtained. A desired film thickness can be obtained by controlling the drop amount and concentration of solid contents of the photocurable composition and the area of the drop range.

The composition layer formed on the support may be dried (pre-baked). For example, it is preferable that the dry is performed under pre-baking conditions of a temperature of 60°C to 150°C and 30 seconds to 15 minutes.

In the exposure step, the composition layer is exposed in a patterned manner. For example, the composition layer can be exposed in a pattern shape using an exposure device such as a stepper through a mask having a predetermined mask pattern. Thus, the exposed portion can be cured. Examples of the radiation (light) which can be used during the exposure include g-rays and i-rays. In addition, light (preferably light having a wavelength of 180 to 300 nm) having a wavelength of 300 nm or less can also be used. Examples of the light having a wavelength of 300 nm or less include KrF-rays (wavelength: 248 nm) and ArF-rays (wavelength: 193 nm), and KrF-rays (wavelength: 248 nm) are preferable.

In a case of exposure, the composition layer may be irradiated with light continuously to expose the composition layer, or the composition layer may be irradiated with light in a pulse to expose the composition layer (pulse exposure). The pulse exposure refers to an exposing method in which exposing is performed by repeated light irradiation and resting in a short cycle (for example, millisecond-level or less). In a case of the pulse exposure, the pulse width is preferably 100 nanoseconds (ns) or less, more preferably 50 nanoseconds or less, and still more preferably 30 nanoseconds or less. The lower limit of the pulse width is not particularly limited, and can be 1 femtosecond (fs) or more or 10 femtoseconds or more. The frequency is preferably 1 kHz or more, more preferably 2 kHz or more, and still more preferably 4 kHz or more. The upper limit of the frequency is preferably 50 kHz or less, more preferably 20 kHz or less, and still more preferably 10 kHz or less. The maximum instantaneous illuminance is preferably 50,000,000 $W/m^2$ or more, more preferably 100,000,000 $W/m^2$ or more, and still more preferably 200,000,000 $W/m^2$ or more. The upper limit of the maximum instantaneous illuminance is preferably 1,000,000,000 $W/m^2$ or less, more preferably 800,000,000 $W/m^2$ or less, and still more preferably 500,000,000 $W/m^2$ or less. Furthermore, the pulse width is a time during which light is radiated in the pulse period. The frequency is the number of pulse periods per second. The maximum instantaneous illuminance is average illuminance within the time during which light is radiated in the pulse period. The pulse period is a period in which irradiation with light and resting are set as one cycle in the pulse exposure.

The irradiation dose (exposure dose) is preferably 0.03 to 2.5 $J/cm^2$, more preferably 0.05 to 1.0 $J/cm^2$, and still more preferably 0.08 to 0.5 $J/cm^2$. The oxygen concentration in a case of the exposure can be appropriately selected. For example, the exposure may be performed in air, in a low-oxygen atmosphere having an oxygen concentration of 19 vol% or less (for example, 15 vol%, 5 vol%, or substantially oxygen-free), or in a high-oxygen atmosphere having an oxygen concentration of more than 21 vol% (for example, 22 vol%, 30 vol%, or 50 vol%). In addition, the exposure illuminance can be appropriately set, and is preferably selected in a range of 1,000 to 100,000 $W/m^2$. Appropriate conditions of each of the oxygen concentration and the exposure illuminance may be combined, and for example, a combination of the oxygen concentration of 10% by volume and the illuminance of 10,000 $W/m^2$, a combination of the oxygen concentration of 35% by volume and the illuminance of 20,000 $W/m^2$, or the like is available.

In the development step, a pattern is formed by removing a non-exposed portion of the exposed composition layer by development. The non-exposed portion of the composition layer can be removed by development using a developer. As a result, a non-exposed portion of the composition layer in the exposure step is eluted into the developer, and only the photocured portion remains on the support. The temperature of the developer is preferably, for example, 20°C to 30°C. The development time is preferably 20 to 180 seconds. In addition, in order to further improve residues removing properties, a step of shaking the developer off per 60 seconds and supplying a new developer may be repeated multiple times.

Examples of the developer include an organic solvent and an alkali developer, and an alkali developer is preferably used. As the alkali developer, an alkaline aqueous solution (alkali developer) in which an alkaline agent is diluted with pure water is preferable. Examples of the alkaline agent include organic alkaline compounds such as ammonia, ethylamine, diethylamine, dimethylethanolamine, diglycol amine, diethanolamine, hydroxyamine, ethylenediamine, tetramethylammonium hydroxide, tetraethylammonium hydroxide, tetrapropylammonium hydroxide, tetrabutylammonium hydroxide, ethyltrimethylammonium hydroxide, benzyltrimethylammonium hydroxide, dimethylbis(2-hydroxyethyl)ammonium hydroxide, choline, pyrrole, piperidine, and 1,8-diazabicyclo[5.4.0]-7-undecene, and inorganic alkaline compounds such as sodium hydroxide, potassium hydroxide, sodium carbonate, sodium hydrogen carbonate, sodium silicate, and sodium metasilicate. In consideration of environmental aspects and safety aspects, the alkaline agent is preferably a compound having a high molecular weight. The concentration of the alkaline agent in the alkaline aqueous solution is preferably 0.001% to 10% by mass and more preferably 0.01% to 1% by mass. The developer may contain a surfactant. Examples of the surfactant include the surfactants described above. Among these, a nonionic surfactant is

preferable. From the viewpoint of transportation, storage, and the like, the developer may be first produced as a concentrated solution and then diluted to a concentration required upon the use. The dilution factor is not particularly limited and, for example, can be set to be in a range of 1.5 to 100 times. In a case where the alkaline aqueous solution is used as a developer, it is preferable that the layer is washed (rinsed) with pure water after development. In addition, it is preferable that the rinsing is performed by supplying a rinsing liquid to the composition layer after development while rotating the support on which the composition layer after development is formed. In addition, it is preferable that the rinsing is performed by moving a nozzle discharging the rinsing liquid from a center of the support to a peripheral edge of the support. In this case, in the movement of the nozzle from the center of the support to the peripheral edge of the support, the nozzle may be moved while gradually decreasing the moving speed of the nozzle. By performing rinsing in this manner, in-plane variation of rinsing can be suppressed. In addition, the same effect can be obtained by gradually decreasing the rotating speed of the support while moving the nozzle from the center of the support to the peripheral edge of the support.

After the development, it is preferable to carry out an additional exposure treatment or a heating treatment (post-baking) after carrying out drying. The additional exposure treatment or the post-baking is a curing treatment after development in order to complete curing. The heating temperature in the post-baking is preferably, for example, 100°C to 260°C. The lower limit of the heating temperature is preferably 120°C or higher and more preferably 160°C or higher. The upper limit of the heating temperature is preferably 240°C or lower and more preferably 220°C or lower. The film after development is post-baked continuously or batchwise using a heating unit such as a hot plate, a convection oven (hot air circulation dryer), and a high-frequency heater under the above-described conditions. In a case of performing the additional exposure treatment, light used for the exposure is preferably light having a wavelength of 400 nm or less. In addition, the additional exposure treatment may be carried out by the method described in KR10-2017-0122130A.

<Optical sensor>

The optical sensor according to the embodiment of the present invention includes the film according to the embodiment of the present invention. Examples of the type of the optical sensor include an ambient optical sensor and an illuminance sensor, and the optical sensor is preferably used as an ambient optical sensor. The ambient optical sensor is a sensor which detects hue of surrounding light (ambient light).

The optical sensor according to the embodiment of the present invention can be manufactured through the above-described method for manufacturing a film.

In addition, the optical sensor according to the embodiment of the present invention can also be manufactured through a step of applying the above-described photocurable composition according to the embodiment of the present invention onto a support to form a composition layer and a step of exposing the composition layer. The support to which the photocurable composition is applied, the method of applying the photocurable composition, and the exposure conditions are the same as those described in the above-described method for manufacturing a film.

It is also preferable that the optical sensor according to the embodiment of the present invention has an optical filter having at least one pixel selected from a colored pixel or a pixel of an infrared transmitting filter, in addition to the film according to the embodiment of the present invention. Examples of the colored pixel include a red pixel, a blue pixel, a green pixel, a yellow pixel, a cyan pixel, and a magenta pixel. In addition, it is preferable that the film according to the embodiment of the present invention is provided closer to a light incident side than the above-described optical filter. By providing the film according to the embodiment of the present invention closer to the light incident side than the optical filter, angle dependence can be further reduced for each pixel.

An embodiment of the optical sensor is shown with reference to the drawings. An optical sensor 1 shown in Fig. 1 is provided with an optical filter 110 having pixels 111 to 114 on a photoelectric conversion element 101. A film 121 according to the embodiment of the present invention is formed on the optical filter 110. As an example of the pixels 111 to 114 constituting the optical filter 110, a combination in which the pixel 111 is a red pixel, the pixel 112 is a blue pixel, the pixel 113 is a green pixel, and the pixel 114 is a pixel of an infrared transmitting filter can be mentioned. In the optical sensor 1 shown in Fig. 1, the optical filter 110 having four types of pixels (pixels 111 to 114) is used, but the types of pixels may be one to three types or may be five or more types. The types can be appropriately selected according to the application. In addition, a planarizing layer may be interposed between the photoelectric conversion element 101 and the optical filter 110, or between the optical filter 110 and the film 121 according to the embodiment of the present invention.

Fig. 2 shows another embodiment of the optical sensor. An optical sensor 2 shown in Fig. 2 is provided with an optical filter 110 having pixels 111 to 114 on a photoelectric conversion element 101. The optical filter 110 has the same configuration as that of the above-described embodiment. A member, in which a film 122 according to the embodiment of the present invention is formed on a surface of a transparent support 130, is disposed on the optical filter 110. Examples of the transparent support 130 include a glass substrate and a resin substrate. In the optical sensor 2 shown in Fig. 2, the member in which the film 122 according to the embodiment of the present invention is formed on the surface of the transparent support 130 is disposed on the optical filter 110 at predetermined intervals, but the optical filter 110 and the member in which the film 122 according to the embodiment of the present invention is formed on the surface of the

transparent support 130 may be in contact with each other. In addition, in the optical sensor 2 shown in Fig. 2, the film 122 according to the embodiment of the present invention is formed on only one surface of the transparent support 130, but the film 122 according to the embodiment of the present invention may be formed on both surfaces of the transparent support 130. In addition, in the optical sensor 2 shown in Fig. 2, the film 122 according to the embodiment of the present invention is formed on the surface of the transparent support 130 on the optical filter 110 side, but the film 122 according to the embodiment of the present invention may be formed on the surface of the transparent support 130 opposite to the optical filter 110 side. In addition, a planarizing layer may be interposed between the photoelectric conversion element 101 and the optical filter 110, or between the film 122 according to the embodiment of the present invention and the transparent support 130.

Examples

Hereinafter, the present invention will be described in more detail using Examples, but the present invention is not limited to these examples. In addition, in the structural formulae shown below, Me represents a methyl group, and Et represents an ethyl group.

<Measurement of average primary particle diameter of particles>

The primary particle diameter of the particles was obtained by observing particles with a transmission electron microscope (TEM) and observing a portion (primary particle) where the particles did not aggregate. Specifically, a particle size distribution was obtained by imaging a transmission electron micrograph of primary particles using a transmission microscope and measuring a particle size distribution of the primary particles with an image processing device using the micrograph. The average primary particle diameter of the particles refers to the number average particle diameter calculated from the particle size distribution of the primary particles. An electron microscope (H-7000, manufactured by Hitachi, Ltd.) was used as the transmission electron microscope, and a LUZEX AP (manufactured by Nireco Corporation) was used as the image processing device.

<Measurement of refractive index of particles>

A dispersion liquid was prepared using the particles, a resin (dispersant) having a known refractive index, and propylene glycol monomethyl ether acetate. Next, the prepared dispersion liquid and a resin having a known refractive index were mixed with each other to prepare coating liquids in which the concentrations of the particles in the total solid content of the coating liquids were 10% by mass, 20% by mass, 30% by mass, and 40% by mass. Using each of the coating liquids, a film having a thickness of 300 nm was formed on a silicon wafer, and the refractive index of the obtained film was measured by ellipsometry (LAMBDA ACE RE-3300, manufactured by SCREEN Holdings Co., Ltd.). Next, the concentration and refractive index of the particles were plotted on a graph to calculate the refractive index of the particles.

<Measurement of specific gravity of particles>

50 g of particles were put into a 100 mL volumetric flask. Subsequently, 100 mL of water was weighed using another 100 mL graduated cylinder. Thereafter, the weighed water was put into the volumetric flask to the extent that the particles were immersed, and then ultrasonic waves were applied to the volumetric flask to allow the particles and water to blend in. Next, additional water was added thereto until the marked line of the volumetric flask was reached, and the specific gravity was calculated as 50 g/(volume of water remaining in volumetric flask).

<Measurement of weight-average molecular weight of resin>

The weight-average molecular weight of a resin was measured by gel permeation chromatography (GPC) according to the following conditions.

Type of column: a column in which TOSOH TSK gel Super HZM-H, TOSOH TSK gel Super HZ4000, and TOSOH TSK gel Super HZ2000 were linked to each other

Developing solvent: tetrahydrofuran
Column temperature: 40°C
Flow rate (sample injection volume): 1.0 μL (sample concentration: 0.1% by mass)
Device name: HLC-8220 GPC (manufactured by Tosoh Corporation)
Detector: refractive index (RI) detector
Calibration curve base resin: a polystyrene resin

<Measurement of acid value of resin>

A measurement sample was dissolved in a mixed solvent including tetrahydrofuran and water at a ratio (tetrahydrofuran/water) of 9/1, and the obtained solution was neutralized and titrated with a 0.1 mol/L sodium hydroxide aqueous solution at 25°C using a potentiometric titrator (trade name: AT-510, manufactured by Kyoto Electronics Manufacturing Co., Ltd.). An inflection point of a titration pH curve was set as a titration end point, and the acid value was calculated from the following expression.

$$A = 56.11 \times Vs \times 0.5 x f/w$$

A: acid value (mgKOH/g)
Vs: amount (mL) of the 0.1 mol/L sodium hydroxide aqueous solution used for the titration
f: titer of the 0.1 mol/L sodium hydroxide aqueous solution
w: mass (g) of the measurement sample (expressed in terms of solid contents)

<Measurement of amine value of resin>

A measurement sample was dissolved in a mixed solvent including tetrahydrofuran and water at a ratio (tetrahydrofuran/water) of 9/1, and the obtained solution was neutralized and titrated with a 0.1 mol/L hydrochloric acid at 25°C using a potentiometric titrator (trade name: AT-510, manufactured by Kyoto Electronics Manufacturing Co., Ltd.). An inflection point of a titration pH curve was set as a titration end point, and the amine value was calculated from the following equation.

$$A = 56.11 \times Vs \times 0.5 \times f/w$$

A: amine value (mgKOH/g)
Vs: amount (mL) of 0.1 mol/L hydrochloric acid used for titration
f: 0.1 mol/L hydrochloric acid titer
w: mass (g) of the measurement sample (expressed in terms of solid contents)

<Measurement of ethylenically unsaturated bond-containing group value (C=C value)>

The ethylenically unsaturated bond-containing group value (C=C value) of resin was calculated from raw materials used for the synthesis of the resin.

<Synthesis example of particles>

(Synthesis Example 1) Synthesis of particles P-11

300 g of water was measured in a glass container 1, 30.8 g of 60% nitric acid (manufactured by FUJIFILM Wako Pure Chemical Corporation) and 14.9 g of $Y_2O_3$ (manufactured by Japan Yttrium Co., Ltd.) were added thereto, and the mixture was heated to 80°C to be dissolved. 300 g of water and 9.4 g of 85% phosphoric acid (manufactured by FUJIFILM Wako Pure Chemical Corporation) were added to another glass container 2. After adding the contents of the glass container 2 to the glass container 1, aging was carried out at 75°C for 30 minutes. The obtained precipitate was washed by decantation washing until the conductivity of the supernatant was 200 μS/cm or less. After washing, solid-liquid separation was carried out by decompression filtration, drying was carried out in the atmosphere at 120°C for 5 hours, and baking was carried out in the atmosphere at 400°C for 5 hours to obtain particles P-11. In a case where crystal types of the particles P-11 were measured using an X-ray diffractometer, it was confirmed that the particles P-11 were monoclinic $YPO_4$ (yttrium phosphate). In addition, the specific gravity of the particles P-11 was 4.2, the refractive index thereof was 1.85, and the average primary particle diameter thereof was 31 nm.

(Synthesis Example 2) Synthesis of particles P-12

Particles P-12 were synthesized by the same method as in Synthesis Example 1, except that the firing temperature was changed to 1200°C. The specific gravity of the particles P-12 was 4.2, the refractive index thereof was 1.85, and the average primary particle diameter thereof was 180 nm.

<Production of dispersion liquid>

By using ULTRA APEX MILL (manufactured by Kotobuki Industries Co., Ltd.) as a circulation type dispersion apparatus (beads mill), a mixed solution having the following composition shown in the following table was dispersed. In this way, a dispersion liquid was produced.

Bead diameter: 0.2 mm
Bead filling rate: 65 vol%
Circumferential speed: 6 m/sec
Pump supply rate: 10.8 kg/hr
Cooling water: tap water
Inner volume of circular path of beads mill: 0.15 L
Amount of mixed Solution to be dispersed: 0.65 kg

[Table 1]

| Name of dispersant | Particle | | Resin (dispersant) | | Solvent | |
|---|---|---|---|---|---|---|
| | Type | Parts by mass | Type | Parts by mass | Type | Parts by mass |
| Dispersant 1 | P-1 | 38.4 | B-d-1 | 11.6 | S-1 | 50.0 |
| Dispersant 2 | P-2 | 38.4 | B-d-1 | 11.6 | S-1 | 50.0 |
| Dispersant 3 | P-3 | 38.4 | B-d-1 | 11.6 | S-1 | 50.0 |
| Dispersant 4 | P-4 | 38.4 | B-d-1 | 11.6 | S-1 | 50.0 |
| Dispersant 5 | P-5 | 38.4 | B-d-1 | 11.6 | S-1 | 50.0 |
| Dispersant 6 | P-6 | 38.4 | B-d-1 | 11.6 | S-1 | 50.0 |
| Dispersant 7 | P-7 | 38.4 | B-d-1 | 11.6 | S-1 | 50.0 |
| Dispersant 8 | P-8 | 38.4 | B-d-1 | 11.6 | S-1 | 50.0 |
| Dispersant 9 | P-9 | 38.4 | B-d-1 | 11.6 | S-1 | 50.0 |
| Dispersant 10 | P-10 | 38.4 | B-d-1 | 11.6 | S-1 | 50.0 |
| Dispersant 11 | P-11 | 38.4 | B-d-1 | 11.6 | S-1 | 50.0 |
| Dispersant 12 | P-12 | 38.4 | B-d-1 | 11.6 | S-1 | 50.0 |
| Dispersant 13 | P-2<br>P-4 | 19.2<br>19.2 | B-d-1 | 11.6 | S-1 | 50.0 |
| Dispersant 14 | P-4 | 38.4 | B-d-2 | 11.6 | S-1 | 50.0 |
| Dispersant 15 | P-4 | 38.4 | B-d-3 | 11.6 | S-1 | 50.0 |
| Dispersant 16 | P-4 | 38.4 | B-d-4 | 11.6 | S-1 | 50.0 |
| Dispersant 17 | P-4 | 38.4 | B-d-5 | 11.6 | S-1 | 50.0 |
| Dispersant 18 | P-4 | 38.4 | B-d-6 | 11.6 | S-1 | 50.0 |
| Dispersant 19 | P-4 | 38.4 | A-d-1 | 11.6 | S-1 | 50.0 |
| Dispersant 20 | P-4 | 38.4 | A-d-2 | 11.6 | S-1 | 50.0 |
| Dispersant 21 | P-4 | 38.4 | A-d-3 | 11.6 | S-1 | 50.0 |
| Dispersant 22 | P-4 | 38.4 | A-d-4 | 11.6 | S-1 | 50.0 |
| Dispersant 23 | P-4 | 38.4 | A-d-5 | 11.6 | S-1 | 50.0 |
| Dispersant 24 | P-4 | 38.4 | B-d-1 | 11.6 | S-2 | 50.0 |
| Dispersant 25 | P-4 | 38.4 | B-d-1 | 11.6 | S-3 | 50.0 |
| Dispersant 26 | P-4 | 38.4 | B-d-1 | 11.6 | S-1<br>S-2 | 25.0<br>25.0 |

(continued)

| Name of dispersant | Particle | | Resin (dispersant) | | Solvent | |
|---|---|---|---|---|---|---|
| | Type | Parts by mass | Type | Parts by mass | Type | Parts by mass |
| Dispersant 27 | P-10 | 38.4 | B-d-6 | 11.6 | S-1 | 50.0 |
| Dispersant 28 | P-13 | 38.4 | A-d-1 | 11.6 | S-1 | 50.0 |
| Dispersant 29 | P-14 | 38.4 | A-d-1 | 11.6 | S-1 | 50.0 |

The raw materials shown above in the table are as follows.

[Particles (white particles)]

[Table 2]

| Name of particle | Name (manufacturer) | Type | Specific gravity [g/cm$^3$] | Refractive index | Average primary particle diameter [nm] |
|---|---|---|---|---|---|
| P-1 | TTO-51 (manufactured by ISHIHARA SANGYO KAISHA, LTD.) | Titanium oxide particle | 4.1 | 2.71 | 20 |
| P-2 | TTO-80A (manufactured by ISHIHARA SANGYO KAISHA, LTD.) | Titanium oxide particle | 4.1 | 2.71 | 60 |
| P-3 | MPT-136 (manufactured by ISHIHARA SANGYO KAISHA, LTD.) | Titanium oxide particle | 4.1 | 2.71 | 80 |
| P-4 | MPT-141 (manufactured by ISHIHARA SANGYO KAISHA, LTD.) | Titanium oxide particle | 4.1 | 2.71 | 91 |
| P-5 | TFP-NA-E (manufactured by TODA KOGYO CORP.) | Barium titanate particle | 6.0 | 2.41 | 20 |
| P-6 | TFP-NB-E (manufactured by TODA KOGYO CORP.) | Barium titanate particle | 6.0 | 2.41 | 50 |
| P-7 | TFP-NF-E (manufactured by TODA KOGYO CORP.) | Barium titanate particle | 6.0 | 2.41 | 110 |
| P-8 | Zirconeo-Cp (manufactured by AITEC Co., LTD.) | Zirconium oxide particle | 5.7 | 2.11 | 10 |
| P-9 | UEP (manufactured by DAIICHI KIGENSO KAGAKU KOGYO CO., LTD.) | Zirconium oxide particle | 5.7 | 2.11 | 40 |
| P-10 | SPZ (manufactured by DAIICHI KIGENSO KAGAKU KOGYO CO., LTD.) | Zirconium oxide particle | 5.7 | 2.11 | 150 |
| P-11 | Synthetic product (Synthesis Example 1) | Yttrium phosphate particle | 4.2 | 1.85 | 31 |
| P-12 | Synthetic product (Synthesis Example 2) | Yttrium phosphate particle | 4.2 | 1.85 | 180 |

(continued)

| Name of particle | Name (manufacturer) | Type | Specific gravity [g/cm$^3$] | Refractive index | Average primary particle diameter [nm] |
|---|---|---|---|---|---|
| P-13 | CR-90-2 (manufactured by ISHIHARA SANGYO KAISHA, LTD.) | Titanium oxide particle | 4.1 | 2.71 | 250 |
| P-14 | Aluminum oxide nanoparticle (manufactured by EM Japan) | Aluminum oxide particle | 4.0 | 1.77 | 80 |

The value of the refractive index in the above tables is a refractive index for light having a wavelength of 589 nm.

[Resin (dispersant)]

The resins A-d-1 to A-d-5 and B-d-1 to B-d-6 are resins having structures represented by Formulae (A-d-1) to (A-d-5) and (B-d-1) to (B-d-6). A numerical value added to a main chain represents a mass ratio of a repeating unit and a numerical value added to a side chain represents the number of repeating units. In a case where there are a plurality of kinds of repeating units in the side chain, instead of forming a block for each repeating unit by linking the repeating units in the order shown in the following structural formulae, each repeating unit is randomly bonded. The following table shows the weight-average molecular weight, acid value, amine value, and C=C value (ethylenically unsaturated bond-containing group value) of each resin.

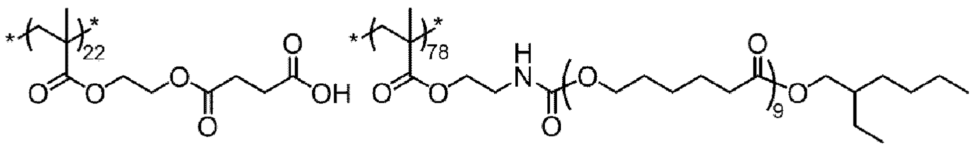

(A-d-1)

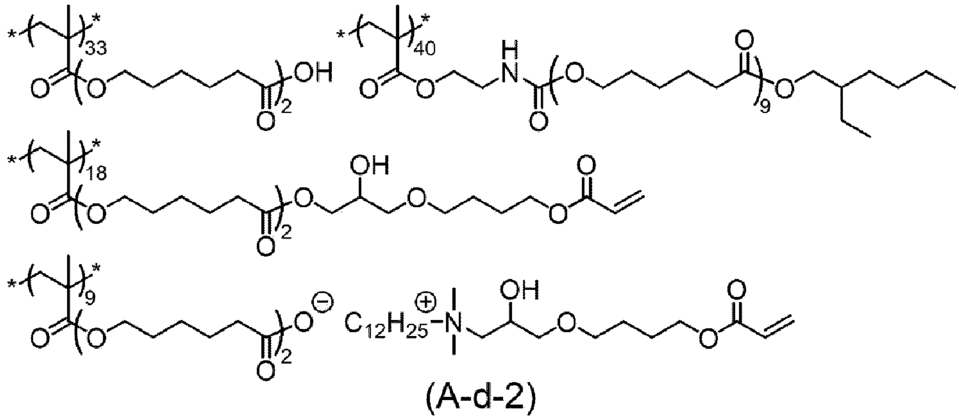

(A-d-2)

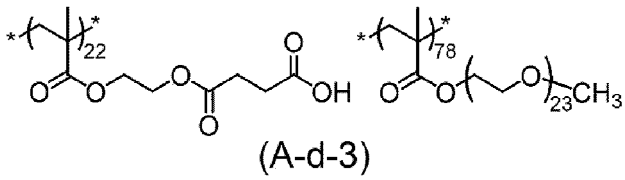

(A-d-3)

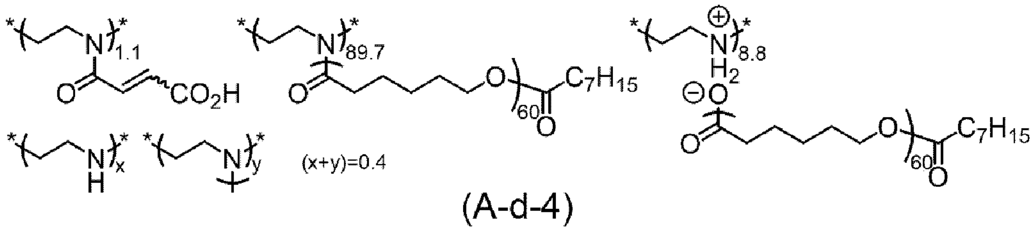

(x+y)=0.4

(A-d-4)

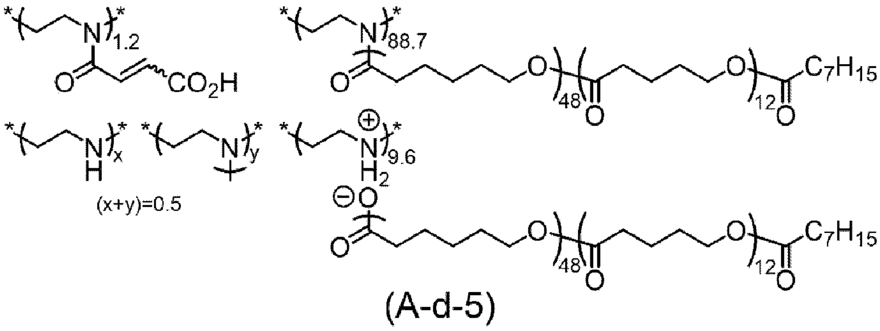

(x+y)=0.5

(A-d-5)

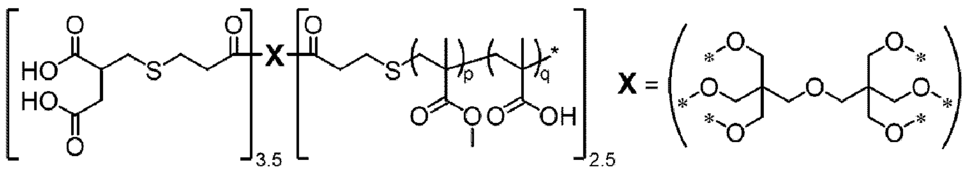

(B-d-1) p=24, q=7
(B-d-2) p=25, q=6
(B-d-3) p=22, q=8
(B-d-4) p=18, q=5
(B-d-5) p=29, q=9

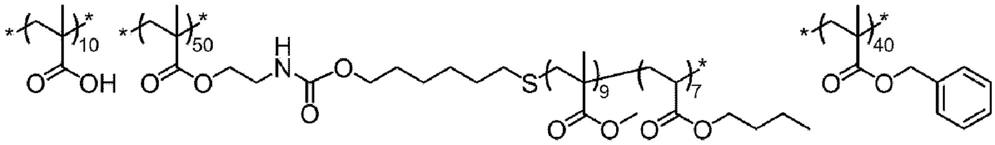

(B-d-6)

[Table 3]

| Name of resin | Weight average molecular weight | Acid value [mgKOH/g] | Amine value [mgKOH/g] | C=C value [mmol/g] |
|---|---|---|---|---|
| A-d-1 | 24000 | 50 | - | - |
| A-d-2 | 18300 | 67 | - | 0.47 |
| A-d-3 | 22300 | 51 | - | - |
| A-d-4 | 22900 | 32 | 45 | - |
| A-d-5 | 20900 | 36 | 47 | - |
| B-d-1 | 12100 | 156 | - | - |
| B-d-2 | 12100 | 137 | - | - |
| B-d-3 | 12100 | 177 | - | - |

(continued)

| Name of resin | Weight average molecular weight | Acid value [mgKOH/g] | Amine value [mgKOH/g] | C=C value [mmol/g] |
|---|---|---|---|---|
| B-d-4 | 9200 | 156 | - | - |
| B-d-5 | 14600 | 157 | - | - |
| B-d-6 | 13400 | 65 | - | - |

[Solvent]

S-1: propylene glycol monomethyl ether acetate (PGMEA)

S-2: propylene glycol monomethyl ether (PGME)

S-3: cyclopentanone

<Production of photocurable composition>

Raw materials shown in the following table were mixed to produce a photocurable composition.

[Table 4]

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 1 | Dispersant 1 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 2 | Dispersant 2 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 3 | Dispersant 3 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 4 | Dispersant 4 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 5 | Dispersant 5 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 6 | Dispersant 6 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 7 | Dispersant 7 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 8 | Dispersant 8 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 9 | Dispersant 9 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 10 | Dispersant 10 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 11 | Dispersant 11 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 12 | Dispersant 12 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 13 | Dispersant 13 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |

(continued)

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 14 | Dispersant 14 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 15 | Dispersant 15 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 16 | Dispersant 16 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 17 | Dispersant 17 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |

[Table 5]

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 18 | Dispersant 18 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 19 | Dispersant 19 | 52 | B-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 20 | Dispersant 20 | 52 | B-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 21 | Dispersant 21 | 52 | B-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 22 | Dispersant 22 | 52 | B-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 23 | Dispersant 23 | 52 | B-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 24 | Dispersant 24 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 25 | Dispersant 25 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 26 | Dispersant 26 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 27 | Dispersant 4 | 52 | A-b-2 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 28 | Dispersant 4 | 52 | A-b-3 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 29 | Dispersant 4 | 52 | A-b-4 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 30 | Dispersant 4 | 52 | A-b-5 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |

(continued)

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 31 | Dispersant 4 | 52 | A-b-6 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 32 | Dispersant 4 | 52 | A-b-7 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 33 | Dispersant 4 | 52 | A-b-8 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 34 | Dispersant 4 | 52 | A-b-9 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |

[Table 6]

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 35 | Dispersant 4 | 52 | A-b-10 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 36 | Dispersant 4 | 52 | A-b-11 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 37 | Dispersant 4 | 52 | A-b-12 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 38 | Dispersant 4 | 52 | A-b-13 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 39 | Dispersant 4 | 52 | A-b-14 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 40 | Dispersant 4 | 52 | A-b-15 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 41 | Dispersant 4 | 52 | A-b-1<br>A-b-6 | 4.48<br>4.48 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 42 | Dispersant 19 | 52 | B-b-2 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 43 | Dispersant 19 | 52 | B-b-3 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 44 | Dispersant 19 | 52 | - | - | M-2 | 18.54 | I-1 | 2.08 | Se-1 | 0.62 | Ad-1<br>Ad-3 | 0.25<br>2.50 | Su-1 | 0.008 | In-1 | 0.005 | S-1 | 24 |
| Example 45 | Dispersant 19 | 52 | A-b-11 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 46 | Dispersant 4 | 52 | A-b-1 | 8.96 | M-1 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 47 | Dispersant 4 | 52 | A-b-1 | 8.96 | M-3 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |

(continued)

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 48 | Dispersant 4 | 52 | A-b-1 | 8.96 | M-4 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |
| Example 49 | Dispersant 4 | 52 | A-b-1 | 8.96 | M-2<br>M-4 | 4.79<br>4.79 | I-1 | 2.08 | Se-1 | 0.62 | Ad-1<br>Ad-3 | 0.25<br>2.50 | Su-1 | 0.008 | In-1 | 0.005 | S-1 | 24 |
| Example 50 | Dispersant 4 | 52 | A-b-1 | 8.96 | M-2 | 9.58 | I-2 | 2.08 | Se-1 | 0.62 | Ad-1<br>Ad-3 | 0.25<br>2.50 | Su-1 | 0.008 | In-1 | 0.005 | S-1 | 24 |
| Example 51 | Dispersant 4 | 52 | A-b-1 | 8.96 | M-2 | 9.58 | I-3 | 2.08 | Se-1 | 0.62 | Ad-1<br>Ad-3 | 0.25<br>2.50 | Su-1 | 0.008 | In-1 | 0.005 | S-1 | 24 |

[Table 7]

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 52 | Dispersant 4 | 52 | A-b-1 | 8.96 | M-2 | 9.58 | I-1<br>I-3 | 1.56<br>0.52 | Se-1 | 0.62 | Ad-1<br>Ad-3 | 0.25<br>2.50 | Su-1 | 0.008 | In-1 | 0.005 | S-1 | 24 |
| Example 53 | Dispersant 4 | 52 | A-b-1 | 8.96 | M-2 | 9.58 | I-1 | 2.08 | Se-2 | 0.62 | Ad-1<br>Ad-3 | 0.25<br>2.50 | Su-1 | 0.008 | In-1 | 0.005 | S-1 | 24 |
| Example 54 | Dispersant 4 | 52 | A-b-1 | 8.96 | M-2 | 9.58 | I-1 | 2.08 | Se-3 | 0.62 | Ad-1<br>Ad-3 | 0.25<br>2.50 | Su-1 | 0.008 | In-1 | 0.005 | S-1 | 24 |
| Example 55 | Dispersant 4 | 52 | A-b-1 | 8.96 | M-2 | 9.58 | I-1 | 2.08 | Se-4 | 0.62 | Ad-1<br>Ad-3 | 0.25<br>2.50 | Su-1 | 0.008 | In-1 | 0.005 | S-1 | 24 |
| Example 56 | Dispersant 4 | 52 | A-b-1 | 8.96 | M-2 | 9.58 | I-1 | 2.08 | Se-5 | 0.62 | Ad-1<br>Ad-3 | 0.25<br>2.50 | Su-1 | 0.008 | In-1 | 0.005 | S-1 | 24 |
| Example 57 | Dispersant 4 | 52 | A-b-1 | 8.96 | M-2 | 9.58 | I-1 | 2.08 | Se-1<br>Se-2 | 0.31<br>0.31 | Ad-1<br>Ad-3 | 0.25<br>2.50 | Su-1 | 0.008 | In-1 | 0.005 | S-1 | 24 |
| Example 58 | Dispersant 4 | 52 | A-b-1 | 8.96 | M-2 | 9.58 | I-1 | 2.08 | Se-1 | 0.62 | Ad-2<br>Ad-3 | 0.25<br>2.50 | Su-1 | 0.008 | In-1 | 0.005 | S-1 | 24 |
| Example 59 | Dispersant 4 | 52 | A-b-1 | 9.08 | M-2 | 9.71 | I-1 | 2.08 | Se-1 | 0.62 | Ad-3 | 2.50 | Su-1 | 0.008 | In-1 | 0.005 | S-1 | 24 |
| Example 60 | Dispersant 4 | 52 | A-b-1 | 10.16 | M-2 | 10.88 | I-1 | 2.08 | Se-1 | 0.62 | Ad-1 | 0.25 | Su-1 | 0.008 | In-1 | 0.005 | S-1 | 24 |
| Example 61 | Dispersant 4 | 52 | A-b-1 | 8.96 | M-2 | 9.58 | I-1 | 2.08 | Se-1 | 0.62 | Ad-2<br>Ad-3 | 0.25<br>2.50 | Su-2 | 0.008 | In-1 | 0.005 | S-1 | 24 |
| Example 62 | Dispersant 4 | 52 | A-b-1 | 8.96 | M-2 | 9.58 | I-1 | 2.08 | Se-1 | 0.62 | Ad-2<br>Ad-3 | 0.25<br>2.50 | Su-3 | 0.008 | In-1 | 0.005 | S-1 | 24 |
| Example 63 | Dispersant 4 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-2 | 0.005 | S-1 | 24 |
| Example 64 | Dispersant 4 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-2 | 24 |

(continued)

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Example 65 | Dispersant 4 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-3 | 24 |
| Example 66 | Dispersant 4 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1<br>S-2 | 12<br>12 |
| Example 67 | Dispersant 4 | 52 | A-b-1 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1<br>S-3 | 12<br>12 |
| Example 68 | Dispersant 27 | 52 | A-b-11 | 8.96 | M-2 | 9.58 | I-1 | 2.08 | Se-1 | 0.62 | Ad-1<br>Ad-3 | 0.25<br>2.50 | Su-1 | 0.008 | In-1 | 0.005 | S-1 | 24 |

[Table 8]

| | Dispersant | | Resin (binder) | | Polymerizable monomer | | Photopolymerization initiator | | Sensitizer | | Additive | | Surfactant | | Polymerization inhibitor | | Solvent | |
|---|---|---|---|---|---|---|---|---|---|---|---|---|---|---|---|---|---|---|
| | Type | Parts by mass | Type | Parts by mass | Type | Parts by mass | Type | Parts by mass | Type | Parts by mass | Type | Parts by mass | Type | Parts by mass | Type | Parts by mass | Type | Parts by mass |
| Comparative Example1 | Dispersant 28 | 52 | - | - | M-2 | 18.54 | I-1 | 2.08 | Se-101 | 0.62 | Ad-1<br>Ad-3 | 0.25<br>2.50 | Su-1 | 0.008 | In-1 | 0.005 | S-1 | 24 |
| Comparative Example2 | Dispersant 29 | 52 | - | - | M-2 | 18.54 | I-1 | 2.08 | Se-101 | 0.62 | Ad-1<br>Ad-3 | 0.25<br>2.50 | Su-1 | 0.008 | In-1 | 0.005 | S-1 | 24 |
| Comparative Example3 | Dispersant 27 | 52 | A-b-11 | 8.96 | M-2 | 9.58 | I-1 | 2.08 | Se-101 | 0.62 | Ad-1<br>Ad-3 | 0.25<br>2.50 | Su-1 | 0.008 | In-1 | 0.005 | S-1 | 24 |

The raw materials shown above in the table are as follows.

[Dispersion liquid]

Dispersion liquids 1 to 29: dispersion liquids 1 to 29 described above

[Resin (binder)]

The resins A-b-1 to A-b-15 and B-b-1 to B-b-3 are resins having structures represented by Formulae (A-b-1) to (A-b-15) and (B-b-1) to (B-b-3). A numerical value added to a main chain represents a mass ratio of a repeating unit and a numerical value added to a side chain represents the number of repeating units. In a case where there are a plurality of kinds of repeating units in the side chain, instead of forming a block for each repeating unit by linking the repeating units in the order shown in the following structural formulae, each repeating unit is randomly bonded. The weight-average molecular weight, the acid value, and the C=C value of each resin are collectively shown in the following table.

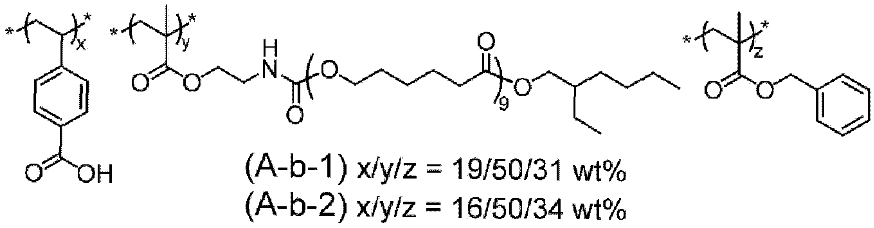

(A-b-1) x/y/z = 19/50/31 wt%
(A-b-2) x/y/z = 16/50/34 wt%
(A-b-3) x/y/z = 21/50/29 wt%
(A-b-4) x/y/z = 19/50/31 wt%
(A-b-5) x/y/z = 19/50/31 wt%

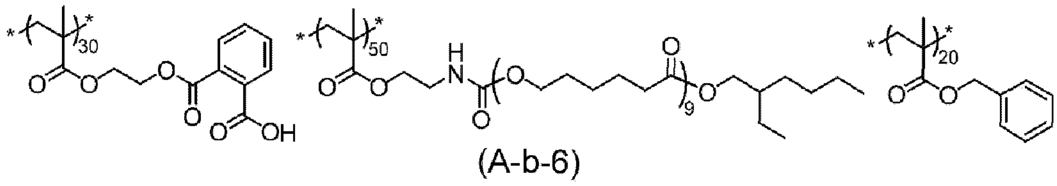

(A-b-6)

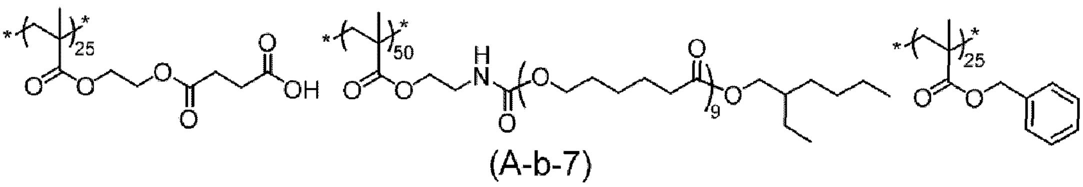

(A-b-7)

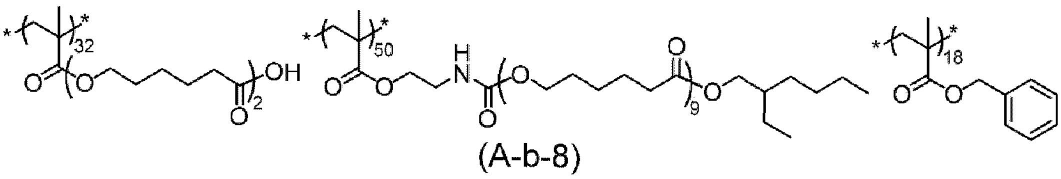

(A-b-8)

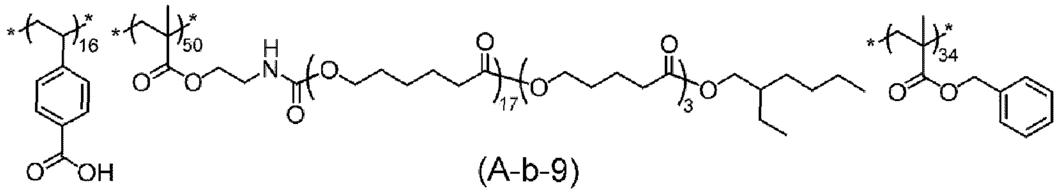

(A-b-9)

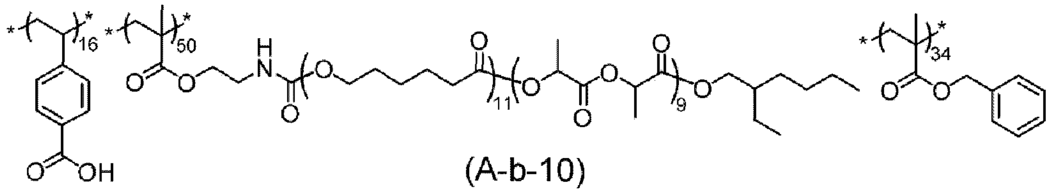

(A-b-10)

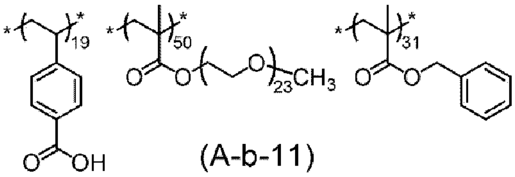

(A-b-11)

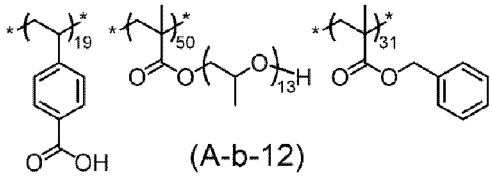

(A-b-12)

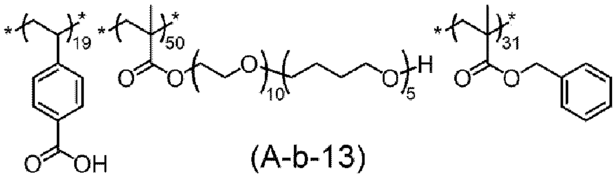

(A-b-13)

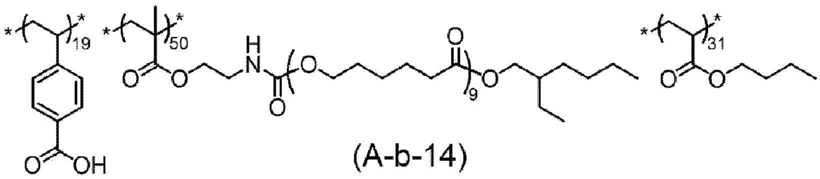

(A-b-14)

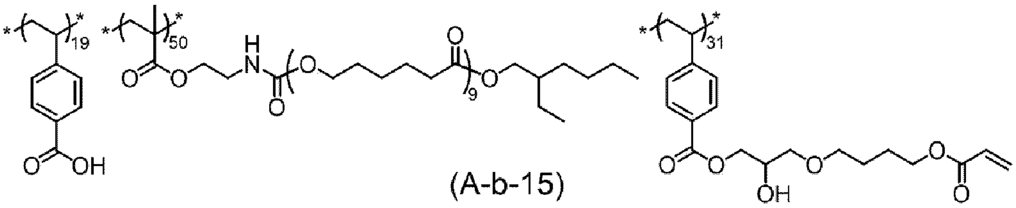

(A-b-15)

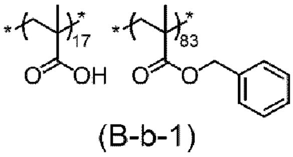

(B-b-1)

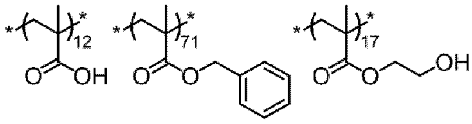

(B-b-2)

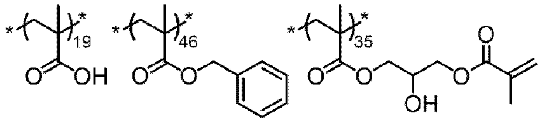

(B-b-3)

[Table 9]

| Name of resin | Weight average molecular weight | Acid value [mgKOH/g] | C=C value [mmol/g] |
|---|---|---|---|
| A-b-1 | 32500 | 71 | - |
| A-b-2 | 33000 | 61 | - |
| A-b-3 | 32400 | 80 | - |

(continued)

| Name of resin | Weight average molecular weight | Acid value [mgKOH/g] | C=C value [mmol/g] |
|---|---|---|---|
| A-b-4 | 28100 | 71 | - |
| A-b-5 | 36300 | 71 | - |
| A-b-6 | 29000 | 57 | - |
| A-b-7 | 30100 | 60 | - |
| A-b-8 | 25300 | 57 | - |
| A-b-9 | 24900 | 61 | - |
| A-b-10 | 23700 | 60 | - |
| A-b-11 | 30000 | 71 | - |
| A-b-12 | 26700 | 71 | - |
| A-b-13 | 27200 | 70 | - |
| A-b-14 | 31400 | 69 | - |
| A-b-15 | 30000 | 70 | 0.89 |
| B-b-1 | 33100 | 107 | - |
| B-b-2 | 17100 | 77 | - |
| B-b-3 | 23000 | 125 | 1.53 |

[Polymerizable monomer]

M-1: KAYARAD DPHA (manufactured by Nippon Kayaku Co., Ltd., a mixture of dipentaerythritol hexa and pentamethacrylate, compound having structure represented by Formula (M-1))
M-2: NK ESTER A-TMMT (manufactured by Shin-Nakamura Chemical Co., Ltd., pentaerythritol tetraacrylate, compound having a structure represented by Formula (M-2))
M-3: ARONIX M-305 (manufactured by TOAGOSEI Co., Ltd., a mixture of pentaerythritol tri- and tetraacrylate (triacrylate: 55% to 63%) and compound having structure represented by Formula (M-3))
M-4: compound having a structure represented by Formula (M-4) (carboxylic acid-containing triacrylate)

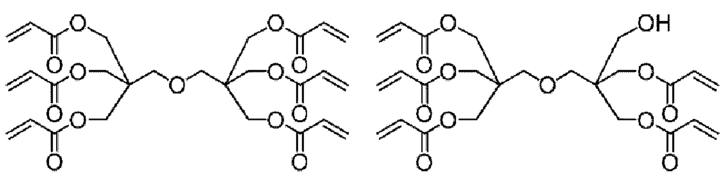

(M-1)

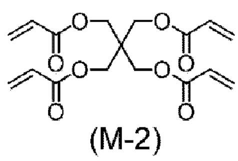

(M-2)

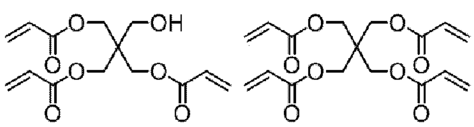

(M-3)

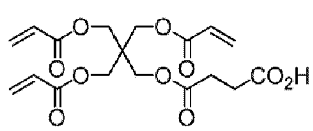

(M-4)

[Photopolymerization initiator]

I-1: Omnirad TPO H (manufactured by IGM Resins B.V, compound having structure represented by Formula (I-1))

I-2: Omnirad 369 (manufactured by IGM Resins B.V., compound having structure represented by Formula (I-2))

I-3: Irgacure OXE01 (manufactured by BASF Japan Ltd., compound having structure represented by Formula (I-3))

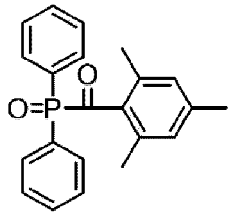

(I-1)

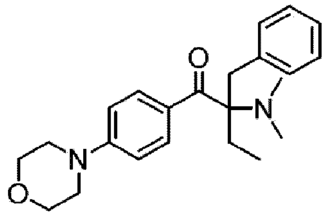

(I-2)

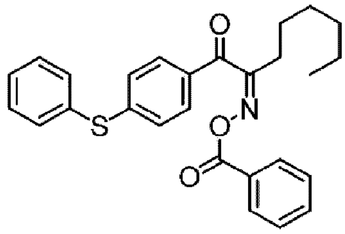

(I-3)

[Sensitizer]

Se-1: compound having structure represented by Formula (Se-1)
Se-2: compound having a structure represented by Formula (Se-2)
Se-3: compound having a structure represented by Formula (Se-3)
Se-4: compound having a structure represented by Formula (Se-4)
Se-5: compound having a structure represented by Formula (Se-5)
Se-101: compound having structure represented by Formula (Se-101)

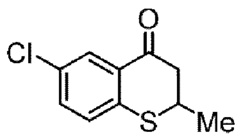

(Se-1)

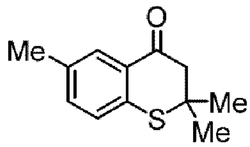

(Se-2)

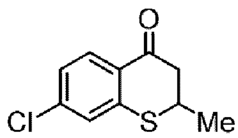

(Se-3)

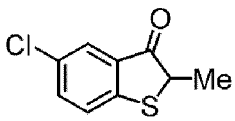

(Se-4)

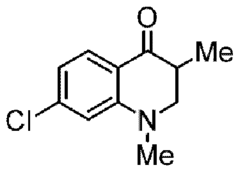

(Se-5)

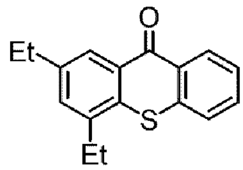

(Se-101)

[Additive]

Ad-1: ADEKA STAB AO-80 (manufactured by ADEKA Corporation, anti-coloring agent, compound having a structure represented by Formula (Ad-1))
Ad-2: Irganox 1010 (manufactured by BASF Japan Ltd., anti-coloring agent, compound having structure represented by Formula (Ad-2))
Ad-3: compound having structure represented by Formula (Ad-3) (silane coupling agent)

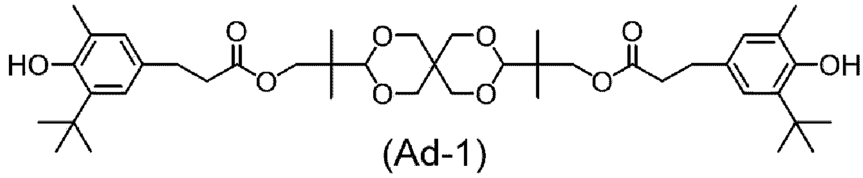

(Ad-1)

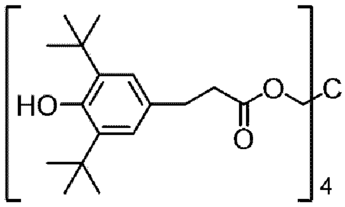

(Ad-2)

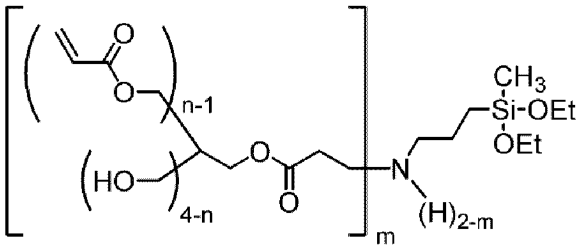

n = 4,3,2
(n=4 main reactant)

m = 2 or 1
(m=2 main product)

(Ad-3)

[Surfactant]

Su-1: DOWSIL SH 8400 Fluid (manufactured by The Dow Chemical Japan Ltd., silicone-based surfactant)
Su-2: compound having a structure represented by Formula (Su-2) (the % representing the proportion of the repeating unit is mol% weight-average molecular weight: 14,000).
Su-3: Ftergent FTX-218D (manufactured by Neos Co., Ltd., fluorine-based surfactant)

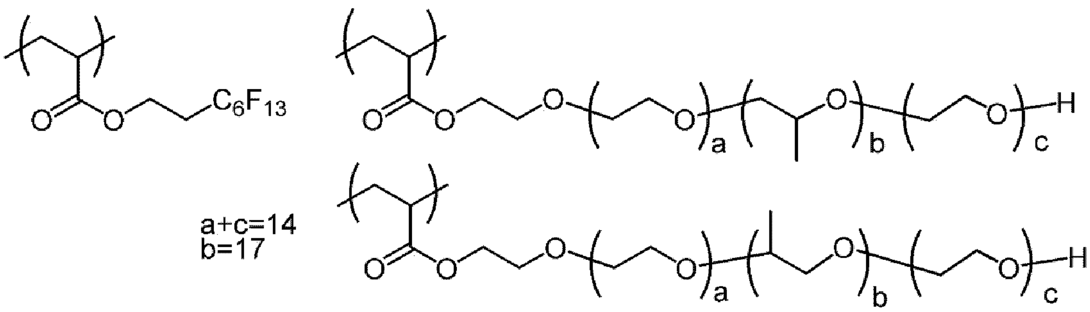

a+c=14
b=17

62%

38%

(Su-2)

[Polymerization inhibitor]

In-1: p-methoxyphenol
In-2: 1,4-benzoquinone

[Solvent]

S-1: propylene glycol monomethyl ether acetate (PGMEA)
S-2: propylene glycol monomethyl ether (PGME)
S-3: cyclopentanone

<Evaluation>

[Evaluation of light scattering properties]

Each of the photocurable compositions was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 110°C for 30

minutes. Next, using an i-ray stepper exposure device FPA-3000 i5+ (manufactured by Canon Corporation), the coating film was exposed to light having a wavelength of 365 nm at an exposure amount of 1000 $mJ/cm^2$ by being irradiated with the light. Thereafter, a heating treatment (post-baking) was performed for 5 minutes using a hot plate at 200°C to form a film.

A transmittance of the obtained film to light in a wavelength range of 400 to 1000 nm was measured using a spectrophotometer (manufactured by Hitachi High-Tech Corporation, U-4100), and the maximum value ($T_{max}$) of the transmittance in the wavelength range of 400 to 1000 nm and an absolute value (transmittance difference $\Delta T$) of a difference between a transmittance ($T_{940}$) to light having a wavelength of 940 nm and a transmittance ($T_{450}$) to light having a wavelength of 450 nm were calculated.

$$\text{Transmittance difference } \Delta T = |T_{940} - T_{450}|$$

-Evaluation standard for transmittance difference $\Delta T$-

5: The transmittance difference $\Delta T$ was less than 13%.
4: The transmittance difference $\Delta T$ was 13% or more and less than 16%.
3: The transmittance difference $\Delta T$ was 16% or more and less than 19%.
2: The transmittance difference $\Delta T$ was 19% or more and less than 25%.
1: The transmittance difference $\Delta T$ was 25% or more.

-Evaluation standard for maximum value ($T_{max}$) of transmittance-

5: $T_{max}$ was 50% or less.
4: $T_{max}$ was more than 50% and 60% or less.
3: $T_{max}$ was more than 60% and 70% or less.
2: $T_{max}$ was more than 70% and 80% or less.
1: $T_{max}$ was more than 80%.

[Evaluation of adhesiveness]

Each of the photocurable compositions was applied to an 8-inch (= 203.2 mm) glass wafer with an undercoat layer (manufactured by Fujifilm Electronic Materials Co., Ltd., CT-4000L; thickness: 0.1 μm) using a spin coater such that the film thickness after post-baking was 4 μm. The coating film was heat-treated (pre-baked) using a hot plate at 110°C for 120 seconds.

Next, using an i-ray stepper exposure device FPA-3000 i5+ (manufactured by Canon Corporation), the coating film was exposed to light having a wavelength of 365 nm (exposure amount: 50 to 1700 $mJ/cm^2$) through a pattern mask which forms 25 lines with a width of 100 μm and a length of 1000 μm.

Next, the composition layer after exposure was developed using a developing device (Act8 manufactured by Tokyo Electron Limited.). Shower development was performed at 23°C for 60 seconds using, as a developer, a tetramethylammonium hydroxide (TMAH) 0.3% by mass aqueous solution. Thereafter, the resultant was rinsed by a spin shower using pure water, spin-dried, and then heat-treated (post-baked) for 5 minutes using a hot plate at 200°C to obtain a pattern.

The difference $\Delta E$ (E2 - E1) between the minimum exposure amount E1 required to form the pattern with a width of 100 μm and a length of 1000 μm and the minimum exposure amount E2 required for all the patterns to adhere is obtained, and adhesiveness was evaluated based on the following evaluation standard. The evaluation results are described in the column of "Adhesiveness" in the tables described later. As $\Delta E$ is smaller, the adhesiveness is better. The close adhesion of the patterns and the size of the patterns were observed using an optical microscope (magnification: 200 times).

-Evaluation standard-

5: ΔE was more than 100 $mJ/cm^2$
4: ΔE was more than 0 $mJ/cm^2$ and 100 $mJ/cm^2$ or less.
3: ΔE was 0 $mJ/cm^2$.
2: at the exposure amount of 50 to 1700 $mJ/cm^2$, at least one line pattern with a width of 100 μm and a length of 1000 μm could be formed, but not all 25 patterns could be formed
1: at the exposure amount of 50 to 1700 $mJ/cm^2$, a pattern with a width of 100 μm and a length of 1000 μm could not be formed

[Evaluation of storage stability]

Each photocurable composition was placed in a container having a liquid height of 20 cm and allowed to stand in a refrigerator (4 ± 1°C) for 12 months. After standing, a 1 cm solution from the top and a 1 cm solution from the bottom were sampled, and each sample was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 110°C for 120 minutes.
Next, using an i-ray stepper exposure device FPA-3000 i5+ (manufactured by Canon Corporation), the coating film was exposed to light having a wavelength of 365 nm at an exposure amount of 1000 $mJ/cm^2$ by being irradiated with the light. Thereafter, a heating treatment (post-baking) was performed for 5 minutes using a hot plate at 200°C to form a film.
The transmittance of the obtained film in a wavelength range of 400 to 1000 nm was measured using a spectrophotometer (manufactured by Hitachi High-Tech Corporation, U-4100).
The maximum value (T1) of the transmittance of the film formed of the 1 cm solution from the top at a wavelength range of 400 to 1000 nm, the maximum value (T2) of the transmittance of the film formed of the 1 cm solution from the bottom at a wavelength range of 400 to 1000 nm, and ΔT which is the difference (T1 - T2) were determined, and storage stability was evaluated according to the evaluation standard. As ΔT is smaller, the storage stability is better. The evaluation results are described in the column of "storage stability" in the tables described later.

-Evaluation standard-

5: ΔT was 3% or less.
4: ΔT was more than 3% and 5% or less.
3: ΔT was more than 5% and 10% or less.
2: ΔT was more than 10% and 20% or less.
1: ΔT was more than 20% and 100% or less.

[Table 10]

| | Light scattering property | | Adhesiveness | Storage stability |
|---|---|---|---|---|
| | Transmittance difference ΔT | Maximum value of transmittance | | |
| Example 1 | 4 | 4 | 4 | 5 |
| Example 2 | 5 | 5 | 4 | 4 |
| Example 3 | 5 | 5 | 4 | 4 |
| Example 4 | 5 | 5 | 4 | 4 |
| Example 5 | 3 | 3 | 4 | 4 |
| Example 6 | 4 | 4 | 4 | 3 |
| Example 7 | 4 | 4 | 4 | 3 |
| Example 8 | 2 | 2 | 4 | 4 |
| Example 9 | 3 | 3 | 4 | 3 |
| Example 10 | 3 | 3 | 4 | 3 |
| Example 11 | 2 | 2 | 5 | 5 |

(continued)

| | Light scattering property | | Adhesiveness | Storage stability |
|---|---|---|---|---|
| | Transmittance difference ΔT | Maximum value of transmittance | | |
| Example 12 | 2 | 2 | 5 | 4 |
| Example 13 | 5 | 5 | 4 | 4 |
| Example 14 | 5 | 5 | 4 | 4 |
| Example 15 | 5 | 5 | 4 | 4 |
| Example 16 | 5 | 5 | 4 | 4 |
| Example 17 | 5 | 5 | 4 | 4 |
| Example 18 | 5 | 5 | 4 | 3 |
| Example 19 | 5 | 5 | 4 | 3 |
| Example 20 | 5 | 5 | 5 | 3 |
| Example 21 | 4 | 4 | 4 | 3 |
| Example 22 | 5 | 5 | 4 | 3 |
| Example 23 | 5 | 5 | 4 | 3 |
| Example 24 | 5 | 5 | 4 | 4 |
| Example 25 | 5 | 5 | 4 | 4 |
| Example 26 | 5 | 5 | 4 | 4 |
| Example 27 | 5 | 5 | 4 | 4 |
| Example 28 | 5 | 5 | 4 | 4 |
| Example 29 | 5 | 5 | 4 | 4 |
| Example 30 | 5 | 5 | 4 | 4 |
| Example 31 | 5 | 5 | 4 | 4 |
| Example 32 | 5 | 5 | 4 | 4 |
| Example 33 | 5 | 5 | 4 | 4 |
| Example 34 | 5 | 5 | 4 | 4 |
| Example 35 | 5 | 5 | 4 | 4 |
| Example 36 | 4 | 4 | 4 | 4 |

[Table 11]

| | Light scattering property | | Adhesiveness | Storage stability |
|---|---|---|---|---|
| | Transmittance difference ΔT | Maximum value of transmittance | | |
| Example 37 | 4 | 4 | 4 | 4 |
| Example 38 | 4 | 4 | 4 | 4 |
| Example 39 | 5 | 5 | 4 | 4 |
| Example 40 | 5 | 5 | 5 | 4 |
| Example 41 | 5 | 5 | 4 | 4 |
| Example 42 | 5 | 5 | 4 | 3 |
| Example 43 | 5 | 5 | 5 | 3 |
| Example 44 | 2 | 2 | 4 | 3 |
| Example 45 | 2 | 2 | 4 | 3 |

(continued)

| | Light scattering property | | Adhesiveness | Storage stability |
|---|---|---|---|---|
| | Transmittance difference ΔT | Maximum value of transmittance | | |
| Example 46 | 5 | 5 | 4 | 4 |
| Example 47 | 5 | 5 | 4 | 4 |
| Example 48 | 5 | 5 | 4 | 4 |
| Example 49 | 5 | 5 | 4 | 4 |
| Example 50 | 4 | 4 | 3 | 4 |
| Example 51 | 3 | 3 | 2 | 4 |
| Example 52 | 5 | 5 | 4 | 4 |
| Example 53 | 5 | 5 | 4 | 4 |
| Example 54 | 5 | 5 | 4 | 4 |
| Example 55 | 4 | 4 | 3 | 4 |
| Example 56 | 3 | 3 | 2 | 4 |
| Example 57 | 5 | 5 | 4 | 4 |
| Example 58 | 5 | 5 | 4 | 4 |
| Example 59 | 5 | 5 | 4 | 4 |
| Example 60 | 5 | 5 | 3 | 4 |
| Example 61 | 5 | 5 | 4 | 4 |
| Example 62 | 5 | 5 | 4 | 4 |
| Example 63 | 5 | 5 | 4 | 4 |
| Example 64 | 5 | 5 | 4 | 4 |
| Example 65 | 5 | 5 | 4 | 4 |
| Example 66 | 5 | 5 | 4 | 4 |
| Example 67 | 5 | 5 | 4 | 4 |
| Example 68 | 3 | 3 | 4 | 2 |
| Comparative Example1 | 1 | 1 | 1 | 1 |
| Comparative Example2 | 1 | 1 | 1 | 3 |
| Comparative Example3 | 1 | 1 | 1 | 2 |

From the above results, it was found that the photocurable composition according to Examples has excellent storage stability, and the film formed of the photocurable composition according to Examples has excellent light scattering properties and adhesiveness. In addition, in Example 11 and Example 12 in which yttrium phosphate was used as the specific particle, the adhesiveness was particularly excellent.

Each of the photocurable compositions of Examples 1 to 68 was applied to an 8-inch (= 203.2 mm) glass wafer with an undercoat layer (manufactured by Fujifilm Electronic Materials Co., Ltd., CT-4000L, thickness: 0.1 μm) using a spin coater such that the thickness after post-baking was 4 μm. The coating film was heat-treated (pre-baked) using a hot plate at 120°C for 2 minutes. Next, using an i-ray stepper exposure device FPA-3000 i5+ (manufactured by Canon Corporation), the coating film was exposed to light having a wavelength of 365 nm at an exposure amount of 1000 mJ/$cm^2$. Thereafter, a heating treatment (post-baking) was performed for 5 minutes using a hot plate at 200°C to form a film having a thickness of 4 μm. Using a scanning electron microscope (SEM) (S-4800H, manufactured by Hitachi High-Tech Corporation), a cross section of the obtained film in a thickness direction was observed (magnification: 10000 times), and the uneven distribution state of the particles was confirmed to check whether a phase-separated state was formed.

In all of the obtained films, the phase-separated structure including the first phase containing particles and the second phase having a lower content of the particles than the first phase was formed in the film.

An optical sensor was prepared with reference to the description in WO2016/091757A (hereinafter, referred to as "Document A").

In the optical sensor described in Fig. 1 of Document A, except that the diffuser 10 was changed to a film consisting of the photocurable composition prepared in any of Examples 1 to 68 described above, the optical sensor shown in Fig. 1 of Document A was prepared with reference to the description of Document A.

The obtained optical sensors were normally operated even in a case where the photocurable composition prepared in any of Examples 1 to 68 was used.

Explanation of References

1, 2: optical sensor
101: photoelectric conversion element
111 to 114: pixel
110: optical filter
121, 122: film
130: transparent support

## Claims

**1.** A photocurable composition comprising:

particles having a refractive index of 1.8 or more and an average primary particle diameter of 200 nm or less;
a resin;
a polymerizable monomer having a (meth)acryloyl group;
a photopolymerization initiator;
a sensitizer; and
a solvent,
wherein the resin includes a resin A including a repeating unit represented by Formula (a1) and a repeating unit represented by Formula (a2), and
the sensitizer includes at least one compound S selected from a compound represented by Formula (s1) or a compound represented by Formula (s2),

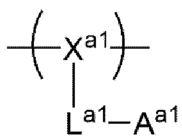
(a1)

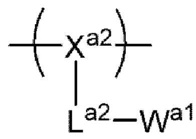
(a2)

in Formula (a1), $X^{a1}$ represents a trivalent linking group, $L^{a1}$ represents a single bond or a divalent linking group, and $A^{a1}$ represents an acid group,
in Formula (a2), $X^{a2}$ represents a trivalent linking group, $L^{a2}$ represents a single bond or a divalent linking group, and $W^{a1}$ represents a graft chain including a repeating unit of a polyester structure or a polyether structure,

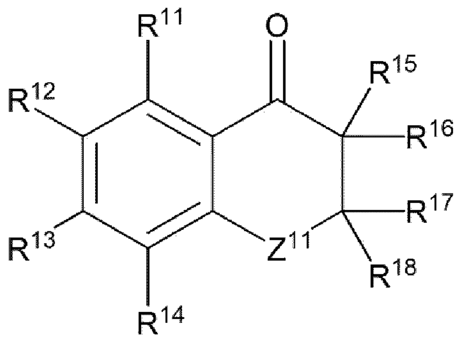

(s1)

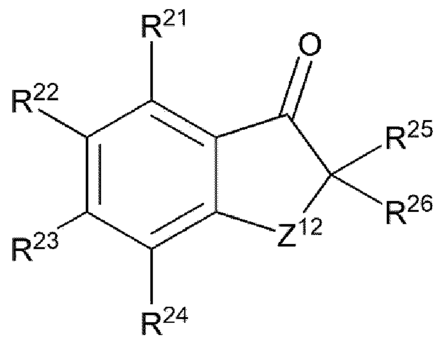

(s2)

in Formula (s1), $Z^{11}$ represents O, S, or $NR^{Z1}$, $R^{Z1}$ represents a hydrogen atom, an alkyl group, or an acyl group, $R^{11}$ to $R^{18}$ each independently represent a hydrogen atom or a substituent, two adjacent to each other among $R^{11}$ to $R^{14}$ may be linked to each other to form an aliphatic ring or an aromatic ring, and $R^{15}$ or $R^{16}$ and $R^{17}$ or $R^{18}$ may be linked to each other to form an aliphatic ring,
in Formula (s2), $Z^{12}$ represents O, S, or $NR^{Z2}$, $R^{Z2}$ represents a hydrogen atom, an alkyl group, or an acyl group, $R^{21}$ to $R^{26}$ each independently represent a hydrogen atom or a substituent, and two adjacent to each other among $R^{21}$ to $R^{24}$ may be linked to each other to form an aliphatic ring or an aromatic ring.

**2.** The photocurable composition according to claim 1, wherein the particles are inorganic particles.

**3.** The photocurable composition according to claim 1 or 2, wherein the resin A includes at least one selected from

a resin A1 including a repeating unit represented by Formula (a1-1) and a repeating unit represented by Formula (a2-1), or
a resin A2 including a repeating unit represented by Formula (a1-2) and a repeating unit represented by Formula (a2-2),

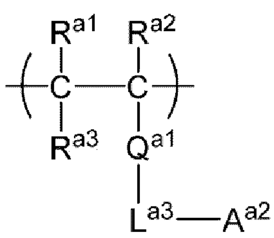

(a1-1)

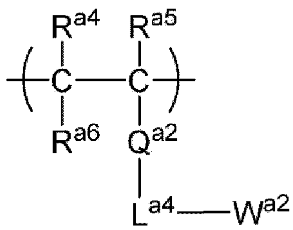

(a2-1)

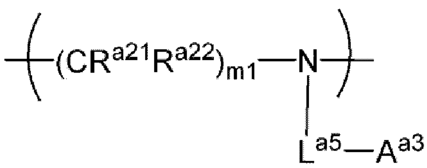

(a1-2)

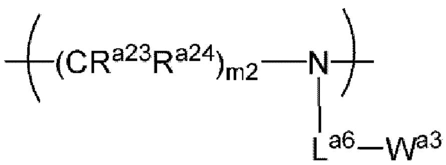

(a2-2)

in Formula (a1-1), $R^{a1}$ to $R^{a3}$ each independently represent a hydrogen atom or an alkyl group, $Q^{a1}$ represents -CO-, -COO-, -OCO-, -CONH-, or a phenylene group, $L^{a3}$ represents a single bond or a divalent linking group, and $A^{a2}$ represents an acid group,

in Formula (a2-1), $R^{a4}$ to $R^{a6}$ each independently represent a hydrogen atom or an alkyl group, $Q^{a2}$ represents -CO-, -COO-, -OCO-, -CONH-, or a phenylene group, $L^{a4}$ represents a single bond or a divalent linking group, and $W^{a2}$ represents a graft chain including a repeating unit of a polyester structure or a polyether structure,
in Formula (a1-2), $R^{a21}$ and $R^{a22}$ each independently represent a hydrogen atom or an alkyl group, m1 represents an integer of 1 to 5, $L^{a5}$ represents a single bond or a divalent linking group, and $A^{a3}$ represents an acid group,
in Formula (a2-2), $R^{a23}$ and $R^{a24}$ each independently represent a hydrogen atom or an alkyl group, m2 represents an integer of 1 to 5, $L^{a6}$ represents a single bond or a divalent linking group, and $W^{a3}$ represents a graft chain including a repeating unit of a polyester structure or a polyether structure.

**4.** The photocurable composition according to claim 1 or 2,
wherein the photopolymerization initiator includes at least one selected from an $\alpha$-aminoketone compound or an acylphosphine compound.

**5.** The photocurable composition according to claim 1 or 2,
wherein the resin includes a resin B that is a resin different from the resin A and has a repeating unit derived from a (meth)acrylate compound.

**6.** The photocurable composition according to claim 5,
wherein the resin B is a resin represented by Formula (b1),

$$\left[A^{b1}-Y^{b1}\right]_n Z^{b1} \left[Y^{b2}-P^{b1}\right]_m \quad \text{(b1)}$$

in Formula (b1), $Z^{b1}$ represents an (m+n)-valent linking group, $Y^{b1}$ and $Y^{b2}$ each independently represent a single bond or a linking group, $A^{b1}$ represents a group including a functional group selected from a heterocyclic group, an acid group, a group having a basic nitrogen atom, a urea group, a urethane group, a group having a coordinating oxygen atom, a hydrocarbon group having 4 or more carbon atoms, an alkoxysilyl group, an epoxy group, an isocyanate group, and a hydroxy group, $P^{b1}$ represents a polymer chain including a repeating unit derived from a (meth)acrylate compound, n represents 1 to 20, m represents 2 to 20, m+n represents 3 to 21, n number of $Y^{b1}$'s and n number of $A^{b1}$'s may be the same or different from each other, and m number of $Y^{b2}$'s and m number of $P^{b1}$'s may be the same or different from each other.

**7.** The photocurable composition according to claim 5,
wherein the resin A is a binder, and the resin B is a dispersant of the particles.

**8.** The photocurable composition according to claim 1 or 2,
wherein, in a case where a film having a thickness of 4 $\mu$m is formed by heating the photocurable composition at 200°C for 5 minutes, a phase-separated structure of a first phase containing the particles and a second phase having a lower content of the particles than a content of the particles of the first phase is formed in the film.

**9.** The photocurable composition according to claim 8,
wherein the phase-separated structure is a sea-island structure or a co-continuous phase structure.

**10.** The photocurable composition according to claim 1 or 2,
wherein, in a case where a film having a thickness of 4 $\mu$m is formed by heating the photocurable composition at 200°C for 5 minutes, a maximum value of a transmittance of the film to light in a wavelength range of 400 to 1000 nm is 80% or less.

**11.** A film formed of the photocurable composition according to claim 1 or 2.

**12.** An optical sensor comprising:
the film according to claim 11.

**13.** A method for manufacturing an optical sensor, comprising:

a step of forming a composition layer by applying the photocurable composition according to claim 1 or 2 onto a support; and
a step of exposing the composition layer.

FIG. 1

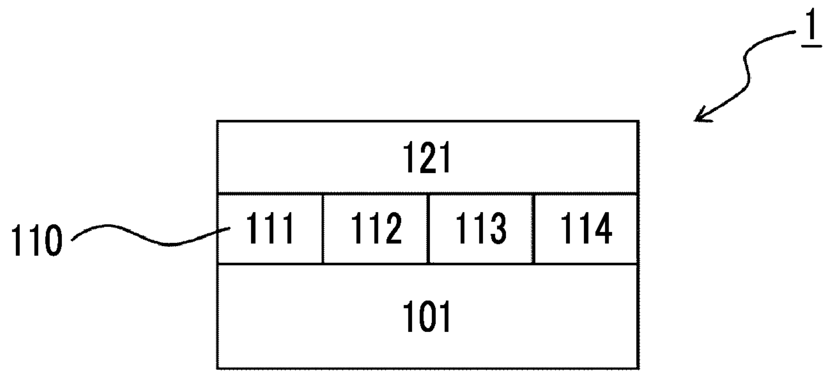


FIG. 2

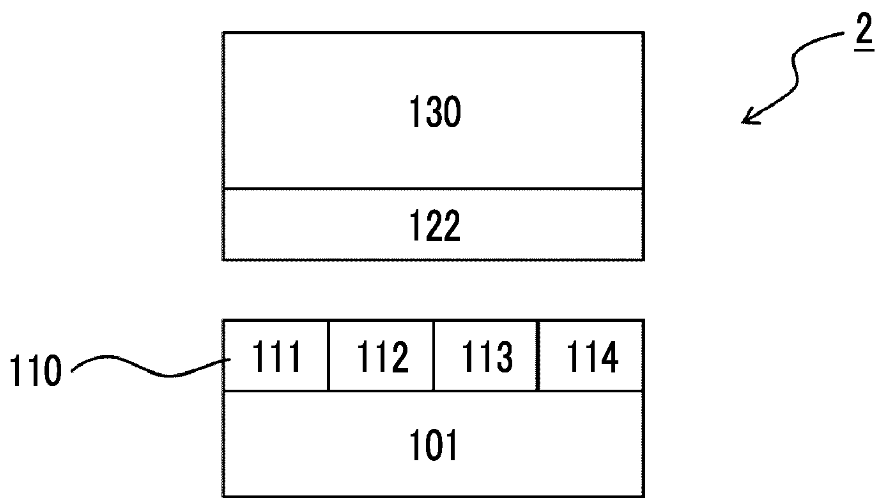

**INTERNATIONAL SEARCH REPORT**

International application No. **PCT/JP2023/031066**

**A. CLASSIFICATION OF SUBJECT MATTER**

***C08F 2/50***(2006.01)i; ***C08F 2/44***(2006.01)i; ***C08F 265/00***(2006.01)i; ***C08F 289/00***(2006.01)i; ***C08L 51/00***(2006.01)i; ***G02B 1/04***(2006.01)i

FI: C08F2/50; C08F2/44 A; C08F2/44 C; C08F265/00; C08F289/00; C08L51/00; G02B1/04

According to International Patent Classification (IPC) or to both national classification and IPC

**B. FIELDS SEARCHED**

Minimum documentation searched (classification system followed by classification symbols)

C08F2/50; C08F2/44; C08F265/00; C08F289/00; C08L51/00; G02B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2011/062198 A1 (FUJIFILM CORP.) 26 May 2011 (2011-05-26) entire text | 1-13 |
| A | JP 2010-26094 A (FUJIFILM CORP.) 04 February 2010 (2010-02-04) entire text | 1-13 |
| A | JP 2010-116485 A (FUJIFILM CORP.) 27 May 2010 (2010-05-27) entire text | 1-13 |
| A | WO 2014/034813 A1 (FUJIFILM CORP.) 06 March 2014 (2014-03-06) entire text | 1-13 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 October 2023** | **14 November 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/031066**

| Patent document cited in search report | Publication date (day/month/year) | Patent family member(s) | Publication date (day/month/year) |
|---|---|---|---|
| WO 2011/062198 A1 | 26 May 2011 | US 2012/0257283 A1<br>whole document<br>EP 2502963 A1<br>KR 10-2013-0053383 A<br>TW 201125880 A | |
| JP 2010-26094 A | 04 February 2010 | (Family: none) | |
| JP 2010-116485 A | 27 May 2010 | (Family: none) | |
| WO 2014/034813 A1 | 06 March 2014 | US 2015/0166780 A1<br>whole document<br>EP 2891687 A1<br>KR 10-2015-0038368 A<br>CN 104640932 A<br>TW 201420619 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016161859 A
- JP 2015067794 A
- JP 2010168539 A
- JP 2012137564 A
- JP 2017194662 A
- JP 2014177613 A
- JP 2007269779 A
- JP 2014130173 A
- JP 6301489 B
- WO 2018221177 A
- WO 2018110179 A
- JP 2019043864 A
- JP 2019044030 A
- JP 2019167313 A
- JP 2020055992 A
- JP 2013190459 A
- JP 2020172619 A
- WO 2020152120 A
- JP 2021181406 A
- JP 2022013379 A
- JP 2022015747 A
- JP 2021507058 A
- JP 2010026094 A
- WO 2022085485 A
- JP 5430746 B
- JP 5647738 B
- JP 2021173858 A
- JP 2021170089 A
- JP 2012014052 A
- WO 2015166779 A
- JP 2011252065 A
- WO 2017159910 A
- JP 2015034961 A
- JP 2009217221 A
- JP 2012208374 A
- JP 2013068814 A
- JP 2016162946 A
- WO 2021132247 A
- JP 6268967 B
- WO 2016181987 A
- WO 2020137819 A
- WO 2017159190 A
- JP 2015157893 A
- JP 2015194521 A
- JP 2012046629 A
- JP 2019061199 A
- JP 2021032975 A
- JP 2019032434 A
- JP 2018018077 A
- JP 2016139112 A
- US 20210063745 A
- CN 112394509 B
- US 10921499 B
- KR 1020180061467 A
- JP 2018101034 A
- JP 2020101671 A
- TW 202028805 A
- JP 2009145395 A
- JP 2003262716 A
- JP 2003185831 A
- JP 2003261827 A
- JP 2012126830 A
- JP 2006169325 A
- KR 1020170122130 A
- WO 2016091757 A


### Non-patent literature cited in the description


- **MANABU KIYONO**. Titanium Oxide - Physical Properties and Applied Technology. Gihodo Shuppan Co., 25 June 1991, 13-45
- *MATERIAL STAGE*, 2019, vol. 19 (3), 37-60
- The Chemical Daily. Miyoshi Oil & Fat Co., 01 February 2016
- Dispersion Technology Comprehension. Johokiko Co., 15 July 2005
- Actual comprehensive data collection on dispersion technology and industrial application centered on suspension (solid/liquid dispersion system). Publication Department, Management Development Center, 10 October 1978
- Extension of Use of Ink Jet - Infinite Possibilities in Patent. S.B.Research Co., February 2005, 115-133